# FASCICULE DE BREVET EUROPEEN

(11) **EP 4 469 791 B1**
(45) Date de publication et mention de la délivrance du brevet: **04.11.2026**
(21) Numéro de dépôt: 23706409.2
(22) Date de dépôt: 27.01.2023
(51) Int. Cl.: G01N 21/90, G01L 1/24, G01M 5/00, G01N 21/88

(54) **PROCEDES ET SYSTEMES OPTO-INFORMATIQUES D'INSPECTION EN LUMIÈRE TRAVERSANTE D'UN RÉCIPIENT EN VERRE**
OPTISCHE BERECHNUNGSVERFAHREN UND SYSTEME ZUR INSPEKTION EINES GLASBEHÄLTERS IN DURCHLICHT
OPTICAL COMPUTING METHODS AND SYSTEMS FOR INSPECTING A GLASS CONTAINER IN TRANSMITTED LIGHT

(30) Priorité: 28.01.2022 FR 2200767
(43) Date de publication de la demande: 04.12.2024
(73) Titulaire: TIAMA, 69230 Saint-Genis-Laval (FR)
(72) Inventeur: COLLE, Olivier, 69600 OULLINS (FR); DRUETTO, Raphaël, 69600 OULLINS (FR)
(74) Mandataire: Cabinet Beau de Loménie
(86) Numéro de dépôt international: PCT/FR2023/050113
(87) Numéro de publication internationale: WO 2023/144494

(56) Documents cités:
- DE-A1- 102014 220 598
- DE-A1- 102019 208 299
- FR-A1- 3 082 307
- JP-A- 2016 099 227
- US-A1- 2005 013 473

## Description

### Domaine Technique

L'invention concerne des procédés et systèmes opto-informatiques d'inspection en lumière traversante d'un récipient en verre à l'aide d'une caméra numérique, notamment en vue de détecter informatiquement la présence, dans le verre constitutif du récipient, d'éventuels défauts, en vue de pouvoir identifier un caractère rédhibitoire ou pas de tels défauts.

### Technique antérieure

Il existe une grande quantité de procédés opto-informatiques d'inspection d'un récipient en verre pour y détecter des défauts, faisant appel à une ou plusieurs caméras numériques, dans lesquels la détection et l'éventuelle identification ou classification des défauts est réalisée par analyse informatique d'une ou plusieurs images numériques acquises par ces caméras. Certains procédés acquièrent une image numérique en lumière réfléchie sur le récipient. D'autres procédés, comme ceux envisagés dans l'invention, travaillent en lumière traversante, la source lumineuse étant dans ce cas dans le champ de vision de la caméra numérique utilisée.

On peut classer les défauts d'un récipient en verre en fonction de leur interaction spécifique ou privilégiée avec la lumière d'inspection. Certains défauts peuvent avoir plusieurs interactions selon les caractéristiques de la lumière utilisée, sa direction, les formes et dimensions de la source, les conditions d'observation etc... Autrement dit, certains défauts peuvent être détectés avec des procédés d'inspection de natures différentes. Mieux, certains défauts peuvent être mieux détectés et mieux catégorisés en les détectant avec des procédés d'inspection différents, mettant en exergue telle ou telle interaction du défaut avec la lumière d'inspection.

Certains défauts ont un caractère absorbant, totalement ou partiellement absorbants. Ces défauts apparaissent ainsi opaques ou sombres lorsqu'ils sont vus en transmission. C'est-à-dire que la lumière traversant une paroi de verre sans défaut subit une absorption dite normale correspondant à la teinte et à l'épaisseur supposées homogènes de la paroi de verre. Mais les défauts absorbants présentent une anomalie locale avec une absorption parfois inférieure (bulle ou mince) mais généralement supérieure à l'absorption normale. Dans la suite on désignera par absorption uniquement l'absorption anormale des défauts absorbants. De tels défauts incluent notamment des inclusions dans le verre, notamment de céramique ou de métaux, et/ou des salissures (graisse, ...) sur le verre. Mais de tels défauts incluent aussi certaines glaçures (fissures) qui seraient orientées dans le verre de manière à bloquer la lumière d'inspection, principalement par le fait que la lumière d'inspection est alors réfléchie dans une direction qui n'est pas vue par la caméra.

Certains défauts ont un caractère réfléchissant. C'est le cas des glaçures habituelles, mais aussi de certains défauts de la surface de bague, des écaillés, ou des inclusions métalliques vues sous certains angles.

Certains défauts ont un caractère réfractant. Ce caractère est lié principalement à l'interaction avec la lumière traversant une ou deux parois du récipient. Une paroi présente 2 surfaces opposées de chaque d'une épaisseur du matériau de verre. Chaque surface est une interface air/verre ou verre/air donc un dioptre qui réfracte la lumière le traversant. En l'absence de défaut, les surfaces des parois sont sensiblement parallèles et la réfraction ne provoque pas de déviation visible des rayons lumineux traversant le récipient. Un défaut dit réfractant est un défaut qui provoque localement une réfraction anormale, principalement lorsque que le défaut se manifeste par des écarts de pente entre des surfaces ou dioptres de la ou des parois. Dans la suite on parlera donc de défaut de réfraction uniquement pour designer des déviations de la lumière par la réfraction particulière au niveau des défauts dits réfractants. Les défauts réfractants sont les défauts qui sont principalement détectables par les anomalies de réfraction qu'ils engendrent, notamment dans une inspection en lumière traversante. Typiquement, on classe généralement parmi les défauts réfractants les défauts de surface (plis, rivières,) ou de répartition de verre (bouillons, minces, anneau de compression), les trapèzes et les ailettes.

Certains défauts ont un caractère diffusant, notamment les défauts de type salissures, rayures, etc.... On note que le caractère diffusant est souvent combiné avec un caractère absorbant ou réfractant.

Certains défauts ont un caractère biréfringent. Ainsi, certains défauts se traduisent par la présence de contraintes mécaniques résiduelles dans le matériau (parfois appelées contraintes mécaniques internes ou, notamment en langue anglaise, « stress »). Il est connu que de tels défauts peuvent être détectés, en déterminant la modification de l'état de polarisation de la lumière après que celle-ci a traversé le matériau du récipient et a traversé d'éventuels défauts de stress de celui-ci. Pour mettre en œuvre de tels procédés, on dispose aujourd'hui de caméras polarimétriques.

Ainsi, en fonction de la nature des défauts que l'on veut être en mesure de détecter dans un récipient donné, on peut être amené à mettre en œuvre des procédés d'inspection différents. Même en considérant des procédés d'inspection qui opèrent en lumière traversante, on peut être amené à devoir mettre en œuvre des dispositifs d'illuminations différents, qui fournissent une lumière d'inspection ayant des propriétés de lumière différentes. De même, pour analyser cette lumière, on peut devoir mettre en œuvre des caméras numériques différentes, éventuellement avec interposition d'analyseur de polarisation ayant des propriétés d'analyse de polarisation adaptées au procédé considéré.

Pour être capable de détecter des défauts différents, ayant des caractères différents, on peut donc être amené à mettre en œuvre des systèmes complexes.

On connait notamment des procédés et systèmes dans lesquels les éventuels défauts réfractants sont détectés informatiquement à partir d'une série de plusieurs images numériques d'intensité acquises par une caméra, dans lesquelles on analyse les anomalies dans l'image résultant de la réfraction totale ou partielle, par le défaut, de la lumière incidente projetée par la source lumineuse. Les images numériques utilisées pour une telle analyse sont donc des images numériques d'intensité dont chacun des pixels présente une valeur proportionnelle à l'intensité lumineuse émergeant d'un point du récipient correspondant optiquement à ce pixel dans le système optique de la caméra.

Le document US4606634 décrit un type de détection de défauts réfractants qui consiste à modifier le « spectre angulaire » d'une source étendue. US4610542 décrit un procédé mettant en œuvre une source diffuse présentant un gradient d'intensité de manière que l'intensité observée est proportionnelle à la pente des défauts réfractants.

D'autres procédés d'inspection adaptés pour la détection de défauts réfractants mettent en œuvre des dispositifs d'illumination qui fournissent une lumière qui est parfois dite « structurée », c'est-à-dire disposant d'un surface émettrice, généralement bidimensionnelle, qui présente des variations d'intensité.

Ainsi, le document US4487322 décrit un procédé dans lequel une source de lumière présente une variation (donc un gradient) de niveau de gris (donc d'intensité) en forme de rampe. La traversée de la paroi du récipient dévie la lumière et, en présence d'un défaut réfractant, donc il y a une déformation de la rampe au niveau du défaut.

D'autres documents décrivent des méthodes mettant en œuvre des sources de lumière elles aussi dites « structurées », mais dans lesquelles la variation d'intensité de la lumière varie de manière périodique, avec plusieurs périodes de variation lorsqu'on parcourt la zone utile d'inspection qui est vue par la caméra numérique en arrière-plan de la zone inspectée du récipient. EP0344617 et EP1006350 décrivent des procédés qui consistent à observer en transmission les déformations d'un motif de rayures ou de formes dans un motif binaire, c'est-à-dire des rayures ou formes soit « blanches », d'intensité lumineuse ayant une valeur maximale, soit « noires », d'intensité lumineuse ayant une valeur minimale. Le document EP2082216 décrit un système permettant, avec une même camera, d'acquérir une première image avec une surface émettrice uniforme, qui permet une analyse d'aspect, et une deuxième image avec une surface émettrice à motif de mire contrastée. Ces méthodes mettant en œuvre des mires périodiques binaires posent comme problème que, en fonction de la position d'un défaut du récipient par rapport au motif de la mire qui est en arrière-plan (vu de la caméra d'acquisition), le défaut est plus ou moins bien détecté. En particulier, les défauts réfractants situés à proximité d'une transition entre deux formes ou rayures contractées sont mal détectés. Ce défaut est en partie résolu par le procédé du document EP2558847 dans lequel deux images sont faites avec 2 mires de couleurs différentes, en opposition de phase, et à rapport cyclique différent de 1, de telle sorte que tout défaut réfractant se trouve contrasté et éloigné de toute transition de mire dans au moins une des deux images.

Les documents FR2794241 et FR2794242 décrivent un procédé mettant en œuvre une source lumineuse qui présente une intensité à variation continue cyclique dans l'espace entre les extrêmes du sombre et du clair. Dans ce cas la variation augmente le contraste des défauts réfractants, mais néanmoins la mire elle-même ne se détecte pas. Cette méthode ne détecte que les défauts réfractants forts.

Les documents EP3552001 et EP3679356 proposent d'utiliser une source de lumière composée de zones émettant des couleurs différentes, et de capturer des images couleurs. Les défauts réfractants se présentent dans l'image comme des « artefacts » n'ayant pas la même couleur que leur voisinage. La réfraction des défauts réfractants est révélée par la couleur tandis que l'absorption des défauts absorbants reste révélée par les baisses d'intensité. L'inconvénient de cette méthode est qu'elle ne s'applique pas lorsque le verre est teinté et bloque la transmission de certaines couleurs. De plus, comme dans les documents précédents, la position des défauts par rapport aux transitions de couleur de l'arrière-plan modifie la sensibilité de détection.

Les documents EP1980843 et FR2958040 décrivent chacun un procédé d'inspection en réflexion, appelé déflectométrie et mettant en œuvre un éclairage qui présente, en arrière-plan de l'objet à inspecter, un motif lumineux ayant une variation d'intensité qui varie selon une loi de variation sinusoïdale. Le procédé prévoit de recueillir N images de l'objet en décalant le motif de π/N à chaque fois, et à partir des N images ainsi recueillies, de calculer en chaque point éclairé sa phase qui représente la position (modulo π) dans la sinusoïde du point source qui l'éclaire. En attribuant une valeur de phase à chaque point de l'objet éclairé, si la valeur de phase calculée est décalée par rapport à celle qui serait attendu en l'absence de défaut c'est qu'un défaut dévie la lumière. Un principe similaire de déflectométrie, cette fois-ci en réflexion, applicable pour des objets opaques, est décrit dans le document « Une autre manière de "voir" les défauts de surface », Marie-Line Zani, MESURES 733 - MARS 2001. La méthode du document EP1980843 consiste à réaliser une image de phase des lentilles et de la comparer à des images de phase de référence.

Le document EP2875339 présente une méthode de déflectométrie en transmission pour des bouteilles en défilement. On note que le défilement des objets à inspecter pose, lorsque plusieurs images doivent être acquises, le problème de la nécessité de pouvoir superposer les images pixel à pixel. En effet, outre le simple déplacement du au défilement, lequel peut généralement être connu, on ne peut pas exclure des phénomènes de vibration, qui eux ne peuvent pas être connus directement. En l'absence d'un caractère parfaitement superposable des images, on introduit des imprécisions de détection.

Le document US2005013473A1 divulgue l'inspection de bouteilles en lumière traversante au moyen d'une caméra et d'une matrice de LED. Le document enseigne un motif triangulaire périodique, mais ce motif concerne uniquement l'intensité lumineuse.

Le document WO2020/212014 décrit un dispositif d'inspection par transmission pour l'inspection des parois latérales de récipients transportés par un convoyeur. Le dispositif comprend un dispositif d'éclairage avec une source de lumière et un polariseur en aval, et comprend une caméra polarimétrique ou un système de 4 caméras ayant chacune un analyseur de polarisation avec un axe de polarisation orientés selon 4 directions, pour détecter simultanément au moins quatre directions de polarisation linéaire différentes.

Le document WO2020/244815 décrit un procédé pour l'inspection optique de récipients, dans lequel les récipients sont transportés vers une unité d'inspection avec une unité d'éclairage et avec une caméra, dans lequel l'unité d'éclairage émet de la lumière à partir d'une surface d'émission de lumière qui est codée localement sur la base d'une propriété de polarisation, d'une propriété d'intensité et/ou d'une propriété de phase. Par propriété de polarisation, il est entendu dans WO2020/244815 que la lumière qui est émise à partir des différents points d'émission de la surface d'émission est émise avec des directions de polarisation différentes dans chaque cas. Par propriété de polarisation, il est aussi entendu dans WO2020/244815 une propriété de polarisation linéaire, elliptique et/ou circulaire. Par exemple, un filtre de polarisation avec une courbe de polarisation changeant continuellement ou plusieurs filtres de polarisation avec des orientations différentes peuvent être disposés dans la zone de la surface d'émission de la lumière. Le document indique que la caméra peut comprendre un capteur de type Sony IMX250MZR.

Un objet de l'invention est de proposer des procédés et systèmes qui permettent de détecter des défauts réfractants en tous les points d'une zone inspectée avec une sensibilité homogène sur toute la zone inspectée, et avec une sensibilité élevée.

### Exposé de l'invention

L'invention propose donc un procédé opto-informatique d'inspection en lumière traversante d'un récipient en verre en déplacement selon une trajectoire de déplacement, selon la revendication 1, dans lequel :
- le procédé comporte l'illumination du récipient par un dispositif d'illumination comprenant au moins une surface émettrice, bidimensionnelle, qui est agencée sur un côté de la trajectoire de déplacement et qui est constituée de zones émettrices élémentaires émettant chacune une lumière émise polarisée ayant une propriété de polarisation d'intérêt émise qui varie suivant une loi de variation périodique en fonction de la position de la zone émettrice élémentaire dans la surface émettrice ;
- le procédé comporte l'observation du récipient, par au moins une caméra numérique ayant un capteur photoélectrique bidimensionnel comprenant des éléments photoélectriques qui comprennent chacun une cellule photoélectrique correspondant à un pixel dans une image acquise par la caméra numérique, l'au moins une caméra numérique étant située, par rapport à la trajectoire de déplacement, du côté opposé à celui du dispositif d'illumination, de manière à recueillir, par l'au moins une caméra numérique, une lumière émergente émanant du récipient et ayant traversé au moins une épaisseur de paroi du récipient ;
- le procédé comporte l'acquisition, avec l'au moins une caméra, d'images numériques partielles, contenant chacune une image d'une même zone inspectée du récipient, chaque image numérique partielle ayant N pixels partiels dont chacun est l'image d'une zone élémentaire correspondante du récipient, et chaque image numérique partielle étant acquise avec interposition, entre le récipient et les cellules photoélectriques de l'au moins une caméra, d'un analyseur linéaire présentant un axe de polarisation donné pour une image numérique partielle ;
- l'acquisition comporte l'acquisition d'au moins une série comprenant au moins une première image numérique partielle et une deuxième image numérique partielle, pour lesquelles les axes de polarisation des analyseurs linéaires sont distincts entre eux, les images numériques partielles d'une même série étant superposables de telle sorte que chaque zone élémentaire de la zone inspectée du récipient est imagée par un pixel partiel correspondant dans chacune des images numériques partielles de la série;
- pour une série primaire, les images numériques partielles de la série primaire contiennent chacune, en arrière-plan, l'image d'une même portion d'inspection primaire de la surface émettrice, la portion d'inspection primaire étant observée à travers le récipient par la caméra numérique, et, sur la portion d'inspection primaire de la surface émettrice, la loi de variation périodique de la propriété de polarisation d'intérêt émise présentant, selon une direction primaire, une variation périodique primaire, et présentant plusieurs périodes primaires sur l'étendue de la portion d'inspection primaire selon la direction primaire.

Le procédé est caractérisé en ce que, sur une période primaire, la propriété de polarisation d'intérêt émise des lumières émises par les zones émettrices élémentaires de la portion d'inspection primaire de la surface émettrice suit une variation triangulaire en fonction de la position de la zone émettrice élémentaire selon la direction primaire), et en ce que le procédé comporte le calcul informatique d'au moins une image primaire brute de réfraction, à partir des images numériques partielles de la série primaire, en calculant, pour chacune des zones élémentaires d'une zone inspectée du récipient, un pixel primaire brut de réfraction dont la valeur est représentative de la réfraction subie par la lumière ayant traversé au moins une épaisseur de paroi du récipient et émergeant de la zone élémentaire, à partir de la valeur des pixels partiels correspondants qui sont l'image de la zone élémentaire dans les images numériques partielles de la série primaire. Autrement dit, un pixel primaire brut de réfraction est fonction de la réfraction des défauts, et mesure la réfraction des défauts.

D'autres caractéristiques optionnelles d'un tel procédé, prises seules ou en combinaison, sont décrites ci-après.

Dans certains cas, pour la même zone inspectée du même récipient, le procédé comporte l'acquisition, pour la série primaire, d'une troisième image numérique partielle et d'une quatrième image numérique partielle pour lesquelles les axes de polarisation des analyseurs linéaires sont distincts entre eux et distincts des axes de polarisation des analyseurs linéaires pour la première image numérique partielle et la deuxième image numérique partielle de la série primaire, de préférence orthogonaux entre eux et décalés de 45 degrés d'angle des axes de polarisation des analyseurs linéaires pour la première image numérique partielle et la deuxième image numérique partielle de la série primaire.

Dans certains cas :
- pour la même zone inspectée du même récipient, l'acquisition comporte l'acquisition d'au moins une série secondaire d'images numériques partielles ;
- pour la série secondaire, les images numériques partielles contiennent chacune, en arrière-plan, l'image d'une même portion d'inspection secondaire de la surface émettrice, la portion d'inspection secondaire étant observée à travers le récipient par la caméra numérique, et, sur la portion d'inspection secondaire de la surface émettrice, la loi de variation périodique de la propriété de polarisation d'intérêt émise présentant, selon une direction secondaire de la surface émettrice, différente de la direction primaire, une variation périodique secondaire, et présentant plusieurs périodes secondaires sur l'étendue de la portion d'inspection secondaire selon la direction secondaire ;
- sur une période secondaire, la propriété de polarisation d'intérêt émise des lumières émises par les zones émettrices élémentaires de la portion d'inspection secondaire de la surface émettrice suit une variation triangulaire en fonction de la position de la zone émettrice élémentaire selon la direction secondaire ;
   et,
- le procédé comporte le calcul informatique d'au moins une image secondaire brute de réfraction, à partir des images numériques partielles de la série secondaire, en calculant, pour chacune des zones élémentaires d'une zone inspectée du récipient, un pixel secondaire brut de réfraction dont la valeur est représentative de la réfraction subie par la lumière ayant traversé au moins une épaisseur de paroi du récipient et émergeant de la zone élémentaire, à partir de la valeur des pixels partiels correspondants qui sont l'image de la zone élémentaire dans les images numériques partielles de la série secondaire.

Dans certains cas, les images numériques partielles d'une même série sont acquises au même instant.

Dans certains cas, le procédé comprend le calcul, à partir d'au moins deux images numériques partielles, d'une image d'intensité It dans laquelle la valeur de chaque pixel d'intensité est calculée comme une valeur moyennée de la valeur d'au moins deux pixels partiels correspondants à la même zone élémentaire.

Dans certains cas, le procédé comprend l'acquisition d'au moins une image maitresse complémentaire de sorte à calculer une image de stress de la zone inspectée et/ou une image d'intensité pour la zone inspectée.

Dans certains cas, une image de stress une image de stress est obtenue, en calculant informatiquement, pour les zones élémentaires de la zone inspectée du récipient, un pixel de déphasage correspondant à chaque zone élémentaire de la zone inspectée du récipient et dont la valeur est représentative d'un déphasage de polarisation, induit, par une contrainte mécanique résiduelle située dans la zone élémentaire du récipient correspondant à un pixel composite, dans la lumière émergente émanant de cette zone élémentaire du récipient.

Dans certains cas :
- l'au moins une caméra numérique est une caméra numérique polarimétrique, ayant un capteur photoélectrique bidimensionnel comprenant des éléments photoélectriques qui comprennent chacun une cellule photoélectrique devant laquelle est agencé un analyseur linéaire individuel associé à la cellule photoélectrique de cet élément photoélectrique, le capteur photoélectrique comportant un nombre N de groupes distincts de 4 éléments photoélectriques contigus dont les analyseurs linéaires individuels ont chacun un axe de polarisation, les quatre axes de polarisation d'un groupe donné de 4 éléments photoélectriques formant deux paires d'axes de polarisation orthogonaux, les deux paires étant décalées l'une de l'autre de 45 degrés d'angle ;
   et
- l'acquisition des 4 images numériques partielles d'une même série est effectuée, avec le capteur photoélectrique de la caméra polarimétrique, par l'acquisition d'une image numérique maîtresse contenant une image du récipient, l'image numérique maîtresse ayant un nombre 4*N de pixels maîtres regroupés en N pixels composites correspondant chacun à un groupe d'éléments photoélectriques contigus, chaque pixel composite ayant 4 pixels maitres correspondant chacun à un des éléments du groupe d'éléments photoélectriques contigus correspondant à ce pixel composite, et chaque image numérique maîtresse comprenant les 4 images numériques partielles distinctes ayant chacune N pixels partiels, les pixels partiels de chacune des images numériques partielles correspondant, pour une image numérique partielle donnée, aux éléments photoélectriques du capteur photoélectrique dont les analyseurs linéaires individuels présentent un axe de polarisation commun pour cette image numérique partielle.

Dans certains cas, pour une même zone inspectée d'un même récipient, la série primaire d'images numériques partielles et la série secondaire d'images numériques partielles sont acquises à des instants différents.

Dans certains cas, pour une même zone inspectée d'un même récipient, la série primaire d'images numériques partielles et la série secondaire d'images numériques partielles sont acquises avec la même au moins une caméra numérique.

Dans certains cas, la portion d'inspection primaire et la portion d'inspection secondaire correspondent à deux états de polarisation différents, à des instants différents, d'une même portion d'inspection de la surface émettrice.

Dans certains cas :
- la variation triangulaire est telle que chaque période primaire est divisée en uniquement deux parties, une partie croissante et une partie décroissante,
- dans la partie croissante, la propriété de polarisation d'intérêt émise est une fonction linéaire croissante de la position de la zone émettrice élémentaire selon la direction primaire, la propriété de polarisation d'intérêt émise croissant d'une valeur inférieure primaire à une valeur supérieure primaire,
- et, dans la partie décroissante, la propriété de polarisation d'intérêt émise est une fonction linéaire décroissante de la position de la zone émettrice élémentaire selon la direction primaire, la propriété de polarisation d'intérêt émise décroissant de la valeur supérieure primaire à la valeur inférieure primaire.

Dans certains cas, la partie croissante et la partie décroissante de chaque période primaire sont d'égale étendue selon la direction primaire.

Dans certains cas, la portion d'inspection de la surface émettrice est constituée de zones émettrices élémentaires émettant chacune une lumière émise polarisée elliptiquement ayant un rapport d'ellipticité inférieur ou égal à 0,7, et la propriété de polarisation d'intérêt émise de la lumière émise par une zone émettrice élémentaire est l'orientation de l'axe principal de polarisation de la lumière émise par ladite zone émettrice élémentaire.

Dans certains cas, la valeur inférieure, respectivement supérieure, de la propriété de polarisation d'intérêt émise est une valeur angulaire inférieure sur une période, respectivement supérieure sur une période, de l'orientation de l'axe principal de polarisation de la lumière émise par les zones émettrices élémentaires, l'écart angulaire entre la valeur angulaire supérieure et la valeur angulaire inférieure étant d'au moins 45 degrés d'angle, de préférence d'au moins 70 degrés d'angle.

Dans certains cas, la portion d'inspection primaire de la surface émettrice est constituée de zone émettrices élémentaires émettant chacune une lumière émise polarisée selon une polarisation elliptique ayant un déphasage entre les deux composantes orthogonales du vecteur de champ électrique de la lumière émise polarisée, et la propriété de polarisation d'intérêt émise correspond au déphasage entre les deux composantes orthogonales du vecteur de champ électrique de la lumière émise polarisée.

Dans certains cas, la période primaire est vue par le capteur photoélectrique bidimensionnel avec une résolution, selon la direction primaire, d'au moins 15 pixels partiels d'une même image numérique partielle par période primaire.

Dans certains cas, la zone inspectée du récipient est vue par le capteur photoélectrique bidimensionnel avec une résolution, selon la direction primaire, d'au moins 5 pixels partiels d'une même image numérique partielle par millimètre sur le récipient.

Dans certains cas, la valeur d'un pixel brut de réfraction est calculée, pour une zone élémentaire du récipient, à partir de l'arc-tangente d'un ratio entre les valeurs de deux pixels partiels correspondants dans la première image partielle et la deuxième image partielle.

Dans certains cas, la valeur d'un pixel brut de réfraction est calculée, pour une zone élémentaire du récipient, à partir de l'arc-tangente d'un ratio entre, d'une part, la différence de valeur de deux pixels partiels correspondants dans la première image partielle et la deuxième image partielle, et, d'autre part, la différence de valeur des deux pixels partiels correspondants dans la troisième image partielle et la quatrième image partielle.

Dans certains cas, le dispositif d'illumination comporte, dans le sens de propagation de la lumière, une source bidimensionnelle primaire de lumière diffuse, un polariseur linéaire amont ayant un axe de polarisation, et une matrice bidimensionnelle de cellules à cristaux liquides.

Dans certains cas, le procédé comporte la commande de la matrice bidimensionnelle de cellules à cristaux liquides de telle sorte que la lumière polarisée issue de chacune des cellules à cristaux liquides présente une polarisation elliptique ayant, pour chaque cellule à cristaux liquides, l'orientation de l'axe principal de polarisation et/ou un déphasage entre les deux composantes orthogonales du vecteur de champ électrique de la lumière issue de la cellule à cristaux liquides, et, pour l'acquisition de la série primaire d'images numériques partielles, l'un au moins parmi l'orientation de l'axe principal de polarisation et/ou le déphasage suit une variation triangulaire en fonction de la position de la cellule à cristaux liquides selon la direction primaire.

Dans certains cas, le procédé comporte la commande de la matrice bidimensionnelle de cellules à cristaux liquides de telle sorte que, pour l'acquisition de la série secondaire d'images numériques partielles, l'un au moins parmi l'orientation de l'axe principal de polarisation et/ou le déphasage suit une variation triangulaire en fonction de la position de la cellule à cristaux liquides selon la direction secondaire.

Dans certains cas, le procédé comporte la commande de la matrice bidimensionnelle de cellules à cristaux liquides de telle sorte que, successivement, pour l'acquisition de la série primaire d'images numériques partielles d'un récipient donné, l'un au moins parmi l'orientation de l'axe principal de polarisation et/ou le déphasage suit une variation triangulaire en fonction de la position de la cellule à cristaux liquides selon la direction primaire, puis de telle sorte que, pour l'acquisition la série secondaire d'images numériques partielles, l'un au moins parmi l'orientation de l'axe principal de polarisation et/ou le déphasage suit une variation triangulaire en fonction de la position de la cellule à cristaux liquides selon la direction secondaire.

Dans certains cas, le procédé comporte une étape préalable d'étalonnage de la commande de la matrice bidimensionnelle de cellules à cristaux liquides.

Dans certains cas, le procédé comporte une étape d'analyse d'anomalies de réfraction comprenant une étape de calcul informatique sur la base de l'image brute de réfraction.

Dans certains cas, l'étape d'analyse d'anomalies de réfraction comporte une étape de détection de gradient dans l'image primaire brute de réfraction selon la direction primaire.

L'invention propose aussi un système opto-informatique d'inspection en lumière selon la revendication 12.

Le dispositif d'illumination comporte, dans le sens de propagation de la lumière, une source bidimensionnelle primaire de lumière diffuse, un polariseur linéaire amont ayant un axe de polarisation, et une matrice bidimensionnelle de cellules à cristaux liquides.

Selon l'invention revendiquée, le système comporte des moyens de commande de la matrice bidimensionnelle de cellules à cristaux liquides de telle sorte que la lumière polarisée issue de chacune des cellules à cristaux liquides présente une polarisation elliptique ayant, pour chaque cellule à cristaux liquides, une orientation de l'axe principal de polarisation et/ou un déphasage entre les deux composantes orthogonales du vecteur de champ électrique de la lumière issue de la cellule à cristaux liquides, et le dispositif d'illumination est commandé de telle sorte que l'un au moins parmi l'orientation de l'axe principal de polarisation et/ou le déphasage suit une variation en fonction de la position de la cellule à cristaux liquides selon une direction primaire de la surface émettrice.

Selon l'invention revendiquée, le dispositif d'illumination est commandé de telle sorte que l'un au moins parmi l'orientation de l'axe principal de polarisation et/ou le déphasage suit une variation triangulaire en fonction de la position de la cellule à cristaux liquides selon une direction primaire de la surface émettrice.

D'autres caractéristiques optionnelles d'un tel système, prises seules ou en combinaison, sont décrites ci-aprés.

Dans certains cas, le système comporte, dans le trajet de la lumière entre la matrice bidimensionnelle de cellules à cristaux liquides et les analyseurs linéaires pour les aux moins deux images numériques partielles, une lame à retard quart d'onde qui présente un axe rapide orienté parallèlement ou perpendiculairement à l'axe de polarisation du polariseur linéaire amont.

Dans certains cas, la lame à retard quart d'onde est agencée dans le trajet de la lumière entre la matrice bidimensionnelle de cellules à cristaux liquides et le récipient.

Dans certains cas, la lame à retard quart d'onde est agencée dans le trajet de la lumière entre le récipient et les analyseurs linéaires pour les aux moins deux images numériques partielles.

Dans certains cas, le système comporte une unité informatique de calcul programmée pour effectuer le calcul informatique d'au moins une image primaire brute de réfraction, à partir des images numériques partielles, en calculant, pour chacune des zones élémentaires d'une zone inspectée du récipient, un pixel de réfraction dont la valeur est représentative de la réfraction subie par la lumière ayant traversé au moins une épaisseur de paroi du récipient et émergeant de la zone élémentaire, à partir de la valeur des pixels partiels correspondants qui sont l'image de la zone élémentaire dans les images numériques partielles.

Dans certains cas, la caméra numérique est une caméra numérique polarimétrique.

Dans certains cas, la commande de la matrice bidimensionnelle de cellules à cristaux liquides est synchronisée avec l'acquisition, avec l'au moins une caméra, des au moins deux images numériques partielles de manière à :
- acquérir une série primaire d'au moins deux images numériques partielles lorsque la matrice bidimensionnelle de cellules à cristaux liquides est commandée de telle sorte que l'un au moins parmi l'orientation de l'axe principal de polarisation et le déphasage suit une variation triangulaire en fonction de la position de la cellule à cristaux liquides selon la direction primaire ;
- acquérir une série secondaire d'au moins deux images numériques partielles lorsque la matrice bidimensionnelle de cellules à cristaux liquides est commandée de telle sorte que l'un au moins parmi l'orientation de l'axe principal de polarisation et le déphasage suit une variation triangulaire en fonction de la position de la cellule à cristaux liquides selon une direction secondaire différente de la direction primaire.

Dans certains cas, les axes de polarisation des analyseurs linéaires pour les aux moins deux images numériques partielles sont orthogonaux entre eux.

### Brève description des dessins

[Fig. 1] La figure 1 est une vue schématique en perspective illustrant un premier type de système opto-informatique d'inspection en lumière traversante d'un récipient en verre.
[Fig. 2] La figure 2 est une vue schématique en perspective illustrant un deuxième type de système opto-informatique d'inspection en lumière traversante d'un récipient en verre.
[Fig. 3] La figure 3 est une vue schématique en perspective illustrant un troisième type de système opto-informatique d'inspection en lumière traversante d'un récipient en verre.
[Fig. 4] La figure 4 est une vue schématique de dessus illustrant un autre mode de réalisation d'un système opto-informatique d'inspection en lumière traversante d'un récipient en verre, comprenant deux caméras numériques.
[Fig. 5] La figure 5 est une vue schématique de côté illustrant encore un autre mode de réalisation d'un système opto-informatique d'inspection en lumière traversante d'un récipient en verre, optimisé plus particulièrement pour inspecter une paroi de fond du récipient.
[Fig. 6] La figure 6 est un diagramme illustrant un exemple d'une fonction périodique triangulaire.
[Fig. 7] La figure 7 est une vue schématique en perspective illustrant un principe d'un capteur pour une caméra numérique polarimétrique.
[Fig. 8] La figure 8 est un diagramme illustrant un agencement d'analyseurs linéaires de polarisation pour un capteur pour une caméra numérique polarimétrique.
[Fig. 9] La figure 9 illustre une image maîtresse acquise par une caméra numérique polarimétrique, comprenant plusieurs images partielles.
[Fig. 10] La figure 10 illustre un organigramme pour un procédé opto-informatique d'inspection en lumière traversante d'un récipient en verre.
[Fig. 11] La figure 11 est un schéma illustrant le principe de dimensionnement de certains paramètres d'un système pour un procédé opto-informatique d'inspection en lumière traversante d'un récipient en verre, selon une direction primaire.
[Fig. 12] La figure 12 est un schéma illustrant le principe de dimensionnement de certains paramètres d'un système pour un procédé opto-informatique d'inspection en lumière traversante d'un récipient en verre selon une direction secondaire.

### Description des modes de réalisation

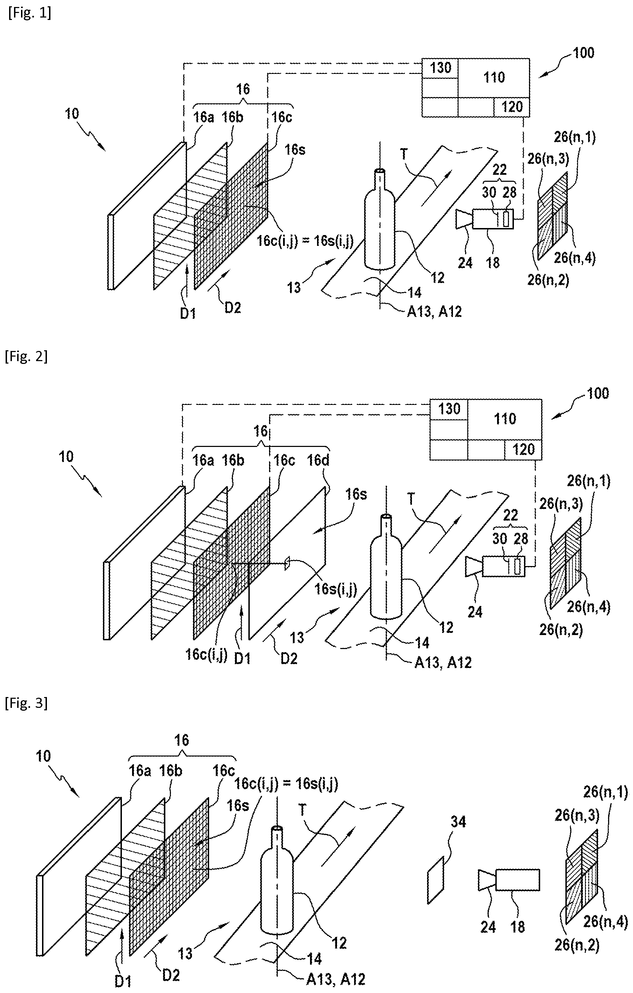

On a illustré sur les figures 1 à 5 différents systèmes 10 optiques d'inspection en lumière traversante de défauts dans un récipient 12 en verre transparent, coloré ou non, par exemple une bouteille en verre ou un pot en verre.

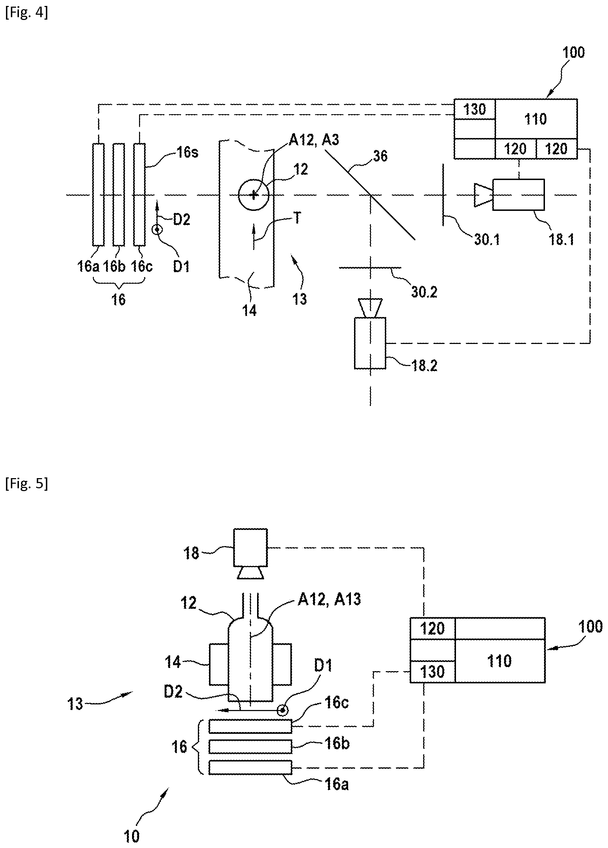

Dans chaque cas, le système 10 est conçu pour, et apte à, mettre en œuvre un procédé opto-informatique d'inspection en lumière traversante d'un récipient en verre à l'aide d'au moins une caméra numérique 12. Dans certains modes de réalisation, tels que ceux illustrés aux figures 1 à 3 ou à la figure 5, le système 10 pourra comporter une unique caméra 18, qui sera dans ce cas avantageusement une unique caméra numérique polarimétrique 18 telle que décrite plus en détail ci-dessous. Dans certains modes de ces modes de réalisation, comme celui illustré à la figure 4, le système 10 comportera un jeu de plusieurs caméras numériques, par exemple deux caméras numériques 18.1, 18.2, les deux caméras numériques 18.1, 18.2 pouvant alors être des caméras numériques conventionnelles, monochromes ou couleurs. Dans tous les cas, la ou les caméras numériques 18, 18.1, 18.2 comportent chacune un capteur photoélectrique 22 bidimensionnel ayant un réseau bidimensionnel d'éléments photoélectriques qui comprennent chacun une cellule photoélectrique. La ou les caméras numériques 18, 18.1, 18.2 permettent d'acquérir chacune au moins une image numérique d'au moins une zone du récipient au moment de son passage à l'emplacement d'inspection 13 du système 10, l'image numérique ainsi acquise étant utilisée dans le procédé d'inspection décrit plus bas.

Plus particulièrement, le système 10 est conçu pour, et apte à, mettre en œuvre un tel procédé dans une ligne industrielle de production de récipients en verre et/ou dans une ligne industrielle de transport automatisé des récipients en verre, et/ou dans une ligne industrielle automatisée de remplissage des récipients en verre. Dans de telles lignes, des récipients sont transportés, par exemple par un convoyeur 14 de la ligne, selon une trajectoire de déplacement T, selon au moins une file de récipients successifs le long de la trajectoire. La cadence de défilement des récipients dans une telle ligne peut être par exemple comprise entre 150 et 1200 récipients par minute.

Le système 10 est conçu et apte à être installé à un poste donné le long d'une telle ligne, de manière à mettre en œuvre le procédé opto-informatique d'inspection en lumière traversante successivement pour chaque récipient 12 de la file de récipients, au moment du passage du récipient 12 à l'emplacement d'inspection 13 du système 10, emplacement auquel doit être placé un récipient 12 pour être inspecté par le système 10.

Au niveau de l'emplacement d'inspection 13 du système 10, la trajectoire de circulation des récipients 12 peut être une trajectoire rectiligne, ou une trajectoire curviligne. L'emplacement d'inspection 13 peut être représenté par un axe vertical A13 fixe par rapport au système 10. Par exemple, on peut considérer que le récipient 12 est placé à l'emplacement d'inspection 13 lorsqu'un axe principal A12 du récipient 12, par exemple un axe de symétrie du récipient, ou par exemple un axe de symétrie de révolution du récipient, coïncide avec l'axe vertical A13 fixe correspondant à l'emplacement d'inspection 13. Dans les exemples illustrés aux figures 1 à 4, le système 10 est particulièrement conçu pour inspecter la paroi latérale du récipient 12. Comme illustré à la figure 5, on peut prévoir que le système 10 soit conçu pour inspecter d'autres parties du récipient 12, par exemple la paroi de fond du récipient 12.

Le système 10 comprend un dispositif d'illumination 16 délivrant, sur le récipient 12, lorsque ce dernier est au niveau de l'emplacement d'inspection 13 du système 10, une lumière incidente. En d'autres termes, le dispositif d'illumination 16 délivre la lumière incidente vers l'emplacement d'inspection 13 du système 10.

S'agissant d'un système d'inspection en lumière traversante, le dispositif d'illumination 16 comporte une source lumineuse primaire 16a qui est agencée dans le champ de vision de la ou les caméra(s) numérique(s) 18, 18.1, 18.2. Ainsi, au moment de son passage à l'emplacement d'inspection 13 du système 10, le récipient 12 à inspecter se trouve agencé, sur le trajet de la lumière incidente délivrée par le dispositif d'illumination 16, entre le dispositif d'illumination 16 et la ou les caméra(s) numérique(s) 18, 18.1, 18.2. En d'autres termes, l'emplacement d'inspection 13 du système 10 se trouve agencé entre le dispositif d'illumination 16 et la ou les caméra(s) numérique(s) 18, 18.1, 18.2 sur le trajet de la lumière incidente délivrée par le dispositif d'illumination 16. Ainsi, l'au moins une caméra numérique 18, 18.1, 18.2 est située, par rapport à la trajectoire de déplacement T, du côté opposé à celui du dispositif d'illumination 16, de manière à recueillir, par l'au moins une caméra numérique18, 18.1, 18.2, une lumière émergente émanant du récipient 12. Pour ce faire, la ou les caméras numériques 18, 18.1, 18.2 recueille(nt) la lumière incidente émise par le dispositif d'illumination, après que celle-ci a traversé la zone inspectée du récipient. La lumière recueillie par la ou les caméras numériques 18, 18.1, 18.2 a donc interagi avec au moins une épaisseur de paroi du récipient, souvent avec deux épaisseurs de parois du récipient 12. Dans cette interaction avec le récipient, la lumière recueillie par la ou les caméras numériques 18, 18.1, 18.2 a pu subir, par rapport à la lumière émise par le dispositif d'illumination, au moins de la réfraction que les systèmes et procédés décrits ci-après vont chercher à inspecter.

Dans les figures 1 à 4, on a illustré des systèmes 10 qui sont agencés pour permettre une inspection d'une paroi latérale d'un récipient tel qu'une bouteille en verre 12. Le convoyeur 14 est alors par exemple un convoyeur à tapis, sur lequel la bouteille 12 est posée par son fond. Dans de tels systèmes, la lumière recueillie par la ou les caméras numériques 18, 18.1, 18.2 en provenance de la zone inspectée du récipient a donc interagi avec deux épaisseurs de paroi du récipient 12.

Dans la figure 5, on a illustré un système 10 qui est agencé pour permettre une inspection du fond d'un récipient 12 tel qu'une bouteille en verre. Le convoyeur 14 est alors par exemple un convoyeur à bandes comprenant deux bandes latérales opposées qui s'appuient chacune sur les deux côtés opposés de la paroi latérale de la bouteille pour maintenir celle-ci. Le dispositif d'illumination 16 est agencé du côté du fond de la bouteille 12, perpendiculairement à l'axe A12 de la bouteille. La caméra numérique 18 est agencée de l'autre côté de la bouteille, orientée selon l'axe A12 de celle-ci de manière à regarder la paroi de fond de la bouteille au travers de l'ouverture supérieure de la bouteille, de manière à inspecter celle-ci en transparence. Dans un tel système, la lumière recueillie par la ou les caméras numériques 18, 18.1, 18.2 en provenance de la zone inspectée du récipient a donc interagi avec une seule épaisseur de paroi du récipient 12

Comme on le comprendra de ce qui suit, le dispositif d'illumination 16 comprend au moins une surface émettrice 16s, bidimensionnelle, qui est agencée sur un côté de la trajectoire de déplacement T et qui est tournée vers l'emplacement d'inspection 13. La surface émettrice 16s est constituée de zones émettrices élémentaires émettant chacune une lumière émise polarisée. Comme on le verra plus, bas, le dispositif d'illumination 16 est configuré de telle sorte que, pour l'acquisition d'images numériques destinées à être utilisées dans le procédé, la lumière émise par chacune des zones émettrices élémentaires a une propriété de polarisation d'intérêt émise qui varie suivant une loi de variation périodique en fonction de la position de la zone émettrice élémentaire dans la surface émettrice. La lumière incidente délivrée par le dispositif d'illumination 16 est donc une lumière polarisée.

Le dispositif d'illumination 16 comporte, dans le sens de propagation de la lumière, une source bidimensionnelle primaire 16a de lumière diffuse, un polariseur linéaire amont 16b ayant un axe de polarisation A0, et une matrice bidimensionnelle 16c de cellules à cristaux liquides 16c(i,j). La matrice bidimensionnelle 16c est une matrice commandée en ce sens que chaque cellule à cristaux liquides 16c(i,j) peut être commandée de telle sorte, pour une lumière polarisée donnée à l'entrée de la cellule, au moins une propriété de polarisation de la lumière sortant de la cellule peut être modifiée de manière variable en fonction d'une consigne de commande appliquée à la cellule à cristaux liquides 16c(i,j).

Dans certains modes de réalisation, notamment ceux des figures 1, 3, 4, et 5 la surface émettrice 16s du dispositif d'illumination 16 est constituée par la surface de la matrice bidimensionnelle 16c de cellules à cristaux liquides qui est tournée vers l'emplacement d'inspection 13.

En revanche, dans certains modes de réalisation, tel que celui illustré à la figure 2, le dispositif d'illumination 16 comporte, en plus, une lame à retard quart d'onde 16d qui présente un axe rapide orienté parallèlement ou perpendiculairement à l'axe de polarisation A0 du polariseur linéaire amont 16b. Dans l'exemple de la figure 2, la lame à retard quart d'onde 16d fait partie du dispositif d'illumination 16 et est agencée dans le trajet de la lumière entre la matrice bidimensionnelle 16c de cellules à cristaux liquides et l'emplacement d'inspection 13, donc entre la matrice bidimensionnelle 16c de cellules à cristaux liquides et le récipient 12 lorsque le récipient 12 se trouve à l'emplacement d'inspection 13. Dans un tel cas, la surface émettrice 16s du dispositif d'illumination 16 est constituée par la surface de la lame à retard quart d'onde 16d qui est tournée vers l'emplacement d'inspection 13. On notera que lorsque, comme dans l'exemple de la figure 2, la lame à retard quart d'onde 16d fait partie du dispositif d'illumination 16, la lame à retard quart d'onde 16d peut être directement accolée à la matrice bidimensionnelle 16c de cellules à cristaux liquides, quitte à former un composant unique avec la matrice bidimensionnelle 16c.

Dans les deux cas, on peut donc déterminer des zones émettrices élémentaires de la surface émettrice 16s. Dans le premier cas, chaque zone émettrice élémentaire de la surface émettrice 16s est une cellule à cristaux liquides 16c(i,j) de la matrice bidimensionnelle 16c de cellules à cristaux liquides, ou éventuellement un groupe prédéfini de cellules. Dans le deuxième cas, chaque zone émettrice élémentaire de la surface émettrice 16s est une zone élémentaire de la lame à retard quart d'onde 16d dont l'arrière-plan, lorsque vu de la caméra numérique, est une cellule à cristaux liquides 16c(i,j) de la matrice bidimensionnelle 16c de cellules à cristaux liquides, ou éventuellement un groupe prédéfini de cellules.

De manière générale, la surface émettrice 16s est la surface du dispositif d'illumination 16 qui émet la lumière incidente en direction de l'emplacement d'inspection 13, et chaque zone émettrice élémentaire de la surface émettrice 16s est une zone qui présente, à tout instant, vu de la caméra numérique 18, 18.1, 18.2, une valeur identique de la propriété de polarisation d'intérêt émise sur toute la zone émettrice élémentaire.

Eventuellement, une vitre de protection en verre transparent peut être placée devant la surface émettrice 16s, sans modifier les propriétés de polarisation de la lumière émise par le dispositif d'illumination 16. De même un filtre spectral et/ou filtre coloré peut être positionné sur le trajet de la lumière sans modifier la propriété de polarisation d'intérêt de la lumière émise par le dispositif d'illumination 16. Le système fonctionne de la même manière avec ou sans la vitre de protection et avec ou sans un filtre spectral ou filtre coloré.

De préférence, la surface émettrice 16s est plane et perpendiculaire à l'axe optique de la caméra numérique 18, 18.1, 18.2.

De préférence, la source lumineuse primaire 16a est une source lumineuse étendue. Par exemple, les dimensions de la surface éclairante de la source lumineuse primaire 16a, perpendiculairement à un axe d'incidence allant de la source lumineuse 16a vers l'emplacement d'inspection 13, sont supérieures aux dimensions correspondantes de la zone à inspecter du récipient 12. Par exemple la source lumineuse 16a peut comprendre un réseau bidimensionnel de diodes électroluminescentes et un diffuseur. Un diffuseur peut par exemple être réalisé sous la forme d'une plaque translucide et/ou dépolie. Dans un tel cas, les diodes électroluminescentes peuvent éventuellement être commandées individuellement, ou peuvent être commandées seulement par groupes, ou encore peuvent être commandées uniquement de manière globale, c'est-à-dire avec une commande unique sur toute l'étendue de la surface éclairante de la source lumineuse primaire 16a. De manière générale, la source lumineuse primaire 16a, notamment ses éventuelles diodes électroluminescentes, pourra être commandée selon au moins un ou plusieurs paramètres parmi l'intensité lumineuse, l'instant d'allumage, l'instant d'extinction, etc....Les diodes électroluminescentes sont éventuellement composées de diodes « multi-die » de différentes couleurs, choisies en fonction de la teinte du verre, et commandée pour délivrer des spectres d'émission variables monochromatiques ou polychromatiques.

De préférence, la lumière incidente présente un spectre d'énergie compris dans une bande de longueurs d'onde elle-même comprise entre 250 nm et 1000 nm, la bande de longueur d'onde ayant une largeur inférieure à 150nm, de préférence inférieure à 100 nm. De préférence donc, la source lumineuse primaire 16a délivre une lumière ayant un tel spectre d'énergie, quitte à ce qu'elle comporte un ou plusieurs filtres. Avec un tel spectre d'énergie, de faible largeur, la lumière incidente, et donc de préférence la lumière délivrée par la source lumineuse primaire 16a se rapproche d'une lumière monochromatique. Par ailleurs, si on utilise une lame à retard quart d'onde, qui n'est généralement adaptée qu'à une longueur d'onde précise ou à une bande de longueur d'onde de faible largeur autour de cette longueur d'onde précise, le retard induit n'est exactement d'un quart de la longueur d'onde que pour la valeur de longueur d'onde précise ou pour une bande de longueur d'onde de faible largeur autour de cette longueur d'onde précise. Dans certains modes de réalisation, le spectre d'énergie de la lumière incidente présente un spectre d'énergie qui sera réglable, par exemple par réglage de la source lumineuse primaire 16a ou par mise œuvre d'un ou plusieurs filtres dans le dispositif d'illumination.

On a vu que le dispositif d'illumination 16 est configuré de telle sorte que les zones émettrices élémentaires émettent chacune une lumière émise polarisée ayant une propriété de polarisation d'intérêt émise qui varie suivant une loi de variation périodique en fonction de la position de la zone émettrice élémentaire dans la surface émettrice. Dans les modes de réalisation illustrés, cette loi de variation de la propriété de polarisation d'intérêt émise est obtenue par une commande appropriée de la matrice bidimensionnelle 16c de cellules à cristaux liquides.

Une telle matrice bidimensionnelle 16c de cellules à cristaux liquides est un composant connu dans le domaine des afficheurs à cristaux liquides. De manière générale, une telle matrice bidimensionnelle 16c de cellules à cristaux liquides comporte deux plaques en verres parallèles entre lesquelles on trouve un matériau de type cristal liquide. Les deux faces internes des plaques de verre comportent chacune une matrice d'électrodes, chaque paire d'électrode en vis-à-vis déterminant une cellule à cristaux liquides 16c(i,j). Chaque paire d'électrode peut être commandée par une consigne de commande, par exemple une consigne en tension, pour générer, dans la cellule à cristaux liquides 16c(i,j) qui est déterminée par la paire d'électrodes, un champ électrique qui agit sur l'orientation des cristaux liquides dans la cellule. Suivant leur orientation dans la cellule, qui est donc déterminée dans la cellule par la commande en tension entre les deux électrodes de cette cellule, l'action des cristaux liquides sur la polarisation de la lumière qui traverse la cellule à cristaux liquides 16c(i,j) varie. Ainsi, en faisant varier la tension entre les deux électrodes associées à la cellule à cristaux liquides 16c(i,j), on fait varier l'action des cristaux liquides de la cellule sur la polarisation de la lumière qui traverse chaque cellule à cristaux liquides 16c(i,j).

On rappelle que, dans les exemples illustrés, on a prévu de disposer dans le trajet de la lumière, en amont de la matrice bidimensionnelle 16c de cellules à cristaux liquides, le polariseur linéaire amont 16b, de sorte que la lumière qui entre dans chaque cellule à cristaux liquides 16c(i,j) est une lumière polarisée linéairement selon un axe de polarisation qui est défini par le polariseur linéaire amont 16b, et dont les deux composantes orthogonales du vecteur de champ électrique sont sans déphasage initial.

L'action des cristaux liquides de la cellule sur la polarisation de la lumière qui traverse la cellule à cristaux liquides 16c(i,j) va notamment transformer cette lumière entrante en une lumière de sortie qui sera :
- dans le cas de certaines technologies de matrice bidimensionnelle de cellules à cristaux liquides, une lumière polarisée linéairement ayant un axe de polarisation qui aura subi un décalage angulaire, i.e. le résultat d'une rotation, de l'orientation θc(*i,j*) de l'axe de polarisation par rapport à l'axe de polarisation A0 défini par le polariseur linéaire amont 16b, l'orientation θc(*i,j*) de l'axe de polarisation par rapport à l'axe de polarisation A0 défini par le polariseur linéaire amont 16b étant alors variable en fonction de la commande en tension entre les deux électrodes associées à la cellule à cristaux liquides 16c(i,j) ;
- plus généralement dans le cas d'autres technologies de matrice bidimensionnelle de cellules à cristaux liquides, une lumière polarisée elliptiquement, cette polarisation pouvant être caractérisée d'une part par une orientation θc(*i,j*) d'un axe principal de l'ellipse de polarisation ci-après axe principal de polarisation, et d'autre part par un déphasage *φ*16c(*i,j*) entre les deux composantes orthogonales du vecteur de champ électrique de la lumière qui la traverse, le déphasage *φ*16c(*i,j*) étant alors variable en fonction de la commande en tension entre les deux électrodes associées à la cellule à cristaux liquides 16c(i,j).

Dans la réalité, la plupart des technologies se situeront dans le cas général dans lequel l'action des cristaux liquides de la cellule sur la polarisation de la lumière transforme cette lumière entrante en une lumière de sortie polarisée elliptiquement, caractérisée à la fois par une orientation θc(*i,j*) de l'axe principal de l'ellipse de polarisation présentant un décalage angulaire par rapport à l'axe de polarisation défini par le polariseur linéaire amont 16b qui variera en fonction de la commande en tension entre les deux électrodes associées à la cellule à cristaux liquides 16c(i,j), et d'autre part par un déphasage *φ*16c(*i,j*) qui variera aussi en fonction de la commande en tension entre les deux électrodes associées à la cellule à cristaux liquides 16c(i,j). Cependant, certaines technologies vont générer plutôt, en fonction de la commande en tension entre les deux électrodes associées à la cellule à cristaux liquides 16c(i,j), une variation comparativement plus importante du décalage angulaire de l'orientation θc(*i,j*) de l'axe principal de l'ellipse de polarisation et au contraire, en comparaison, une variation comparativement plus faible, voire suffisamment faible pour être négligeable, du déphasage *φ*16*c*(*i,j*). Il est apparu que c'est par exemple le cas de la technologie TN (« Twisted Nematics »). A contario, toujours en fonction de la commande en tension entre les deux électrodes associées à la cellule à cristaux liquides 16c(i,j), d'autres technologies vont générer plutôt une variation comparativement plus importante du déphasage *φ*16c(*i,j*), et, en comparaison, une variation comparativement plus faible, voire suffisamment faible pour être négligeable, du décalage angulaire de l'orientation θc(*i,j*) de l'axe principal de l'ellipse de polarisation. Il est apparu que c'est par exemple la cas de la technologie ECB (« Electrically Controlled Birefringence»).

On rappelle que, dans une lumière polarisée, les deux composantes vectorielles, de préférence orthogonales, du champ électrique de la lumière en un point donné, à un instant donné, définissent entièrement l'orientation du champ électrique en ce point donné et à cet instant donné. La figure décrite, au cours du temps par le champ électrique en un point donné est alors :
- pour une polarisation linéaire, un segment de droite qui définit l'orientation de l'axe de polarisation linéaire ;
- pour une polarisation elliptique, une ellipse dans laquelle on peut définir un grand axe de l'ellipse, qui sera ci-après dénommé axe principal de l'ellipse ou axe principal de polarisation, et un petit axe ;
- pour une polarisation circulaire, un cercle.

Pour une lumière polarisée elliptiquement, on peut définir le rapport d'ellipticité, ou en abrégé « ellipticité », comme le rapport entre le petit axe de l'ellipse de polarisation et le grand axe de l'ellipse de polarisation, ce dernier étant l'axe principal de polarisation.

Dans le présent texte on considèrera qu'une lumière polarisée linéairement est un cas particulier de lumière polarisée elliptiquement, avec dans ce cas particulier :
- une ellipse de polarisation aplatie réduite à un segment, pour laquelle l'axe principal de polarisation, qui est le segment formé par l'ellipse aplatie, est tout simplement l'axe de polarisation linéaire de la lumière polarisée linéairement ;
- un déphasage nul entre les deux composantes orthogonales du vecteur de champ électrique de la lumière.

Dans le présent texte on considèrera qu'une lumière polarisée circulairement est aussi un cas particulier de lumière polarisée elliptiquement, avec dans ce cas particulier :
- une ellipse de polarisation qui est un cercle ;
- un déphasage entre les deux composantes orthogonales du vecteur de champ électrique de la lumière qui vaut 90 degrés d'angle.

En conséquence, la notion de lumière polarisée elliptiquement contient celle de lumière polarisée linéairement. Pour une polarisation linéaire le rapport d'ellipticité vaut 0, et pour une polarisation circulaire le rapport d'ellipticité vaut 1.

On peut donc considérer que chaque cellule à cristaux liquides 16c(i,j) de la matrice bidimensionnelle 16c de cellules à cristaux liquides induit, dans une lumière entrante polarisée linéairement, qui est ici une lumière polarisée linéairement, en fonction de la commande en tension entre les deux électrodes associées à la cellule à cristaux liquides 16c(i,j) :
- un décalage angulaire variable de l'orientation de l'axe principal de polarisation, qui résulte en une variation de l'orientation θc(*i,j*) de l'axe principal de polarisation de la lumière sortant de la cellule à cristaux liquides 16c(i,j) en fonction de la commande en tension entre les deux électrodes associées à la cellule à cristaux liquides 16c(i,j) ;
- et/ou une variation d'un retard, ou déphasage *φ*16c(*i,j*), entre les deux composantes orthogonales du vecteur de champ électrique de la lumière qui sort de la cellule à cristaux liquides 16c(i,j).

Ainsi, cette orientation θc(*i,j*) et/ou ce déphasage *φ*16c(*i,j*) peuvent être commandés en commandant la tension entre les deux électrodes associées à la cellule à cristaux liquides 16c(i,j). Ainsi, en commandant la tension entre les électrodes de chaque cellule à cristaux liquides 16c(i,j), on peut configurer la matrice bidimensionnelle de cellules à cristaux liquides de telle sorte que la lumière polarisée issue de chacune des cellules à cristaux liquides présente une polarisation elliptique ayant, pour chaque cellule à cristaux liquides 16c(i,j) au moins une propriété de polarisation commandée parmi :
- une orientation θc(*i,j*) commandée de l'axe principal de polarisation ;
- et/ou un déphasage *φ*16c(*i,j*) commandé entre les deux composantes orthogonales du vecteur de champ électrique de la lumière issue de la cellule à cristaux liquides16c(i,j).

On note que la disposition d'un polariseur linéaire en amont d'une matrice bidimensionnelle de cellules à cristaux liquides est une technique inhérente dans la réalisation des afficheurs à cristaux liquides. De la sorte, l'homme du métier pourra mettre en œuvre, pour la réalisation du dispositif d'illumination 16, et notamment pour ce qui est de l'association du polariseur linéaire amont 16b avec la matrice bidimensionnelle 16c de cellules à cristaux liquides, des techniques et règles de conception qui sont habituellement mises en œuvre dans le domaine des afficheurs à cristaux liquides. A contrario, on remarquera que, contrairement à une construction habituelle des afficheurs à cristaux liquides, le dispositif d'illumination 16 ne comporte pas de polariseur linéaire en aval de la matrice bidimensionnelle de cellules à cristaux liquides, notamment pas de polariseur linéaire dans le trajet de la lumière entre la matrice bidimensionnelle 16c de cellules à cristaux liquides et l'emplacement d'inspection 13 auquel doit être placé le récipient 12 à inspecter.

Dans la matrice bidimensionnelle 16c de cellules à cristaux liquides, les cellules à cristaux liquides 16c(i,j) sont généralement disposées selon un réseau à deux dimensions dans le plan de la matrice, avec une disposition en colonnes (i) et en rangées (j) perpendiculaires. Généralement, on remarque que l'axe de polarisation A0 du polariseur linéaire amont 16b est de préférence orienté à 45° par rapport aux colonnes et aux rangées perpendiculaires de cellules à cristaux liquides 16c(i,j) de la matrice bidimensionnelle 16c.

De préférence, le système 10 comporte des moyens de commande de la matrice bidimensionnelle de cellules à cristaux liquides, aptes à contrôler chaque cellule 16c(i,j) individuellement, donc à commander individuellement autant de cellules que le nombre de colonnes multiplié par le nombre de rangées. Dans un tel cas, on aura une correspondance d'une zone élémentaire de la surface émettrice 16s avec une cellule 16c(i,j) de la matrice bidimensionnelle de cellules à cristaux liquides. Cependant, dans certaines modes de réalisation, on pourrait prévoir que le système 10 comporte des moyens de commande qui ne soient pas aptes à contrôler chaque cellule 16c(i,j) individuellement, mais seulement à contrôler individuellement des groupes de cellules, par exemple des rangées 16c(i) de cellules, des colonnes 16c(j) de cellules ou des ensembles de cellules adjacentes. Dans un tel cas, une zone émettrice élémentaire correspondra à l'une de ces colonnes, à l'une de ces rangées, ou l'un de ces ensembles de cellules à cristaux liquides. Pour la suite de la description, on se placera dans le cas de moyens de commande qui sont aptes à contrôler individuellement chaque cellule à cristaux liquides 16c(i,j).

Dans tous les cas, on prévoit que le système est apte à configurer au moins une portion de la matrice bidimensionnelle de cellules à cristaux liquides de telle sorte que la lumière polarisée issue de chacune des cellules à cristaux liquides présente une polarisation elliptique ayant, pour chaque cellule à cristaux liquides16c(i,j), une orientation θc(*i,j*) commandée de l'axe principal de polarisation et/ou un déphasage *φ*16c(*i,j*) commandé entre les deux composantes orthogonales du vecteur de champ électrique de la lumière issue de la cellule à cristaux liquides 16c(i,j). La portion susceptible d'être ainsi commandée, ou la portion qui est effectivement ainsi commandée, correspond à une portion appelée portion d'inspection de la surface émettrice 16s. Cette portion est elle aussi bidimensionnelle.

Il est donc apparu que, en fonction de la commande en tension appliquée aux électrodes d'une cellule à cristaux liquides 16c(i,j) donnée, il était possible, lorsque la lumière traverse la cellule à cristaux liquides, la lumière étant polarisée linéairement donc sans déphasage à l'entrée dans la cellule 16c(i,j), d'induire une orientation θc(*i,j*) commandée de l'axe principal de polarisation et/ou un déphasage commandé entre les deux composantes orthogonales du vecteur de champ électrique de la lumière issue de la cellule à cristaux liquides 16c(i,j).

Dans les technologies qui le permettent, par exemple la technologie « TN », l'orientation θc(*i,j*) de l'axe principal de polarisation peut ainsi varier, en fonction de la commande appliquée aux électrodes, d'une valeur initiale, correspondant au cas où aucune tension n'est appliquée aux électrodes de la cellule à cristaux liquides 16c(i,j), à une valeur finale, correspondant au cas où une tension maximale est appliquée aux électrodes de la cellule à cristaux liquides 16c(i,j). Dans certaines de ces technologies, par exemple la technologie « TN », la valeur initiale de l'orientation θc(*i,j*) de l'axe principal de polarisation est une orientation à 90° de l'orientation de l'axe de polarisation de la lumière entrante, donc à 90° de de l'orientation de l'axe de polarisation du polariseur amont. Il apparaît que, suivant les caractéristiques de la matrice bidimensionnelle 16c de cellules à cristaux liquides, la valeur finale de l'orientation θc(*i,j*) de l'axe principal de polarisation de la lumière issue de la cellule à cristaux liquides, correspondant à la tension maximale appliquée aux électrodes de la cellule à cristaux liquides, peut atteindre un décalage angulaire par rapport à la valeur initiale qui est d'au moins 30 degrés d'angle, de préférence au moins 45 degrés d'angle, plus préférentiellement 70 degrés d'angle.

Dans les technologies qui le permettent, par exemple la technologie « ECB », le déphasage *φ*16c(*i,j*) peut ainsi varier, en fonction de la commande appliquée aux électrodes, d'une valeur initiale, dans certains cas une valeur nulle, correspondant au cas où aucune tension n'est appliquée aux électrodes de la cellule à cristaux liquides 16c(i,j), à une valeur finale, dans certains cas une valeur maximale, correspondant au cas où une tension maximale est appliquée aux électrodes de la cellule à cristaux liquides 16c(i,j). Il apparaît que, suivant les caractéristiques de la matrice bidimensionnelle 16c de cellules à cristaux liquides, la différence entre les valeurs initiales et finales de déphasage entre les deux composantes orthogonales du vecteur de champ électrique de la lumière issue de la cellule à cristaux liquides, correspondant à la tension maximale appliquée aux électrodes de la cellule à cristaux liquides, peut atteindre une valeur dans la gamme allant de 45 à 90 degrés d'angle. Certaines au moins des matrices bidimensionnelles de cellules à cristaux liquides de technologie « ECB » ont un tel comportement.

On note que la corrélation entre d'une part la tension appliquée aux électrodes de la cellule à cristaux liquides 16c(i,j) et d'autre part la valeur l'orientation θc(*i,j*) de l'axe principal de polarisation et/ou le déphasage *φ*16*c*(*i,j*) peut être une corrélation positive, si les deux varient dans le même sens, ou une corrélation négative, si les deux varient dans des sens opposés.

De même, il est apparu que, dans les deux cas, la variation de l'orientation θc(*i,j*) de l'axe principal de polarisation et/ou du déphasage *φ*16c(*i,j*) induit dans une lumière, initialement polarisée linéairement et traversant la cellule à cristaux liquides 16c(i,j), est une fonction continue de la tension appliquée aux électrodes de cette cellule à cristaux liquides 16c(i,j). En revanche, il est également apparu que la variation de l'orientation θc(*i,j*) de l'axe principal de polarisation et/ou du déphasage *φ*16c(*i,j*) induit dans une lumière, initialement polarisée linéairement et traversant la cellule à cristaux liquides 16c(i,j), n'est pas nécessairement une fonction linéaire ou affine de la tension appliquée aux électrodes de la cellule à cristaux liquides 16c(i,j). Cependant, il est possible, au moins par une procédure préalable d'étalonnage, d'établir une fonction de conversion permettant de connaître la valeur de l'orientation θc(*i,j*) de l'axe principal de polarisation et/ou du déphasage *φ*16c(*i,j*) induit en fonction de la tension appliquée aux électrodes de la cellule à cristaux liquides 16c(i,j). En d'autres termes, on peut, au moins par une procédure préalable d'étalonnage, déterminer quelle valeur de tension doit être appliquée aux électrodes de la cellule à cristaux liquides 16c(i,j) pour obtenir une orientation θc(*i,j*) de l'axe principal de polarisation et/ou un déphasage *φ*16c(*i,j*) induit souhaité d'une lumière initialement polarisée linéairement et traversant la cellule à cristaux liquides 16c(i,j). Un exemple de méthode d'étalonnage sera donné plus loin.

Le système 10 comprend des moyens de commande 100, dont un exemple illustré de manière symbolique à la figure 1 et à la figure 4. Ces moyens de commande 100 peuvent comprendre au moins une unité informatique de calcul, par exemple un ordinateur standard 110. Ils peuvent comprendre une ou plusieurs unité(s) électronique(s) d'interface 120 pour la ou les caméras numériques 18, 18.1, 18.2, dont une partie au moins peut être intégrée à la ou les caméras numériques. Les moyens de commande 100 peuvent comprendre une unité électronique de commande 130 pour piloter le dispositif illumination 16, notamment pour piloter la source lumineuse primaire 16a et/ou la matrice bidimensionnelle 16c de cellules à cristaux liquides. Les moyens de commande 100 peuvent donc comporter un ou plusieurs microprocesseurs, un ou plusieurs microcontrôleurs, une ou plusieurs unités de mémoire électronique et une ou plusieurs interfaces d'affichage (écran, projecteur, affichage holographique...), de saisie (clavier, souris, pavé tactile, écran tactile, ...), et / ou de communication (USB, Ethernet^{®}, Wi-Fi^{®}, Bluetooth^{®}, Zigbee^{®}, ...). Les moyens de commande 100 peuvent comprendre un réseau informatique partageant des données entre différents éléments des moyens de commande, avec un ou plusieurs autres ordinateurs du réseau, ou avec d'autres réseaux, par exemple par un protocole internet ou Ethernet^{®}. En plus d'être reliés à la ou les caméras numériques, pour en recueillir et enregistrer les images maîtresses/partielles (telles que définies plus bas), et au dispositif d'illumination 16, pour en assurer le contrôle et éventuellement en acquérir des données de fonctionnement, les moyens de commande 100 peuvent comprendre ou être reliés à des capteurs donnant des informations de vitesse de déplacement des récipients, de présence d'un récipient au poste d'inspection ou d'autre informations d'état de l'installation, et / ou à des actionneurs de l'installation (convoyeurs, éjecteurs, ...). Les moyens de commande 100 peuvent mettre en œuvre un ou plusieurs logiciels, stockés(s) et / ou exécuté(s) en local ou à distance, y compris sur un ou plusieurs serveurs informatiques distants. Ce ou ces logiciel(s) comprennent de préférence un ou plusieurs logiciel(s) programmés pour mettre en œuvre les étapes informatiques du procédé selon l'invention.

La surface émettrice 16s étant bidimensionnelle, on peut donc définir, dans son étendue, deux directions distinctes, notamment deux directions orthogonales, dont une direction peut arbitrairement être qualifiée de direction primaire D1. On verra qu'on peut aussi définir une direction secondaire D2, différente de la direction primaire D1, de préférence orthogonale à la direction primaire D1. Par exemple, la direction primaire D1 peut être une direction parallèle à l'axe A12 du récipient 12 à inspecter, donc parallèle à l'axe A13 fixe correspondant à l'emplacement d'inspection 13. Dans un tel cas, la direction secondaire D2 peut être une direction oblique par rapport à l'axe A12 du récipient 12 à inspecter, par exemple inclinée d'un angle compris dans la gamme allant de 30 à 60 degrés d'angle par rapport à l'axe A12 du récipient 12, ou orthogonale à la direction primaire D1, donc orthogonale à l'axe A12.

L'utilisation d'une matrice bidimensionnelle 16c de cellules à cristaux liquides, susceptible d'être commandée, est particulièrement avantageuse car elle permet de créer facilement des conditions de lumière incidente ayant au moins une propriété de polarisation qui varie sur la surface émettrice 16s, créant ainsi une « mire » de variation d'au moins une propriété de polarisation, y compris une « mire » de variation complexe et ou une « mire » de variation progressive et continue. La commande de la matrice bidimensionnelle 16c de cellules à cristaux liquides permet facilement de passer d'une première « mire » de variation d'au moins propriété de polarisation sur la surface émettrice 16s, à au moins une seconde « mire » de variation de la même propriété de polarisation sur la surface émettrice 16s et/ou une seconde « mire » de variation d'une propriété de polarisation différente sur la surface émettrice 16s. Ce passage d'une « mire » de variation à une autre peut être effectué à une fréquence importante, supérieure à 1 Hz, généralement supérieure à 10 Hz, souvent supérieure à 100 Hz.

De manière générale, on pourra obtenir, grâce à l'utilisation d'une matrice bidimensionnelle 16c de cellules à cristaux liquides, une « mire » de variation dans laquelle une propriété de polarisation, par exemple l'orientation θc(*i,j*) de l'axe principal de polarisation et/ou le déphasage *φ*16c(*i,j*) entre les deux composantes orthogonales du vecteur de champ électrique de la lumière issue de la cellule à cristaux liquides 16c(i,j) suit une variation qui soit une fonction périodique de la position de la cellule à cristaux liquides 16c(i,j) considérée selon une direction, cette fonction étant de préférence une fonction « non-constante » sur tout intervalle compris dans une période. De même, une telle fonction sera de préférence également continue sur une période, et, encore plus préférentiellement, continue sur plusieurs périodes, donc sans saut entre deux périodes. Par exemple, une telle variation peut être une variation de type sinusoïdal, une fonction linéaire ou affine sur chaque période, etc.. On verra que, pour la mise en œuvre de l'invention, une telle variation sera une variation triangulaire telle que définie plus bas.

Tout particulièrement, le système 10 est apte à configurer au moins une portion de la matrice bidimensionnelle 16c de cellules à cristaux liquides de telle sorte que l'une au moins des deux propriétés de polarisation, parmi l'orientation θc(*i,j*) de l'axe principal de polarisation et/ou le déphasage *φ*16c(*i,j*) entre les deux composantes orthogonales du vecteur de champ électrique de la lumière issue de la cellule à cristaux liquides 16c(i,j) suit une variation triangulaire, en fonction de la position de la cellule à cristaux liquides 16c(i,j) considérée selon la direction primaire D1.

Une telle variation triangulaire offre notamment l'avantage d'améliorer la sensibilité de la mesure, c'est-à-dire la capacité de pouvoir mettre davantage en évidence les défauts fortement réfractants par rapport aux défauts faiblement réfractant, la sensibilité du défaut dépendant de la pente des surfaces dioptriques traversées, à l'endroit du défaut réfractant.

Un défaut réfractant est un défaut qui provoque localement une réfraction anormale, principalement lorsque que le défaut se manifeste par des écarts de pente entre des surfaces ou dioptres de la ou des parois. Il s'agit parfois d'une zone de paroi de verre localement très mince et fragile. Les défauts réfractant comprennent également les bouillons ou bulles d'air internes à la paroi ou en surface de la paroi en verre. Dans ce cas la réfraction est induite par la présence de dioptres additionnels traversés par la lumière. Il arrive également que les bouillons sont situés en surface de la paroi, soit fermés, soit ouverts c'est-à-dire crevés. La réfraction des défauts est forte ou faible, c'est-à-dire que la déviation de la lumière est forte ou faible, autrement dit, l'angle de déviation (en angle) par les défauts, des rayons lumineux traversant la paroi est forte ou faible. La gravité d'un défaut réfractant augmente si la déviation augmente : un léger pli en surface, faiblement réfractant peut être acceptable s'il détériore peu l'esthétique du récipient, mais un pli fortement marqué, fortement réfractant, sera à rejeter. De même, les bulles ou des régions trop minces impactent la solidité du récipient et ce sont des défauts fortement réfractants plus graves, et sont à rejeter. Il est donc très avantageux que la détection des défauts réfractants soit sensible, donc dépendante, au pouvoir réfractant des défauts. Cela permet d'économiser des produits en ne rejetant pas les défauts faiblement réfractant, tout en garantissant la reconnaissance et le rejet de défauts fortement réfractants.

Par ailleurs, le signal triangulaire permet également d'avoir une sensibilité de détection du défaut qui est constante, du fait d'une variation constante du signal triangulaire (hormis à proximité du sommet de ce signal triangulaire). Aussi, la sensibilité est homogène quelle que soit la zone mesurée. De ce fait, un défaut de pouvoir réfractant donné sera détecter avec un signal identique quelle que soit la position du défaut sur un récipient. Cette propriété confère également à la détection une bonne répétitivité quelles que soient les conditions de circulation des récipients dans le poste d'inspection, comme son orientation autour de son axe vertical ou sa position sur le convoyeur.

Dans tous les systèmes qui vont être décrits, on pourra considérer que la portion d'inspection de la surface émettrice 16s est constituée de zone émettrices élémentaires 16s(i,j) émettant chacune une lumière émise polarisée elliptiquement, voire linéairement. La lumière émise par une zone émettrice élémentaire comporte deux propriétés de polarisation dont chacune peut être la propriété de polarisation d'intérêt émise. La première de ces deux propriétés de polarisation est l'orientation de l'axe principal polarisation de la lumière émise par ladite zone émettrice élémentaire 16s(i,j), que l'on pourra aussi désigner ci-après comme étant l'orientation de polarisation d'intérêt émise θs(*i,j*) (parfois aussi appelée tout simplement direction de polarisation). La deuxième de ces deux propriétés de polarisation pouvant être la propriété de polarisation d'intérêt émise correspond au déphasage *φ*16*s*(*i,j*) entre les deux composantes orthogonales du vecteur de champ électrique de la lumière émise polarisée.

Suivant les modes de réalisation du système 10, on va décrire différents systèmes 10 appartenant soit à une première famille de modes de réalisation, mettant en œuvre plus particulièrement, en tant que variation de la propriété de polarisation d'intérêt émise, une variation de l'orientation θ*s*(*i,j*) de l'axe principal de polarisation de la lumière émise par chaque zone émettrice élémentaire 16s(i,j) de la surface émettrice 16s, soit à une deuxième famille de modes de réalisation, mettant en œuvre plus particulièrement, en tant que variation de la propriété de polarisation d'intérêt émise, une variation du déphasage *φs*(*i,j*) entre les deux composantes orthogonales du vecteur de champ électrique de la lumière émise par chaque zone émettrice élémentaire 16s(i,j) de la surface émettrice 16s.

Dans la première famille de modes de réalisation, on trouve un premier type de modes de réalisation dans lequel la surface émettrice 16s est la surface de la matrice bidimensionnelle 16c à cellules à cristaux liquides, et chaque zone émettrice élémentaire 16s(i,j) est donc directement déterminée par une cellule à cristaux liquides 16c(i,j) associée. Ainsi, pour les modes de réalisation de ce premier type, appartenant à la première famille de modes de réalisation, l'orientation θc(*i,j*) de l'axe principal de polarisation induit par une cellule à cristaux liquides 16c(i,j) correspond directement à l'orientation θ*s*(*i,j*) de l'axe principal de polarisation, avec donc θ*s*(*i,j*) *=* θc(*i,j*). Pour ce premier type de modes de réalisation, la portion d'inspection de la surface émettrice 16s est donc constituée de zones émettrices élémentaires 16s(i,j) émettant chacune une lumière émise polarisée selon une polarisation elliptique ayant une orientation θ*s*(*i,j*) de l'axe principal de polarisation.

Les systèmes 10 des figures 1, 4 et 5 sont des exemples de systèmes 10 d'un premier type qui appartiennent à la première famille de modes de réalisation, mettant en œuvre plus particulièrement, en tant que variation de la propriété de polarisation d'intérêt émise, une variation commandée de l'orientation θ*s*(*i,j*) de l'axe principal de polarisation de la lumière émise polarisée. De tels systèmes seront par exemple mis en œuvre avantageusement dans le cas où la technologie de la matrice bidimensionnelle 16c de cellules à cristaux liquides génère plutôt, en fonction de la commande appliquée à la cellule à cristaux liquides 16c(i,j), une variation comparativement plus importante du décalage angulaire (comme défini plus haut) de l'orientation de l'axe principal de l'ellipse de polarisation (par exemple avec l'utilisation de cellules à cristaux liquides de type « TN »). Dans ce premier type, la propriété de polarisation d'intérêt émise, est donc directement l'orientation θc(*i,j*) *=* θ*s*(*i,j*) de l'axe principal de polarisation de la lumière issue de la cellule à cristaux liquides 16c(i,j) et donc émise par la zone émettrice élémentaire. Ainsi, les moyens de commande 100 de la matrice bidimensionnelle 16c de cellules à cristaux liquides seront aptes à configurer cette dernière de telle sorte que la lumière polarisée issue de chacune des cellules à cristaux liquides 16c(i,j), et donc issue de chaque zone émettrice élémentaire 16s(i,j), présente une polarisation elliptique ayant, pour chaque cellule à cristaux liquides 16c(i,j) et donc pour chaque zone émettrice élémentaire 16s(i,j), une orientation θ*s*(*i,j*) *=* θc(*i,j*) commandée de l'axe principal de polarisation de la lumière issue de la cellule à cristaux liquides 16c(i,j) et donc émise par la zone émettrice élémentaire, qui suit une variation, notamment une variation triangulaire, en fonction de la position de la zone émettrice élémentaire 16s(i,j) selon la direction primaire D1.

On notera que, pour les systèmes de la première famille de modes de réalisation, mettant en œuvre plus particulièrement, en tant que variation de la propriété de polarisation d'intérêt émise, une variation commandée de l'orientation θ*s*(*i,j*) de l'axe principal de polarisation de la lumière émise polarisée, on choisira de préférence un dispositif d'illumination 16 dans lequel la lumière polarisée issue de chacune des zone émettrice élémentaire 16s(i,j), présente une polarisation elliptique ayant un rapport d'ellipticité inférieur ou égal à 0,7, de préférence la plus faible possible, voire nul. Ceci permettra une détermination plus précise de l'orientation de cet axe principal de polarisation.

Un deuxième type de modes de réalisation, appartenant lui aussi à la première famille de modes de réalisation mettant en œuvre plus particulièrement, en tant que variation de la propriété de polarisation d'intérêt émise, une variation commandée de l'orientation θ*s*(*i,j*) de l'axe principal de polarisation de la lumière émise polarisée, est illustré par l'exemple de la figure 2. Dans cet exemple, le dispositif d'illumination 16 comprend, en aval de la matrice bidimensionnelle 16c de cellules à cristaux liquides, une lame à retard quart d'onde 16d qui fait partie du dispositif d'illumination 16 et qui est agencée dans le trajet de la lumière entre la matrice bidimensionnelle 16c de cellules à cristaux liquides et l'emplacement d'inspection 13. Dans un tel système, la surface émettrice 16s est alors la surface de la lame à retard quart d'onde 16d tournée vers l'emplacement d'inspection 13. Dans un tel système, chaque zone émettrice élémentaire 16s(i,j) est une zone de la surface de la lame à retard quart d'onde 16d, cette zone étant définie comme étant la zone qui, vu de la caméra numérique 18, est vue avec, en arrière-plan, une cellule à cristaux liquides 16c(i,j) de la matrice bidimensionnelle 16c. Chaque zone émettrice élémentaire 16s(i,j) est donc associée à une cellule à cristaux liquides 16c(i,j) de la matrice bidimensionnelle 16c. Le système de la figure 2 sera par exemple mis en œuvre avantageusement dans le cas où la technologie de la matrice bidimensionnelle 16c de cellules à cristaux liquides génère plutôt, en fonction de la commande appliquée à la cellule à cristaux liquides 16c(i,j), une variation comparativement plus importante du déphasage *φ*16c(*i,j*) entre les deux composantes orthogonales du vecteur de champ électrique de la lumière issue de la cellule à cristaux liquides 16c(i,j) (par exemple avec l'utilisation de cellules à cristaux liquides de type « ECB »). Or, dans un système 10 ainsi construit, en veillant à ce que l'axe rapide de la lame à retard quart d'onde 16d soit parallèle ou perpendiculaire avec l'axe de polarisation A0 du polariseur linéaire amont 16b, le déphasage *φ*16c(*i,j*) induit par une cellule à cristaux liquides 16c(i,j) de la matrice bidimensionnelle 16c se traduit, après franchissement de la lame à retard quart d'onde 16d, par l'émission, par la zone émettrice élémentaire correspondante, ici de la lame à retard quart d'onde 16d, d'une lumière ayant une polarisation linéaire avec un axe de polarisation dont l'orientation θ*s*(*i,j*), dans le plan de la surface émettrice 16s, varie en fonction du déphasage *φ*16c(*i,j*) induit par la cellule à cristaux liquides 16c(i,j), et donc varie en fonction de la commande appliquée à la cellule à cristaux liquides 16c(i,j). Dans un système de ce deuxième type, et d'après ce qui a été expliqué ci-dessus concernant la commande des cellules à cristaux liquides16c(i,j), on comprend que, en fonction de la commande appliquée aux électrodes d'une cellule à cristaux liquides donnée 16c(i,j), il est possible de faire varier, donc de commander, l'orientation θ*s*(*i,j*) de l'axe principal de polarisation de la lumière polarisée émise par la zone émettrice élémentaire 16s(i,j) correspondante, notamment depuis une valeur initiale, correspondant au cas où aucune tension n'est appliquée aux électrodes de la cellule à cristaux liquides 16c(i,j), et jusqu'à une valeur finale, correspondant à une tension maximale appliquée aux électrodes de la cellule à cristaux liquides 16c(i,j).

Le système de la figure 3 est un exemple d'un système 10 selon un troisième type qui appartient à la deuxième famille de modes de réalisation mettant en œuvre plus particulièrement, en tant que variation de la propriété de polarisation d'intérêt émise, une variation commandée du déphasage *φ*16*s*(*i,j*) entre les deux composantes orthogonales du vecteur de champ électrique de la lumière émise polarisée. Dans les systèmes du troisième type, la surface émettrice 16s est la surface de la matrice bidimensionnelle 16c à cellules à cristaux liquides, et chaque zone émettrice élémentaire 16s(i,j) est donc directement déterminée par une cellule à cristaux liquides 16c(i,j) associée. Ainsi, pour les modes de réalisation de ce troisième type, mais appartenant à la deuxième famille de modes de réalisation, le déphasage *φ*16c(*i,j*) entre les deux composantes orthogonales du vecteur de champ électrique induit par une cellule à cristaux liquides 16c(i,j) correspond directement au déphasage *φ*16*s*(*i,j*) entre les deux composantes orthogonales du vecteur de champ électrique de la lumière émise polarisée, avec donc *φ*16*s*(*i,j*) *= φ1*6c(*i,j*). Un tel système sera par exemple mis en œuvre avantageusement dans le cas où la technologie de la matrice bidimensionnelle 16c de cellules à cristaux liquides génère plutôt, en fonction de la commande appliquée à la cellule à cristaux liquides 16c(i,j), une variation comparativement plus important du déphasage *φ*16*s*(*i,j*) *= φ*16c(*i,j*) entre les deux composantes orthogonales du vecteur de champ électrique de la lumière issue de la cellule à cristaux liquides 16c(i,j) et donc émise par la zone émettrice élémentaire (par exemple avec l'utilisation de cellules à cristaux liquides de type « ECB »). Dans un tel cas, la propriété de polarisation d'intérêt émise sera donc le déphasage *φ*16*s*(*i,j*) *= φ*16c(*i,j*) entre les deux composantes orthogonales du vecteur de champ électrique de la lumière issue de la cellule à cristaux liquides 16c(i,j) et donc émise par la zone émettrice élémentaire. Ainsi, les moyens de commande 100 de la matrice bidimensionnelle 16c de cellules à cristaux liquides seront aptes à configurer cette dernière de telle sorte que la lumière polarisée issue de chacune des cellules à cristaux liquides 16c(i,j), et donc issue de chaque zone émettrice élémentaire 16s(i,j), présente une polarisation elliptique ayant, pour chaque cellule à cristaux liquides 16c(i,j) et donc pour chaque zone émettrice élémentaire 16s(i,j), un déphasage *φ*16*s*(*i,j*) *= φ*16c(*i,j*) commandé entre les deux composantes orthogonales du vecteur de champ électrique de la lumière issue de la cellule à cristaux liquides 16c(i,j) et donc émise par la zone émettrice élémentaire, qui suit une variation, notamment une variation triangulaire, en fonction de la position de la zone émettrice élémentaire 16s(i,j) selon la direction primaire D1.

Un quatrième type de mode de réalisation se présente sous la forme de systèmes qui sont analogues à ceux du premier type de réalisation, mais qui appartiennent à la deuxième famille de modes de réalisation, mettant en œuvre plus particulièrement, en tant que variation de la propriété de polarisation d'intérêt émise, une variation commandée du déphasage *φ*16*s*(*i,j*) entre les deux composantes orthogonales du vecteur de champ électrique de la lumière émise polarisée. De tels systèmes seront par exemple mis en œuvre avantageusement dans le cas où la technologie de la matrice bidimensionnelle 16c de cellules à cristaux liquides génère plutôt, en fonction de la appliquée à la cellule à cristaux liquides 16c(i,j), une variation du déphasage *φ*16*s*(*i,j*) commandé entre les deux composantes orthogonales du vecteur de champ électrique de la lumière émise polarisée qui est comparativement plus importante (par exemple avec l'utilisation de cellules à cristaux liquides de type « ECB »). Dans ce quatrième type, la propriété de polarisation d'intérêt émise est donc directement le déphasage *φ*16*s*(*i,j*) entre les deux composantes orthogonales du vecteur de champ électrique de la lumière issue de la cellule à cristaux liquides 16c(i,j) et donc émise par la zone émettrice élémentaire. Ainsi, les moyens de commande 100 de la matrice bidimensionnelle 16c de cellules à cristaux liquides seront aptes à configurer cette dernière de telle sorte que la lumière polarisée issue de chacune des cellules à cristaux liquides 16c(i,j), et donc issue de chaque zone émettrice élémentaire 16s(i,j), présente une polarisation elliptique ayant, pour chaque cellule à cristaux liquides 16c(i,j) et donc pour chaque zone émettrice élémentaire 16s(i,j), un déphasage *p16s(i, j)* = *φ*16c(*i,j*) entre les deux composantes orthogonales du vecteur de champ électrique de la lumière émise polarisée de la lumière issue de la cellule à cristaux liquides 16c(i,j) et donc émise par la zone émettrice élémentaire, qui suit une variation, notamment une variation triangulaire, en fonction de la position de la zone émettrice élémentaire 16s(i,j) selon la direction primaire D1.

Dans tous les systèmes décrits ci-dessus 10, appartenant aux quatre types, et d'après ce qui a été expliqué ci-dessus concernant la commande des cellules à cristaux liquides16c(i,j), on comprend que, en fonction de la commande appliquée aux électrodes d'une cellule à cristaux liquides donnée 16c(i,j), il est possible de faire varier, donc de commander, l'orientation θ*s*(*i,j*) de l'axe principal de polarisation et/ou le déphasage *φ*16*s*(*i,j*) entre les deux composantes orthogonales du vecteur de champ électrique de la lumière polarisée émise par la zone émettrice élémentaire 16s(i,j) correspondante, notamment depuis une valeur initiale, par exemple une valeur nulle, correspondant au cas où aucune tension n'est appliquée aux électrodes de la cellule à cristaux liquides 16c(i,j), et jusqu'à une valeur finale, correspondant à une tension maximale appliquée aux électrodes de la cellule à cristaux liquides 16c(i,j).

De même, on comprend que la variation de l'orientation θ*s*(*i,j*) de l'axe principal de polarisation et/ou du déphasage *φ*16*s*(*i,j*) entre les deux composantes orthogonales du vecteur de champ électrique de la lumière polarisée émise par la zone émettrice élémentaire est une fonction continue de la commande en tension appliquée aux électrodes de la cellule à cristaux liquides 16c(i,j) associée. En revanche, comme vu plus haut, la variation de l'orientation θ*s*(*i,j*) de l'axe principal de polarisation et/ou du déphasage *φ*16*s*(*i,j*) entre les deux composantes orthogonales du vecteur de champ électrique de la lumière émise par la zone émettrice élémentaire 16s(i,j) n'est pas nécessairement une fonction linéaire ou affine de la commande en tension appliquée aux électrodes de la cellule à cristaux liquides 16c(i,j) associée, mais cela peut être pris en compte dans une procédure préalable d'étalonnage.

Une telle procédure préalable d'étalonnage peut notamment comprendre l'acquisition, par exemple avec une caméra numérique polarimétrique, avec éventuellement interposition d'une lame à retard quart d'onde, d'une série d'images d'étalonnage de la surface émettrice 16s. Pour chaque image d'étalonnage de la série d'étalonnage, le dispositif d'illumination 16 peut être commandé en appliquant, pour chaque image d'étalonnage, une tension de commande prédéterminée connue aux électrodes de chaque cellule à cristaux liquides 16c(i,j) de la matrice bidimensionnelle 16c. Par exemple, pour chaque image de la série, le dispositif d'illumination 16 peut être commandé en appliquant, pour chaque image d'étalonnage, la même tension de commande prédéterminée connue aux électrodes de chaque cellule à cristaux liquides 16c(i,j) de la matrice bidimensionnelle 16c. Entre chaque image d'étalonnage, on fait varier par incréments, entre une valeur minimale et une valeur maximale, la tension de commande prédéterminée connue aux électrodes de chaque cellule à cristaux liquides 16c(i,j) de la matrice bidimensionnelle 16c. Pour chaque image d'étalonnage, on enregistre, pour chaque zone émettrice élémentaire 16s(i,j), une valeur de propriété de polarisation reçue par la caméra qui permet, éventuellement en tenant compte d'éléments connus dans le trajet de la lumière, par exemple la présence d'une lame à retard à quart d'onde 34 dans le cas de la Figure 3, de déterminer la valeur de la propriété de polarisation d'intérêt émise (orientation de l'axe principal de polarisation et/ou déphasage) en fonction de la tension appliquée d'afin de déterminer, pour chaque zone émettrice élémentaire 16s(i,j), une relation d'étalonnage entre la tension appliquée aux électrodes de la cellule à cristaux liquides 16c(i,j) et la valeur de la propriété de polarisation d'intérêt émise en provenance de cette zone émettrice élémentaire 16s(i,j), telle que reçue par le capteur de la caméra.

Dans tous les types de modes de réalisation, notamment ceux appartenant à la première famille, l'orientation θ*s*(*i,j*) de l'axe principal de polarisation de la lumière émise par la zone émettrice élémentaire peut être indiquée par rapport à une orientation de référence. L'orientation de référence pour définir l'orientation θ*s*(*i,j*) de l'axe principal de polarisation de la lumière émise par la zone émettrice élémentaire 16s(i,j) sera par exemple par définition l'orientation de l'axe principal de polarisation lorsqu'aucune tension n'est appliquée aux électrodes de la cellule à cristaux liquides. Il apparaît que, suivant les caractéristiques de la matrice bidimensionnelle 16c de cellules à cristaux liquides, la valeur finale d'orientation θ*s*(*i,j*) de l'axe principal de polarisation, correspondant à la tension maximale appliquée aux électrodes de la cellule à cristaux liquides 16c(i,j), peut atteindre, par rapport à l'orientation de référence, un angle d'au moins 45 degrés, de préférence d'au moins 70 degrés d'angle, et encore plus préférentiellement d'au moins 90 degrés d'angle.

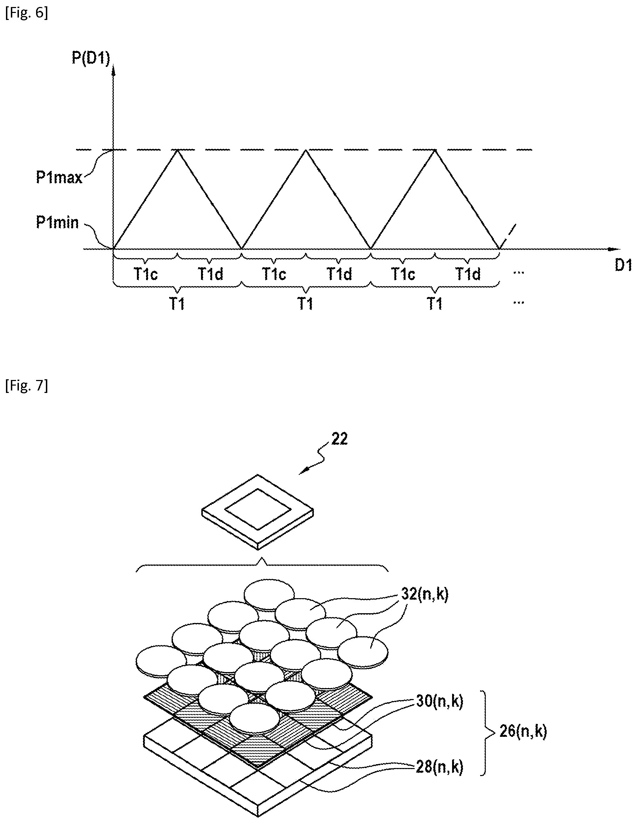

Dans tous les types de modes de réalisation, comme dans l'exemple de la figure 6, la variation triangulaire de la propriété de polarisation d'intérêt émise P(D1) est telle que chaque période primaire T1 est divisée en uniquement deux parties : une partie croissante T1c et une partie décroissante T1d. Dans la partie croissante, la propriété de polarisation d'intérêt émise P(D1) est une fonction linéaire croissante de la position de la zone émettrice élémentaire selon la direction primaire D1, et, sur cette partie croissante, la propriété de polarisation d'intérêt émise P(D1) croît d'une valeur inférieure primaire P1min à une valeur supérieure primaire P1max. Dans la partie décroissante, la propriété de polarisation d'intérêt émise P(D1) est une fonction linéaire décroissante de la position de la zone émettrice élémentaire selon la direction primaire D1, la propriété de polarisation d'intérêt émise P(D1) décroît de la valeur supérieure primaire P1max, à la valeur inférieure primaire P1min.

Dans tous les cas, la variation triangulaire de la propriété de polarisation d'intérêt émise qui est obtenue sur la surface émettrice 16s est donc une fonction qui est continue, qui est périodique selon une période primaire T1 le long de la direction primaire D1 de la surface émettrice 16s, et qui, sur chaque période T1, est constituée de deux parties linéaires T1c et T1d successives.

On verra qu'une telle configuration de surface émettrice 16s permet, dans le cadre d'un procédé adapté, de détecter des défauts réfractants en tous les points d'une zone inspectée avec une sensibilité homogène sur toute la zone inspectée, et avec une sensibilité élevée.

De préférence, la partie croissante T1c et la partie décroissante T1d de chaque période primaire T1 sont d'égale étendue selon la direction primaire D1. Autrement dit, la pente de variation de la fonction linéaire croissante et la pente de variation de la fonction linéaire décroissante sont de préférence égales.

On notera que le caractère linéaire et continu de la variation triangulaire sur chaque demi-période doit être apprécié en regard du caractère nécessairement discontinu du dispositif d'illumination 16. En effet, la variation triangulaire est obtenue par une commande différenciée des cellules à cristaux liquides de la matrice bidimensionnelle 16c. Les cellules ont nécessairement une étendue selon la direction primaire D1, donc chaque zone émettrice élémentaire présente aussi une étendue correspondante sur laquelle la propriété de polarisation d'intérêt émise est constante. Cependant, eu égard à la précision nécessaire pour la méthode, il est possible d'avoir une matrice bidimensionnelle 16c de cellules à cristaux liquides configurée pour que, vu du capteur de la caméra, la variation ait une apparence continue et linéaire sur chaque partie croissante et sur chaque partie décroissante de chaque période.

Pour l'acquisition d'une image partielle primaire donnée dans le procédé (ce qui sera explicité plus bas), le dispositif d'illumination 16 est commandé de telle sorte que la propriété de polarisation d'intérêt émise de la lumière émise par les zones émettrices élémentaires suive ladite variation triangulaire en fonction de la position de la zone émettrice élémentaire selon la direction primaire D1, mais soit constante selon une direction D2 perpendiculaire à la direction primaire D1. Ainsi, la propriété de polarisation d'intérêt émise varie selon une seule direction D1 de la surface émettrice et est constante selon la direction perpendiculaire D2.

Dans des modes de réalisation préférentiels, la caméra numérique est une caméra numérique polarimétrique 18, le système pouvant dans ce cas comporter une unique caméra numérique.

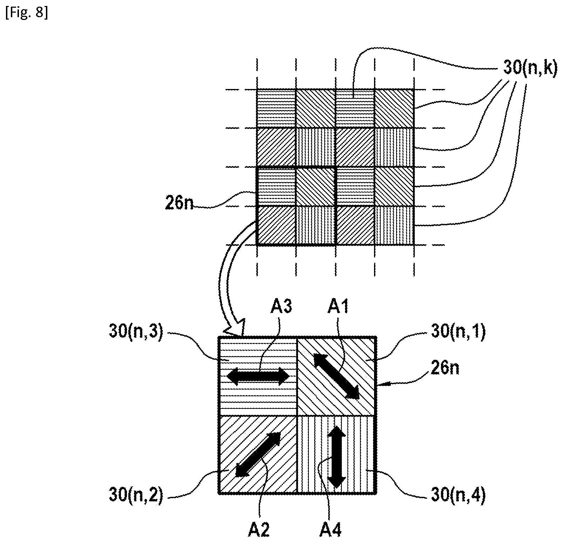

On connaît notamment des caméras polarimétriques dans lesquelles la caméra polarimétrique comporte un capteur photoélectrique 22 bidimensionnel dont le principe est illustré aux figures 7 et 8. Le capteur photoélectrique 22 comprend des éléments photoélectriques 26(n,k) qui comprennent chacun une cellule photoélectrique 28(n,k) devant laquelle est agencé un analyseur linéaire individuel 30(n,k) associé à la cellule photoélectrique 28(n,k) de cet élément photoélectrique 26(n,k), le capteur photoélectrique 22 comportant un nombre N de groupes distincts de 4 éléments photoélectriques contigus dont les analyseurs linéaires individuels 30(n,k) ont chacun un axe de polarisation Ak, les quatre axes de polarisation Ak d'un groupe donné de 4 éléments photoélectriques formant deux paires (A1, A2) et (A3, A4) d'axes de polarisation orthogonaux, les deux paires étant décalées l'une de l'autre de 45 degrés d'angle. La notation utilisée dans le présent texte identifie un élément photoélectrique 26(n,k), ou une cellule photoélectrique 28(n,k) ou un analyseur de polarisation individuel 30(n,k) par le doublet d'indice (n,k), l'indice n (qui varie de 1 à N) permettant d'identifier le groupe 26(n) auquel il appartient, et l'indice k (qui varie de 1 à 4) permettant d'identifier son numéro d'ordre dans le groupe, l'indice k étant donc indicateur de l'orientation de l'axe de polarisation Ak de l'analyseur de polarisation individuel 30(n,k) de cet élément photoélectrique 26(n,k). Le capteur photoélectrique 22 de la figure 7 détermine ainsi quatre familles d'éléments photoélectriques 26(n,k) qui correspondent à quatre caractéristiques d'analyse de polarisation distinctes, celles déterminées par les filtres polarisants individuels 30(n,k). Ainsi, les quatre caractéristiques d'analyse de polarisation distinctes sont quatre analyses linéaires selon les quatre axes de polarisation distincts, par exemple deux paires (A1, A2) et (A3, A4) d'axes de polarisation orthogonaux, les deux paires étant décalées l'une de l'autre de 45 degrés d'angle, dans un sens ou dans l'autre.

Dans les exemples décrits ci-dessous, on a pris les conventions suivantes :
- l'axe A1 de polarisation des filtres polarisants individuels 30(n,1) est parallèle à l'axe A0 de polarisation du polariseur linéaire amont 16b ;
- l'axe A2 de polarisation des filtres polarisants individuels 30(n,2) est décalé de 90 degrés d'angle par rapport à l'axe A1 ;
- l'axe A3 de polarisation des filtres polarisants individuels 30(n,3) est décalé de 45 degrés d'angle dans un sens donné par rapport à l'axe A1 ;
- l'axe A4 de polarisation des filtres polarisants individuels 30(n,4) est décalé de 135 degrés d'angle dans le même sens donné par rapport à l'axe A1.

Une telle caméra polarimétrique 18, à travers son capteur photoélectrique 22, délivre donc une image numérique, appelée image maîtresse IM, qui peut comporter autant de pixels, appelés pixels maîtres Pm(n,k), que le nombre 4xN d'éléments photoélectriques. Dans une telle image maîtresse IM, on peut définir des groupes de pixels, chaque groupe de pixel étant ci-après un pixel composite Pc(n), où chaque pixel composite Pc(n) regroupe les pixels maîtres Pm(n,k) qui correspondent à un groupe 26(n) donné d'éléments photoélectriques contigus, tel que défini plus haut. Ainsi, à chaque groupe 26(n) distinct d'éléments photoélectriques contigus correspond un pixel composite Pc(n) dans l'image maîtresse délivrée par le capteur photoélectrique 22. Un pixel composite Pc(n) comporte donc 4 pixels maîtres Pm(n,k). Un pixel composite Pc(n) peut être considéré comme l'image d'une zone élémentaire du champ imagé, donc notamment, une zone élémentaire du récipient 12 qui se trouvait à l'emplacement d'inspection 13 au moment de l'acquisition de l'image maîtresse IM.

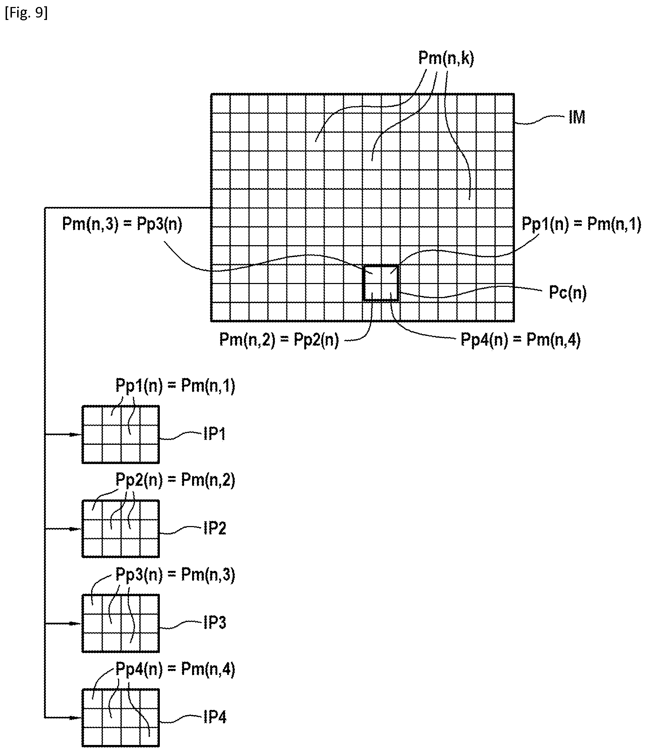

Par ailleurs, comme illustré plus particulièrement à la figure 9, on peut aussi considérer que l'image numérique maîtresse IM comprend le nombre K d'images numériques partielles IPk (avec k entier variant de 1 à K) distinctes ayant chacune N pixels partiels Ppk(n). Les pixels partiels Ppk(n) de chaque image numérique partielle IPk correspondent, pour une image numérique partielle IPk donnée, aux éléments photoélectriques 26(n,k) du capteur 22 dont l'analyseur linéaire individuel 30(n,k) qui ont le même axe de polarisation. Autrement dit, tous les pixels partiels Ppk(n) d'une image partielle IPk donné sont acquis au travers d'analyseurs linéaires individuels Ppk(n) qui ont un axe de polarisation commun Ak pour l'image numérique partielle IPk. On note que chaque pixel partiel d'une image numérique partielle IPk est pris dans un des N pixels composites de l'image numérique maîtresse IM de laquelle est extraite l'image numérique partielle IPk considérée. Un pixel partiel Ppk(n) d'une image partielle IPk est donc un pixel maître Pm(n,k) de l'image maîtresse IM acquise par la caméra polarimétrique 18.

De manière avantageuse, les images partielles IPk sont superposables pixel à pixel. En effet, pour une zone élémentaire donnée du récipient 12, on sait que les différentes pixels maîtres Pm(n,k) du pixel composite Pc(n) correspondant à la zone élémentaire donnée sont répartis, sous la forme de pixels partiels Ppk(n), dans chaque image partielle IPk, avec un unique pixel maître Pm(n,k) du pixel composite Pc(n), sous la forme d'un pixel partiel Ppk(n), dans chaque image partielle IPk. Il est entendu ici que, à l'échelle de la résolution de l'image maîtresse IM, il existe un décalage entre deux images partielles IPk, décalage qui est connu en fonction du décalage connu entre les éléments photoélectriques 26(n,k) au sein d'un groupe 26(n). En revanche, à l'échelle de la résolution des images partielles IPk, les images partielles IPk peuvent être considérées comme parfaitement et directement superposables, car deux pixels partiels Ppk(n) extraits du même pixel composite seront des images, certes partielles, d'une même zone élémentaire du champ imagé, donc du récipient 12.

Par exemple, les caméras polarimétriques de la série XCG-CP commercialisées par les sociétés du groupe SONY fonctionnent selon ce principe. Les mêmes sociétés du groupe SONY commercialisent des capteurs photoélectriques bidimensionnels qui intègrent un système de filtres polarisant linéaires individuels associés chacun à une cellule photoélectrique selon le principe ci-dessus. Ces capteurs, connus sous les références IMX250MZR / MYR, IMX253MAR / MYR, ou encore IMX264MZR / MYR, de technologie CMOS, comportent des filtre polarisants linéaires individuels formés directement sur le composant. Un système sera décrit ci-après de manière plus précise dans un mode de réalisation mettant en œuvre une telle caméra. D'autres constructeurs de caméras pouvant être mises en œuvre dans le cadre de l'invention incluent la société Lucid Vision Labs, Inc, 130-13200 Delf Place, Richmond B.C., Canada, V6V 2A2..

L'utilisation d'une telle caméra permet d'obtenir, en une seule acquisition, une série de plusieurs images d'une même zone inspectée, qualifiées dans la suite d'images partielles, dans laquelle chaque image partielle contient une image de la zone inspectée mais reçoit la lumière au travers d'un analyseur de polarisation linéaire dont l'axe de polarisation possède sa propre orientation. Avec une caméra numérique polarimétrique telle que décrite ci-dessus, les images partielles obtenues sont alors nécessairement acquises selon le même axe optique. De plus, les images partielles obtenues sont alors directement superposables de telle sorte que chaque zone élémentaire de la zone inspectée du récipient est imagée par un pixel partiel correspondant dans chacune des images numériques partielles de la série, de sorte que les images n'ont pas besoins d'opération de recalage gourmandes en temps de calcul.

Dans d'autres modes de réalisation, on pourra utiliser des caméras numériques matricielles conventionnelles, comportant un capteur photoélectrique bidimensionnel, monochrome ou couleur, mais insensible à la polarisation de la lumière. Dans de tels modes de réalisation, on utilisera alors, comme illustré à la figure 4, un jeu de plusieurs caméras, par exemple un jeu de deux caméras numériques 18.1, 18.2 qui seront dans ce cas alors chacune associées à leur propre analyseur de polarisation linéaire 30.1, 30.2, les axes de polarisation A1, A2 des deux analyseurs de polarisation linéaire 30.1, 30.2 étant alors différents l'un de l'autre, de préférence orthogonaux entre eux. Dans de tels cas, on appellera image numérique partielle l'image numérique délivrée par chacune des deux caméras numériques 18.1, 18.2.

Dans l'exemple de la figure 4, on prévoit une lame semi réfléchissante 36 qui est disposée perpendiculairement à l'axe optique d'une première 18.1 des deux caméras numériques, ceci afin de permettre le renvoi d'une partie de la lumière émergente émanant du récipient 12 vers la seconde 18.2 des deux caméras numériques. L'utilisation d'une telle lame semi réfléchissante 36 permet, avec un réglage fin de la position des deux caméras numériques, de faire en sorte que celle-ci observe le récipient selon le même axe optique, tout du moins dans la zone de l'emplacement d'inspection 13. De la sorte, bien que les deux caméras numériques 18.1 18.2 ne sont pas positionnés au même endroit, les images numériques qu'elles acquièrent sont directement superposables, sans besoin d'opération de recalage gourmandes en temps de calcul.

Cependant, on pourrait tout à fait prévoir que le jeu de plusieurs caméras numériques 18.1, 18.2 soient disposées côte à côte pour observer l'emplacement d'inspection 13, et donc le récipient 12, selon deux axes optique distincts. Dans un tel cas, les images numériques acquises par le jeu de plusieurs caméras numériques nécessiteront d'être recalées informatiquement pour pouvoir être superposables. La matrice de recalage peut par exemple être obtenue dans le cadre d'une opération préalable d'étalonnage. Un tel système comprenant un jeu de plusieurs caméras numériques, par exemple de deux caméras numériques, avec des axes optiques qui ne sont pas confondus dans la zone de l'emplacement d'inspection 13, pourra notamment être utilisé lorsque le dispositif d'illumination est commandé de telle sorte que la propriété de polarisation d'intérêt émise varie selon une seule direction D1 de la surface émettrice et est constante selon la direction perpendiculaire D2. Dans ce cas, il sera avantageux que les axes optiques des caméras du jeu de plusieurs caméras numériques définissent un plan qui contienne la direction perpendiculaire à la direction primaire D1, donc qui contienne la direction D2 selon laquelle la propriété de polarisation d'intérêt émise est constante.

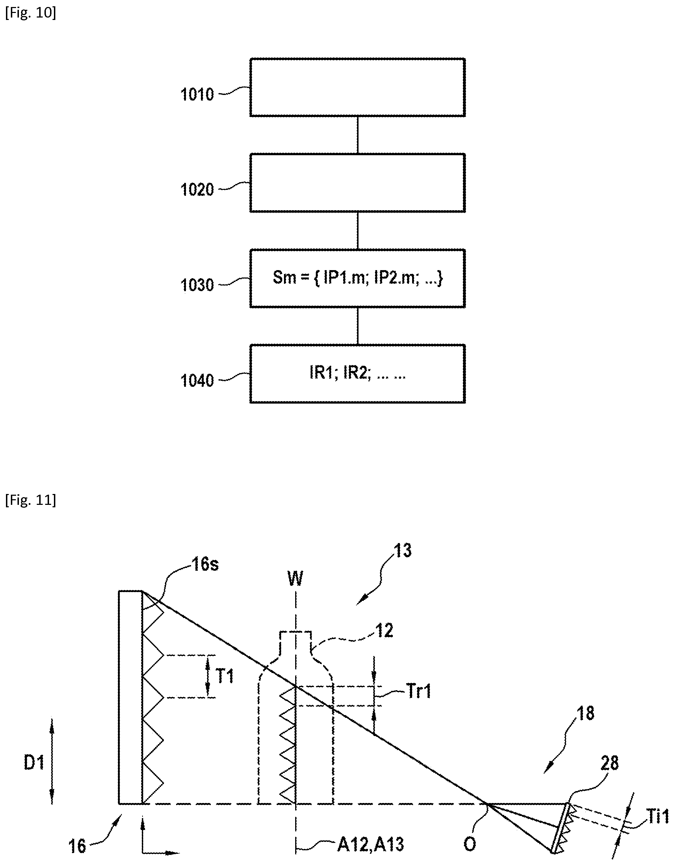

Dans les exemples, on a illustré le cas dans lequel la ou les caméras numériques 18, 18.1, 18.2 sont orientée(s) de manière à être perpendiculaire(s) à la paroi du récipient 12 qui doit être inspecté. Cependant, il est tout à fait possible de prévoir que l'axe optique de la ou les caméras 18, 18.1, 18.2, observe(nt) le récipient 12 sous un certain angle de plongée ou de contre-plongée par rapport à l'axe principal A12 du récipient 12, par exemple comme illustré à la figure 11. De préférence, l'axe optique de la ou les caméras numériques 18, 18.1, 18.2 forme un angle supérieur à 45°, de préférence supérieure à 60° avec l'axe principal A12 du récipient 12.

On remarque par ailleurs que certains des systèmes 10, notamment les systèmes 10 appartenant au deuxième type ou au troisième type, comportent, dans le trajet de la lumière entre la matrice bidimensionnelle 16c de cellules à cristaux liquides et les analyseurs linéaires 30(n,k), 30.1, 30.2, une lame à retard quart d'onde 16d, 34. De préférence, cette lame à retard quart d'onde 16d, 34 présente un axe rapide orienté parallèlement ou perpendiculairement à l'axe de polarisation A0 du polariseur linéaire amont 16b.

La présence d'une telle lame à retard quart d'onde 16d, 34 permet de récupérer, au niveau de la caméra polarimétrique 18 ou au niveau des analyseurs linéaires 30.1, 30.2 des caméras numériques conventionnelles 18.1, 18.2, une lumière polarisée elliptiquement (dans certains cas linéairement) dont l'axe principal de polarisation présente une orientation qui varie en fonction de la consigne de commande appliquée à la cellule à cristaux liquides 16c(i,j) correspondante appartenant à la matrice bidimensionnelle 16c.

Cependant, comme on peut le voir pour les systèmes 10 appartenant à la première famille, la présence d'une telle lame à retard quart d'onde n'est pas obligatoire, comme le montre par exemple les modes de réalisation des figures 1, 4 et 5. Dans un tel cas on récupère, au niveau de la caméra polarimétriques 18 ou au niveau des analyseurs linéaires 30.1, 30.2 des caméras numériques conventionnelles 18.1, une lumière polarisée elliptiquement, avec l'orientation θ*s*(*i,j*) de l'axe principal de polarisation de la lumière émise polarisée qui varie en fonction de la commande appliquée à la cellule à cristaux liquides 16c(i,j) correspondante appartenant à la matrice bidimensionnelle 16c.

En présence d'une lame à retard quart d'onde dans le trajet de la lumière, celle-ci peut occuper l'une ou l'autre des positions préférentielles suivantes.

Dans le mode de réalisation de la figure 2, du deuxième type, la lame à retard quart d'onde 16d fait partie du dispositif d'illumination 16 et est agencée dans le trajet de la lumière entre la matrice bidimensionnelle 16c de cellules à cristaux liquides et l'emplacement d'inspection 13 auquel doit être placé le récipient 12 à inspecter. Dans ce cas, on constate que la lumière incidente qui illumine le récipient 12 est une lumière polarisée linéairement dont l'axe de polarisation présente une orientation θs(*i, j*) qui varie en fonction de la commande appliquée à la cellule à cristaux liquides 16c(i,j) correspondante appartenant à la matrice bidimensionnelle 16c.

Dans le mode de réalisation de la figure 3, du troisième type, la lame à retard quart d'onde 34 est agencée dans le trajet de la lumière entre d'une part l'emplacement d'inspection 13 auquel doit être placé le récipient 12 à inspecter, et, d'autre part, les analyseurs linéaires 30(n,k), 30.1, 30.2 respectivement de la caméra polarimétrique 18 ou des caméras numériques conventionnelles 18.1, 18.2, donc en aval du récipient 12 à inspecter. Dans ce cas, on constate que la lumière incidente qui illumine le récipient 12 est une lumière polarisée elliptiquement, avec un déphasage *φ*16*s*(*i, j*) entre les deux composantes orthogonales du vecteur de champ électrique qui varie en fonction de la commande appliquée à la cellule à cristaux liquides 16c(i,j) correspondante appartenant à la matrice bidimensionnelle 16c. On remarque que, comme représenté schématiquement sur les dessins, la disposition de la lame à retard quart d'onde en aval du récipient 12 peut permettre d'utiliser une lame à retard quart d'onde 34 de dimensions plus petites que les dimensions correspondantes de la zone à inspecter du récipient, en tous cas lorsque la ou les caméras numériques comportent un objectif conventionnel à champ de vision divergent, donc non télécentrique. Dans ces modes de réalisation, la lame à retard quart d'onde 34 est interposée entre le récipient 12 et les éléments photoélectriques 26(n,k) du capteur photoélectrique 22. La lame à retard quart d'onde 34 interposée dans le trajet de la lumière en aval de l'emplacement d'inspection 13 peut faire partie de la caméra polarimétrique 18, soit en étant intégrée au capteur photoélectrique 22, soit en étant placée entre l'objectif 24 et le capteur photoélectrique 22, soit en étant intégrée à l'objectif 24. Cependant, comme dans l'exemple illustré à la figure 3, la lame à retard quart d'onde 34 peut être placée entre l'emplacement d'inspection 13 du système 10, auquel le récipient 12 doit être placé pour être inspecté, et l'objectif 24 de la caméra polarimétrique 18. Dans un exemple non-illustré, mais qui serait du troisième type tout en comprenant, de manière comparable à l'exemple de la figure 4, deux caméras numériques conventionnelles, la lame à retard quart d'onde 34 serait placée entre l'emplacement d'inspection 13 du système 10, auquel le récipient 12 doit être placé pour être inspecté, et les analyseurs linéaires 30.1, 30.2 respectifs des caméras numériques conventionnelles 18.1, 18.2. Dans un tel exemple, on pourrait prévoir deux lames à retard quart d'onde 34 dont chacune serait placée en aval de la lame semi réfléchissante 36, mais on pourrait aussi, en alternative, prévoir une unique lame à retard quart d'onde 34 placée entre l'emplacement d'inspection 13 du système 10, auquel le récipient 12 doit être placé pour être inspecté, et la lame semi réfléchissante 36.

Les systèmes 10 tels que décrits ci-dessus sont des exemples de systèmes qui permettent de mettre en œuvre chacun au moins certaines des variantes d'un procédé opto-informatique d'inspection en lumière traversante d'un récipient en verre à l'aide d'une caméra numérique, tel que décrit ci-dessous. Le procédé comporte des étapes informatiques, notamment des étapes de calcul informatique qui pourront par exemple être réalisées par l'unité informatique de calcul 110. Dans le système 10, l'unité informatique de calcul 110 peut ainsi être programmée pour effectuer tout ou partie du procédé ou des procédés décrit(s) ci-après.

Les procédés décrits ci-dessous sont des procédés opto-informatiques d'inspection en lumière traversante d'un récipient en verre en déplacement selon une trajectoire de déplacement. Ces procédés sont donc mis en œuvre pour inspecter un récipient en verre lorsque ce dernier est amené à l'emplacement d'inspection 13 du système 10.

Les principales étapes d'un exemple de réalisation d'un tel procédé sont décrites ci-après en référence au diagramme de la figure 10.

Le procédé comporte l'illumination 1010 du récipient 12 par un dispositif d'illumination, par exemple par un dispositif d'illumination 16 tel que décrit ci-dessus.

Le procédé comporte l'observation 1020 du récipient, par au moins une caméra numérique. Suivant les systèmes 10 mis en œuvre, on a vu qu'il pouvait y avoir une unique caméra polarimétrique 18, ou un jeu de plusieurs caméras numériques conventionnelles, notamment deux caméras numériques conventionnelles 18.1, 18.2, équipées chacune d'un analyseur de polarisation linéaire correspondant 30.1, 30.2. Dans tous les cas, la ou les caméras numériques 18, 18.1, 18.2 comportent chacune un capteur photoélectrique bidimensionnel comprenant des éléments photoélectriques qui comprennent chacun une cellule photoélectrique correspondant à un pixel dans une image acquise par la caméra numérique. Comme il s'agit d'une inspection en lumière traversante, l'au moins une caméra numérique 18, 18.1, 18.2 est située, par rapport à la trajectoire de déplacement T, du côté opposé à celui du dispositif d'illumination 16, de manière à recueillir, par l'au moins une caméra numérique 18, 18.1, 18.2 une lumière émergente émanant du récipient 12 se trouvant à l'emplacement d'inspection 13.

Le procédé comporte l'acquisition 1030, avec l'au moins une caméra 18, 18.1, 18.2, d'images numériques qui seront ci- après dénommées images numériques partielles IPk. Plus précisément, cette acquisition comporte l'acquisition, pour un récipient donné, d'au moins une série Sm (m étant un nombre entier identifiant la série Sm) comprenant, pour au moins une première série S1, au moins une première image numérique partielle IP1.1 et une deuxième image numérique partielle IP2.1. Chaque image numérique partielle IPk.m d'une série Sm donnée pour un récipient donné contient une image d'une même zone inspectée du récipient. Chaque image numérique partielle IPk.m comprend N pixels partiels dont chacun est l'image d'une zone élémentaire correspondante du récipient. Chaque image numérique partielle IPk.m est acquise avec interposition, entre le récipient 12 et les cellules photoélectriques de l'au moins une caméra 18, 18.1, 18.2 qui acquière cette image numérique partielle, d'un analyseur linéaire présentant un axe de polarisation donné Ak pour une image numérique partielle donnée. Pour l'acquisition de la première image numérique partielle IP1.m et de la deuxième image numérique partielle IP2.m d'une même série Sm pour un récipient 12 donné, les axes de polarisation A1, A2 des analyseurs linéaires mis en œuvre sont distincts entre eux, de préférence orthogonaux entre eux.

Dans les modes de réalisation comportant un jeu de plusieurs caméras numériques conventionnelles 18.1 et 18.2, comme par exemple le mode de réalisation illustrée à la figure 4, chacune des caméras du jeu de plusieurs caméras numériques conventionnelles acquiert une image numérique partielle, au travers respectivement de l'analyseur de polarisation linéaire 30.1, 30.2 qui lui est associé. Ainsi, dans le cas d'un jeu de plusieurs caméras comprenant au moins deux caméras numériques conventionnelles 18.1 et 18.2, une première caméra numérique conventionnelle 18.1 acquiert, pour un récipient donné et pour une série donnée Sm pour ce récipient, une première image partielle IP1.m, au travers d'un premier analyseur de polarisation linéaire 30.1 ayant un premier axe de polarisation A1, et une deuxième caméra numériques conventionnelle 18.2 acquièrent, pour le même récipient donné et pour la même série donnée pour ce récipient, une deuxième image partielle IP2.m, au travers d'un deuxième analyseur de polarisation linéaire 30.2 ayant un deuxième axe de polarisation A2 différent du premier axe de polarisation, de préférence orthogonal au premier axe de polarisation.

Dans les modes de réalisation qui mettent en œuvre une caméra polarimétrique 18, l'acquisition d'une série Sm comprenant au moins une première image numérique partielle IP1.m et au moins une deuxième image numérique partielle IP2.m peut être réalisée en une seule acquisition avec l'acquisition d'une image maîtresse IM.m délivrée par la caméra polarimétrique 18, l'image maîtresse IM.m comprenant on l'a vu plus haut quatre images numériques partielles IPk.m, les quatre images numériques partielles IPk.m correspondant chacune à un axe de polarisation commun Ak pour les analyseurs linéaires individuels 30(n,k) au travers desquels sont acquis les pixels partiels PPk.m(n) de l'image numérique partielle IPk.n considérée. Pour une série Sm donnée, la première image numérique partielle IP1.m et la deuxième image numérique partielle IP2.m seront donc choisies parmi les quatre images numériques partielles IPk.m délivrées par la caméra numérique polarimétrique 18, de préférence en choisissant une paire d'images correspondant à deux axes de polarisation (A1, A2), (A3, A4) orthogonaux entre eux.

Dans tous les cas, les images numériques partielles IPk.m d'une même série Sm sont superposables de telle sorte que chaque zone élémentaire de la zone inspectée du récipient 12 est imagée par un pixel partiel Ppk.m correspondant dans chacune des images numériques partielles IPk.m de la série Sm.

Comme indiqué plus haut, l'acquisition 1030 prévoit l'acquisition, pour un récipient donné, d'au moins une série Sm d'images numériques partielles IPk.m, et donc d'au moins une série primaire S1 d'images numériques partielles IPk.1

Pour la série primaire S1, les images numériques partielles IPk.1 de la série primaire S1 contiennent chacune, en arrière-plan, l'image d'une même portion d'inspection primaire de la surface émettrice 16s. On note ici qu'on suppose que l'on peut faire abstraction de tout phénomène de diffusion de la lumière au travers du récipient, lequel est donc considéré comme transparent. La portion d'inspection primaire est observée à travers le récipient 12 par la ou les caméra(s) numérique(s). La portion d'inspection primaire est donc la portion de la surface émettrice qui est vue, au moment de l'acquisition de la série primaire S1 d'images numériques partielles primaires IPk.1, au travers de la zone inspectée du récipient 12 par la ou les caméra(s) numérique(s). Pour l'acquisition de la série primaire S1, le dispositif d'illumination 16 est commandé pour que, sur la portion d'inspection primaire de la surface émettrice, la loi de variation périodique de la propriété de polarisation d'intérêt émise présente, selon une direction primaire D1 de la surface émettrice, une variation périodique primaire, et présente plusieurs périodes primaires T1 sur l'étendue de la portion d'inspection primaire selon la direction primaire D1. Plus précisément, pour l'acquisition de la série primaire S1 d'images numériques partielles IPk.1, la propriété de polarisation d'intérêt émise des lumières émises par les zones émettrices élémentaires de la portion d'inspection primaire de la surface émettrice 16s suit, sur une période primaire T1, une variation triangulaire en fonction de la position de la zone émettrice élémentaire selon la direction primaire D1, cette variation triangulaire présentant plusieurs périodes primaires T1 successives, dont chacune présente une telle variation triangulaire de la propriété de polarisation d'intérêt émise en fonction de la position de la zone émettrice élémentaire selon la direction primaire D1.

De préférence, pour un récipient 12 donné, les images numériques partielles IPk.m d'une même série Sm sont acquises au même instant. Cette simultanéité de l'acquisition des images numériques partielles IPk.m d'une même série Sm est bien entendu obtenue de manière intrinsèque lorsqu'une caméra numérique polarimétrique 18 est utilisée pour l'acquisition. Dans le cas d'un système mettant en œuvre un jeu de plusieurs caméras numériques conventionnelles 18.1, 18.2, les moyens de commande 100 du système 10 seront programmés pour que les caméras du jeu de plusieurs caméras numériques conventionnelles 18.1, 18.2 soient synchronisées afin d'effectuer leurs acquisitions respectives au même instant. Cette acquisition au même instant permet de s'affranchir du risque de bougé du récipient 12 qui existerait si les images numériques partielles d'une même série étaient acquises à des moments différents.

Dans certains modes de réalisation, notamment ceux mettant en œuvre une caméra polarimétrique 18 telle que définie précédemment, on pourra, pour la même zone inspectée du même récipient 12, procéder à l'acquisition, pour une série Sm donnée, par exemple la série primaire S1, d'une troisième image numérique partielle IP3.1 et d'une quatrième image numérique partielle IP4.1 pour lesquelles les axes de polarisation A3, A4 des analyseurs linéaires sont distincts entre eux et distincts des axes de polarisation A1, A2 des analyseurs linéaires pour la première image numérique partielle IP1.1 et la deuxième image numérique partielle IP2.1 de la série, de préférence orthogonaux entre eux et décalés de 45 degrés d'angle des axes de polarisation A1, A2 des analyseurs linéaires pour la première image numérique partielle IP1.1 et la deuxième image numérique partielle IP2.m de la série S1. On verra que l'acquisition d'une troisième image numérique partielle IP3.1 et d'une quatrième image numérique partielle IP4.1 permet d'avoir une meilleure homogénéité de calcul de l'image brute de réfraction qui va être décrite ci-après.

En effet, après l'acquisition des images numériques partielles IPk.1 pour la série primaire S1, le procédé comporte le calcul informatique 1040 d'au moins une image primaire brute de réfraction IR1, à partir des images numériques partielles IPk.1 de la série primaire S1, en calculant, pour chacune des zones élémentaires d'une zone inspectée du récipient, un pixel primaire brut de réfraction Pr1(n) dont la valeur est représentative de la réfraction induite par la zone élémentaire de la zone inspectée, à partir de la valeur des pixels partiels correspondants Ppk.1(n) qui sont l'image de la zone élémentaire dans les images numériques partielles IPk.1 de la série primaire S1.

En effet, dans l'exemple, le pixel primaire brut de réfraction aura une valeur qui dépendra de la valeur de propriété de polarisation d'intérêt émise par la zone émettrice élémentaire de la surface émettrice qui est vue, par le pixel primaire brut de réfraction (plus précisément par le groupe 26(n) donné d'éléments photoélectriques contigus qui délivrent les pixels partiels correspondants Ppk.1(n) qui sont l'image de la zone élémentaire du récipient), en arrière-plan au travers de la zone élémentaire correspondante du récipient. Or, laquelle des zones émettrices élémentaires est ainsi vue dépend de la réfraction induite par la zone élémentaire de la zone inspectée. En effet, en parcourant, en sens inverse de la propagation, le trajet de lumière à partir d'un pixel partiel jusqu'à une zone émettrice élémentaire de la surface émettrice, une réfraction intervient à chaque franchissement de dioptre, donc de surface de la paroi de verre du récipient traversée. Ce trajet de lumière dépend donc de la réfraction. Donc la zone émettrice élémentaire de la surface émettrice reliée par ce trajet de lumière à un pixel partiel dépend de la réfraction induite. Et, comme des zones élémentaires distinctes n'ont pas la même la valeur de propriété de polarisation d'intérêt émise, il en résulte que la valeur du pixel primaire brut de réfraction Pr1(n) est représentative de la réfraction induite par la zone élémentaire de la zone inspectée.

Dans la mesure où la propriété de polarisation des lumières émises par les zones émettrices élémentaires de la portion d'inspection primaire de la surface émettrice 16s suit une variation triangulaire en fonction de la position de la zone émettrice élémentaire selon la direction primaire D1, un pixel primaire brut de réfraction Pr1(n) aura une valeur qui sera représentative de la réfraction induite par la zone élémentaire de la zone inspectée, en ce sens qu'elle sera représentative de la réfraction selon la direction primaire D1.

La réfraction selon une direction donnée, par exemple selon la direction primaire D1, peut être définie comme la composante, selon la direction donnée, du changement de direction de propagation de la lumière pour les rayons lumineux qui traversent cette zone élémentaire.

Dans un exemple préféré, D1 est parallèle à l'axe A12 du récipient inspecté. Pour un récipient 12 théorique parfait dont le corps aurait la forme d'un cylindre de verre d'épaisseur constante, la réfraction des rayons lumineux issus de la surface émettrice 16s et passant par le centre optique de l'objectif 24 (donc les rayons principaux) est toujours la même, uniforme et prédictible dans la direction D1. Dans l'image primaire brute de réfraction IR1, chaque pixel primaire brut de réfraction Pr1(n) a théoriquement (en l'absence de défaut réfractant) une valeur de propriété attendue qui correspond à la propriété de polarisation de lumière émise par une zone émettrice, et qui suit donc une fonction triangulaire de la position chaque pixel primaire brut de réfraction Pr1(n) dans l'image selon la direction D1. Si le pixel primaire brut de réfraction Pr1(n) appartient à l'image d'un défaut produisant une anomalie de réfraction d'un angle donné sur le parcours de la lumière issue de la zone élémentaire de la zone inspectée, le pixel primaire brut de réfraction Pr1(n) aura une valeur correspondant à la valeur de propriété de polarisation d'intérêt émise d'une autre zone émettrice élémentaire 16s(i,j), donc une valeur différente de celle attendue, et, comme la fonction de variation triangulaire est continue et linéaire par morceau, l'écart entre la valeur calculée et la valeur attendue est fonction de l'anomalie de réfraction, c'est-à-dire fonction de la déviation des faisceaux lumineux par rapport à leur propagation dans l'air ou à travers un récipient parfait.

En fonction du système 10 mis en œuvre, mais aussi en fonction du nombre d'images numériques partielles acquises pour une série donnée, pour le récipient 12 donné, différents algorithmes de calcul pourront être mis en œuvre, qui seront détaillés plus bas.

Dans une telle image primaire brute de réfraction IR1, il sera possible de détecter des anomalies induites par des défauts réfractants dans la zone inspectée du récipient. En effet, dans l'image primaire brute de réfraction IR1, on calcule, pour chaque zone élémentaire de la zone inspectée du récipient, un pixel primaire brut de réfraction Pr1(n). Or, pour une zone élémentaire donnée du récipient, la valeur de ce pixel primaire brut de réfraction Pr1(n) dépend nécessairement de la valeur de la propriété de polarisation d'intérêt émise de la zone élémentaire émettrice qui est vue au travers de la zone élémentaire donnée du récipient. Pour deux zone élémentaires données du récipient qui sont voisines l'une de l'autre, mais qui sont décalées l'une de l'autre selon la direction primaire D1, on a donc calculé deux valeurs de pixel primaire brut de réfraction : une valeur Pr1(n) correspondant à une première zone élémentaire, et une valeur Pr1(n') correspondant la deuxième zone élémentaire du récipient. En l'absence de toute anomalie de réfraction induite par un défaut réfractant cette zone du récipient (ou donc en l'absence de récipient à l'emplacement d'inspection 13), la variation entre ces deux valeurs de pixel primaire brut de réfraction serait donc uniquement le reflet de la variation entre les valeurs de la propriété de polarisation d'intérêt émise pour les deux zones élémentaires émettrices correspondantes de la surface émettrice 16s, variation qui est connue et qui est une variation triangulaire. En présence du récipient 12, ce dernier peut, en l'absence de tout défaut réfractant, induire une certaine valeur de réfraction. Cependant, pour deux zone élémentaires données du récipient qui sont voisines l'une de l'autre, et décalées l'une de l'autre selon la direction primaire D1, il est attendu que, en l'absence de défaut réfractant, la variation entre les deux valeurs de pixel primaire brut de réfraction Pr1(n) et Pr1(n') correspondants soit une variation linéaire reflétant la variation linéaire entre les valeurs de la propriété de polarisation d'intérêt émise pour les deux zones élémentaires émettrices correspondantes. Si tel n'est pas le cas, et donc si, pour deux zones élémentaires données du récipient qui sont voisines l'une de l'autre, et décalées l'une de l'autre selon la direction primaire D1, on observe une variation brusque entre les deux valeurs Pr1(n) et Pr1(n') des pixels primaires bruts de réfraction correspondants, alors on pourra conclure à la présence d'une anomalie de réfraction, qu'il sera possible d'attribuer à la présence d'un défaut réfractant. De plus l'écart de valeurs entre deux pixels primaires bruts de réfraction Pr1(n) et Pr1(n') alignés dans la direction D1 dépend directement de la distance dans la direction D1 entre les deux zones élémentaires de la zone inspectée qu'ils voient chacun en arrière-plan du récipient.

On note cependant que, en partant des seules images numériques partielles acquises dans la série primaire S1, il ne sera possible de détecter que des défauts réfractants qui induisent une réfraction avec un angle de réfraction dans un plan contenant la direction primaire D1.

Notamment, dans les cas où la propriété de polarisation d'intérêt émise de la lumière émise par les zones émettrices élémentaires est constante selon une direction perpendiculaire à la direction primaire D1, un défaut réfractant qui induirait une réfraction, avec un angle de réfraction contenu dans un plan perpendiculaire à la direction primaire D1, ne serait pas détectable.

Pour être en mesure de détecter à coup sûr les défauts réfractants quelle que soit l'orientation de la réfraction qu'ils génèrent, il est donc avantageux que, pour la même zone inspectée du même récipient 12, l'acquisition comporte l'acquisition d'au moins une série secondaire S2 d'images numériques partielles IPk.2 comprenant au moins au moins une première image numérique partielle IP1.2 et une deuxième image numérique partielle IP2.2.

De manière strictement analogue à ce qui a été vu pour la série primaire S1, on prévoit que, pour la série secondaire S2, les images numériques partielles IPk.2 contiennent chacune, en arrière-plan, l'image d'une même portion d'inspection secondaire de la surface émettrice 16s, la portion d'inspection secondaire étant observée à travers le récipient 12 par la caméra numérique, et, sur la portion d'inspection secondaire de la surface émettrice, la loi de variation périodique de la propriété de polarisation d'intérêt émise présentant, selon une direction secondaire D2 de la surface émettrice, différente de la direction primaire D1, de préférence orthogonale à la direction primaire D1, une variation périodique secondaire, et présentant plusieurs périodes secondaires T2 sur l'étendue de la portion d'inspection secondaire selon la direction secondaire D2. Tout comme ce qui a été défini pour la variation de la propriété de polarisation d'intérêt émise selon la direction primaire D1, sur une période secondaire T2, la propriété de polarisation d'intérêt émise des lumières émises par les zones émettrices élémentaires de la portion d'inspection secondaire de la surface émettrice 16s suit de préférence une variation triangulaire en fonction de la position de la zone émettrice élémentaire selon la direction secondaire D2. La période secondaire T2 peut être égale à, ou différente de la période primaire T1.

De préférence, la portion d'inspection primaire de la surface émettrice 16s et la portion d'inspection secondaire de la surface émettrice 16s ne sont pas coïncidentes à la fois dans le temps et dans l'espace.

Autrement dit, la portion d'inspection primaire de la surface émettrice 16s et la portion d'inspection secondaire de la surface émettrice 16s peuvent être coïncidentes dans le temps, c'est-à-dire être activées en même temps, mais ne pas être coïncidentes dans l'espace. Par exemple, la portion d'inspection primaire et la portion d'inspection secondaire de la surface émettrice 16s peuvent être des portions distinctes de la surface émettrice 16s. Dans un tel cas, le dispositif d'illumination 16 peut comporter deux composants ou ensemble de composants physiques distincts, par exemple deux ensembles de composants physiques distincts, chacun d'eux prenant par exemple la forme de l'ensemble des composants physiques décrits pour le dispositif d'illumination dans les modes de réalisation des figures 1 à 5, avec un premier ensemble de composants physiques comprenant la portion d'inspection primaire de la surface émettrice 16s, et un deuxième ensemble de composants physiques comprenant la portion d'inspection secondaire de la surface émettrice 16s, la surface émettrice 16s étant dans ce cas répartie sur les deux ensembles de composants physiques. En alternative, la portion d'inspection primaire et la portion d'inspection secondaire de la surface émettrice 16s peuvent être des portions distinctes d'une surface émettrice 16s formée par un unique ensemble de composants physiques tel décrit pour le dispositif d'illumination dans les modes de réalisation des figures 1 à 5. Dans ce cas où la portion d'inspection primaire de la surface émettrice 16s et la portion d'inspection secondaire de la surface émettrice 16s ne sont pas coïncidentes dans l'espace, le procédé peut comporter l'acquisition, pour une même zone inspectée d'un même récipient, de la série primaire d'images numériques partielles et de la série secondaire d'images numériques partielles au même instant ou à des instants différents. Dans ce cas où la portion d'inspection primaire de la surface émettrice 16s et la portion d'inspection secondaire de la surface émettrice 16s ne sont pas coïncidentes dans l'espace, la série primaire d'images numériques partielles et la série secondaire d'images numériques partielles peuvent être acquise respectivement avec des caméras différentes, éventuellement à des emplacements d'inspection différents le long de la trajectoire de défilement des récipients.

A contrario, la portion d'inspection primaire de la surface émettrice 16s et la portion d'inspection secondaire de la surface émettrice 16s peuvent être coïncidentes dans l'espace, ou au moins partiellement coïncidentes dans l'espace, mais ne pas être coïncidentes dans le temps, c'est-à-dire être activées à des instants différents. Cela s'avère notamment possible avec la mise en œuvre d'une matrice bidimensionnelle 16c de cellules à cristaux liquides, puisqu'en changeant la commande de la matrice dimensionnelle 16c de cellules à cristaux liquides, on peut, à un premier instant, générer sur une portion de la surface émettrice 16s une variation de la propriété de polarisation d'intérêt émise uniquement selon la direction primaire D1, et, à un second instant différent du premier instant, générer, sur la même portion de la surface émettrice 16s, une variation de la même propriété de polarisation d'intérêt émise uniquement selon la direction secondaire D2. Ainsi, dans ce dernier cas, la portion d'inspection primaire et la portion d'inspection secondaire correspondent à deux états de polarisation différents, à des instants différents, d'une même portion d'inspection de la surface émettrice 16s. Dans ce cas, on comprend que ce qui est considéré comme la même portion d'inspection de la surface émettrice 16s doit bien entendu couvrir les positions du récipient aux deux instants d'acquisition, respectivement de la série primaire et de la série secondaire. Si l'article est en mouvement entre les deux instants d'acquisition, la dite même portion d'inspection de la surface émettrice 16s doit bien entendu couvrir les positions du récipient à ces deux instants, bien que l'article n'aura pas exactement la même position relative par rapport à la dite même portion d'inspection. Ce qui compte ici, c'est que la dite même portion d'inspection, qui est mise en œuvre pour l'acquisition de la série primaire et de la série secondaire, doit changer d'état de polarisation, pour ce qui est de la propriété de polarisation d'intérêt émise, entre l'instant d'acquisition de la série primaire et l'instant d'acquisition de la série secondaire. Pour l'instant d'acquisition de la série primaire, la propriété de polarisation des lumières émises par les zones émettrices élémentaires de la portion d'inspection de la surface émettrice 16s suit une variation triangulaire en fonction de la position de la zone émettrice élémentaire selon la direction primaire D1. Pour l'instant d'acquisition de la série secondaire, la propriété de polarisation des lumières émises par les zones émettrices élémentaires de la même portion d'inspection de la surface émettrice 16s suit une variation triangulaire en fonction de la position de la zone émettrice élémentaire selon la direction secondaire D2. Dans ce cas où la portion d'inspection primaire de la surface émettrice 16s et la portion d'inspection secondaire de la surface émettrice 16s sont coïncidentes dans l'espace, l'acquisition, pour une même zone inspectée d'un même récipient, de la série primaire d'images numériques partielles et de la série secondaire d'images numériques partielles se fait à des instants différents. Dans ce cas, la série primaire d'images numériques partielles et la série secondaire d'images numériques partielles peuvent être acquises avec la même caméra polarimétrique 18 ou avec le même jeu de plusieurs caméras numériques conventionnelles 18.1, 18.2. Ainsi, on pourra mettre en œuvre un système 10 dans lequel la commande de la matrice bidimensionnelle 16c de cellules à cristaux liquides est synchronisée avec l'acquisition, avec l'au moins une caméra, c'est-à-dire avec la même caméra polarimétrique 18 ou avec le même jeu de plusieurs caméras numériques conventionnelles 18.1, 18.2, des au moins deux images numériques partielles nécessaires au procédé, de manière à :
- acquérir une série primaire S1 d'au moins deux images numériques partielles lorsque la matrice bidimensionnelle 16c de cellules à cristaux liquides est commandée de telle sorte que la propriété de polarisation commandée, de la lumière issue d'une cellule à cristaux liquides 16c(i,j) donnée, suit une variation triangulaire en fonction de la position de la zone émettrice élémentaire, associée à la cellule à cristaux liquides 16c(i,j) donnée, selon la direction primaire D1;
- acquérir une série secondaire S2 d'au moins deux images numériques partielles lorsque la matrice bidimensionnelle 16c de cellules à cristaux liquides est commandée de telle sorte que la propriété de polarisation commandée, de la lumière issue d'une cellule à cristaux liquides 16c(i,j) donnée, suit une variation triangulaire en fonction de la position de la zone émettrice élémentaire, associée à la cellule à cristaux liquides 16c(i,j) donnée, selon une direction secondaire D2 différente de la direction primaire D1, de préférence orthogonale à la direction primaire D1.

Ainsi, lors du passage d'un récipient donné 12 à l'emplacement d'inspection 13, le procédé pourra comporter la commande de la matrice bidimensionnelle 16c de cellules à cristaux liquides de telle sorte que, successivement, pour l'acquisition de la série primaire d'images numériques partielles du récipient donné, la propriété de polarisation commandée, de la lumière issue d'une cellule à cristaux liquides 16c(i,j) donnée, suit une variation triangulaire en fonction de la position de la cellule à cristaux liquides 16c(i,j) donnée selon la direction primaire D1, tout en étant constante selon une direction secondaire D2 différente de la direction primaire D1, de préférence orthogonale à la direction primaire D1, puis de telle sorte que, pour l'acquisition la série secondaire d'images numériques partielles, cette même propriété de polarisation commandée suit une variation triangulaire en fonction de la position de la cellule à cristaux liquides 16c(i,j) donnée selon la direction secondaire D2, tout en étant constante selon la direction primaire D1.

Dans le cas où la série primaire et la série secondaire sont acquises à des instants différents, le mouvement des récipients 12 peut être interrompu entre les deux instants de telle sorte que, pour la série primaire et pour la série secondaire, le récipient inspecté 12 se trouve exactement à la même position. Cependant, on cherchera généralement à conserver un mouvement continu des récipients. En cas de déplacement continu des récipients, l'acquisition de la série primaire et de la série secondaire à des instants différents implique nécessairement que le récipient inspecté 12 est à des positions différentes pour les deux acquisitions. Cependant, il peut être prévu que la fréquence d'acquisition des caméras disponibles actuellement, et la rapidité de commutation des matrices bidimensionnelles 16c de cellules à cristaux liquides, permettent que le déplacement d'un récipient 12 entre l'acquisition de la série primaire et l'acquisition de la série secondaire soit faible, le récipient 12 restant, dans l'intervalle de temps défini par ces deux instants, entre le dispositif d'illumination 16 utilisé et la même caméra polarimétrique 18 ou le même jeu de plusieurs caméras numériques conventionnelles 18.1, 18.2. Par exemple, l'intervalle de temps entre les 2 acquisitions est de 1 ms tandis que les récipients se déplacent à la vitesse de 1m/s, donc se déplacent de 1mm entre deux acquisitions. Si l'intervalle de temps entre les 2 acquisitions primaire et secondaire augmente, on peut prévoir un décalage de la portion d'inspection de la surface émettrice dans la direction de déplacement des récipients comme expliqué précédemment.

Tout comme pour la variation, selon la direction primaire D1, de la propriété de polarisation d'intérêt émise, la variation triangulaire, selon la direction secondaire D2, de la propriété de polarisation d'intérêt émise est telle que chaque période secondaire est de préférence divisée en uniquement deux parties, une partie croissante et une partie décroissante. Dans la partie croissante, la propriété de polarisation d'intérêt émise est une fonction linéaire croissante de la position de la zone émettrice élémentaire selon la direction secondaire D2, la propriété de polarisation d'intérêt émise croissant d'une valeur inférieure secondaire, à une valeur supérieure secondaire, et, dans la partie décroissante, la propriété de polarisation d'intérêt émise est une fonction linéaire décroissante de la position de la zone émettrice élémentaire selon la direction secondaire D2, la propriété de polarisation d'intérêt émise décroissant de la valeur supérieure secondaire, à la valeur inférieure secondaire. De même, comme pour la variation de la propriété de polarisation d'intérêt émise selon la direction primaire D1, la partie croissante et la partie décroissante de chaque période secondaire sont de préférence d'égale étendue selon la direction secondaire D2.

Avec l'acquisition d'une série secondaire d'images numériques partielles telles que définies plus haut, le procédé peut donc comporter le calcul informatique d'au moins une image secondaire brute de réfraction IR2, à partir des images numériques partielles IPk.2 de la série secondaire S2, en calculant, pour chacune des zones élémentaires de la zone inspectée du récipient 12, un pixel secondaire brut de réfraction Pr2(n), dont la valeur est représentative de la réfraction subie par la lumière ayant traversé au moins une épaisseur de paroi du récipient 12 et émergeant de la zone élémentaire, à partir de la valeur des pixels partiels Ppk.2(n) correspondants qui sont l'image de la zone élémentaire dans les images numériques partielles IPk.2 de la série secondaire S2.

Dans la mesure où la propriété de polarisation des lumières émises par les zones émettrices élémentaires de la portion d'inspection secondaire de la surface émettrice 16s suit une variation triangulaire en fonction de la position de la zone émettrice élémentaire selon la direction secondaire D2, un pixel secondaire brut de réfraction Pr2(n) aura une valeur qui sera représentative de la réfraction induite par la zone élémentaire de la zone inspectée, en ce sens qu'elle sera représentative de la réfraction selon la direction primaire D2.

On va maintenant décrire différentes façons de calculer informatiquement une image brute de réfraction IRm à partir des images numériques partielles IPk.m de la série Sm correspondante, en calculant, pour chacune des zones élémentaires d'une zone inspectée du récipient 12, un pixel brut de réfraction Prm(n) dont la valeur est représentative de la réfraction induite par la zone élémentaire, à partir de la valeur des pixels partiels correspondants Ppk.m(n) qui sont l'image de la zone élémentaire dans les images numériques partielles IPk.m de la série correspondante Sm.

Pour les formules mathématiques ci-dessous, on se place de préférence dans le cas où les axes de polarisation A1 et A2, correspondants respectivement à la première image partielle et à la deuxième image partielle de la série Sm considérée, sont orthogonaux entre eux. Si par ailleurs les formules mathématiques font usage de la troisième image partielle IP3.m et de la quatrième image partielle IP4.m d'une série Sm donnée, on se place dans le cas où les axes de polarisation A3 et A4, correspondants respectivement à la troisième image partielle IP3.m et à la quatrième image partielle IP4.m de la série Sm considérée, sont orthogonaux entre eux, et orientés à 45° des axes de polarisation A1 et A2 correspondants respectivement à la première image partielle et à la deuxième image partielle de la série Sm considérée, sont orthogonaux entre eux, avec ainsi deux paires (A1, A2) et (A3, A4) d'axes de polarisation orthogonaux, les deux paires étant décalées l'une de l'autre de 45 degrés d'angle.

On va tout d'abord différencier deux catégories de modes de réalisation, en fonction de la nature de la polarisation de la lumière reçue au niveau de la caméra polarimétrique 18 ou, le cas échéant, au niveau des analyseurs linéaires 30.1, 30.2 des caméras numériques conventionnelles 18.1, 18.2.

On décrit tout d'abord le procédé pour une première catégorie de modes de réalisation qui regroupe les premier, deuxième et troisième types de modes de réalisation. Dans le premier type de modes de réalisation, la propriété de polarisation d'intérêt émise est l'orientation θs(*i, j*) de l'axe principal de polarisation de la lumière émise polarisé, laquelle n'est alors pas modifiée par le système 10 entre la surface émettrice 16s et la caméra polarimétrique 18 ou, le cas échéant, au niveau des analyseurs linéaires 30.1, 30.2 des caméras numériques conventionnelles 18.1, 18.2, sauf modification induite par un récipient 12. Dans les deuxième et troisième types de modes de réalisation, la présence d'une lame à retard quart d'onde 16d, 34 dans le trajet de la lumière permet de récupérer, tout comme dans le premier type de modes de réalisation, au niveau de la caméra polarimétrique 18 ou, le cas échéant, au niveau des analyseurs linéaires 30.1, 30.2 des caméras numériques conventionnelles 18.1, 18.2, une lumière polarisée elliptiquement (dans certains cas linéairement) dont l'axe principal de polarisation présente une orientation *αr*(*n*), que l'on appellera par la suite orientation de polarisation reçue *αr*(*n*)*.* L'orientation de polarisation reçue *αr*(*n*) est déterminée pour chaque zone élémentaire de la zone inspectée du récipient 12. En d'autres termes, dans le cas particulier de l'utilisation d'une caméra numérique polarimétrique 18, l'orientation de polarisation reçue *αr*(*n*) est déterminée pour chaque groupe de pixels partiels qui, dans une image maitresse acquise par une caméra polarimétrique, appartiennent au même pixel composite Pc(n).

L'orientation de polarisation reçue *αr*(*n*) est déterminée par référence arbitraire à l'orientation de l'axe de polarisation correspondant à l'une des images numériques partielles de la série, par exemple la première image numérique partielle IP1.m. L'orientation de polarisation reçue *αr*(*n*) est donc l'écart angulaire entre l'axe principal de polarisation de la lumière polarisée elliptiquement reçue au niveau de la caméra polarimétrique 18 ou, le cas échéant, au niveau des analyseurs linéaires 30.1, 30.2 des caméras numériques conventionnelles 18.1, 18.2, et l'axe de polarisation A1 correspondant à la première image numérique partielle IP1.m. Dans l'exemple développé, il est rappelé que la première image numérique partielle IP1.m est une image dont les pixels partiels Pp1.m(n) sont acquis à travers un analyseur de polarisation 30(1,n), 30.1 dont l'axe de polarisation A1 est parallèle à l'axe de polarisation A0 du polariseur linéaire amont 16b du dispositif d'illumination 16. On rappelle aussi que, pour les modes de réalisation du deuxième type et du troisième type de modes de réalisation, une lame à retard quart d'onde 16d, 34 est interposée dans le trajet de la lumière avec son axe rapide qui est lui aussi parallèle à l'axe A0 du polariseur linéaire amont 16b (mais les mêmes formules s'appliquent aussi avec une axe rapide perpendiculaire à l'axe A0, avec seulement une inversion de sens de la rotation).

Pour cette première catégorie de modes de réalisation, le calcul de l'image brute de réfraction s'appuie, pour chaque pixel brut de réfraction Prm(n), sur les paramètres de Stokes qui, pour une polarisation quelconque, peuvent s'exprimer selon la relation suivante, en fonction de l'orientation de polarisation reçue *αr*(*n*), de l'ellipticité de polarisation *ε*(*n*) et du degré de polarisation p(n) de la lumière reçue au niveau de la caméra polarimétrique 18 ou au niveau des analyseurs linéaires 30.1, 30.2 des caméras numériques conventionnelles 18.1, 18.2. Cette relation peut s'écrire :
[Math. 1] $\left[\begin{matrix}S 0 \\ S 1 \\ S 2 \\ S 3\end{matrix}\right] = p \left(n\right) \left[\begin{matrix}1 \\ cos 2 ϵ \left(n\right) cos 2 αr \left(n\right) \\ cos 2 ϵ \left(n\right) sin 2 αr \left(n\right) \\ sin 2 ϵ \left(n\right)\end{matrix}\right]$

Or, de manière connue, ces mêmes paramètres de Stokes peuvent aussi s'écrire, en termes d'intensité de la lumière reçue au niveau de chaque cellule photoélectrique 28(k,n) correspondant à la zone élémentaire :
[Math. 2] $\left[\begin{matrix}S 0 \\ S 1 \\ S 2 \\ S 3\end{matrix}\right] = p \left(n\right) \left[\begin{matrix}Pp 1 . m \left(n\right) + Pp 2 . m \left(n\right) \\ Pp 1 . m \left(n\right) - Pp 2 . m \left(n\right) \\ Pp 3 . m \left(n\right) - Pp 4 . m \left(n\right) \\ \sqrt{S {0}^{2} - S {1}^{2} - S {2}^{2}}\end{matrix}\right]$

À partir de ces deux relations mathématiques, on peut déduire une première formule de calcul d'une valeur de l'orientation de polarisation reçue *αr*(*n*) à partir de seulement les valeurs de deux pixels partiels Ppk.m(n) correspondants dans la première image partielle et la deuxième image partielle de la série Sm considérée, cette formule pouvant s'écrire :
[Math. 3] $αr \left(n\right) = arctan \sqrt{\frac{Pp 2 . m \left(n\right)}{Pp 1 . m \left(n\right)}}$

Dans les cas où, pour une série Sm donnée, on dispose de 4 images numériques partielles correspondant à deux paires (A1, A2) et (A3, A4) d'axes de polarisation orthogonaux, les deux paires étant décalées l'une de l'autre de 45 degrés d'angle, on pourra calculer une valeur de l'orientation de polarisation reçue *αr(n)* à partir de l'arc-tangente d'un ratio entre, d'une part, la différence de valeur de deux pixels partiels (Ppk.m(n)) correspondants dans la première image partielle et la deuxième image partielle, et, d'autre part, la différence de valeur des deux pixels partiels (Ppk.m(n)) correspondants dans la troisième image partielle IP3.m et la quatrième image partielle IP4.m, par exemple en suivant la formule :
[Math. 4] $αr \left(n\right) = \frac{1}{2} atan \left(\frac{Pp 3 . m \left(n\right) - Pp 4 . m \left(n\right)}{Pp 1 . m \left(n\right) - Pp 2 . m \left(n\right)}\right)$

En pratique, ce dernier cas de figure qui s'appuie sur 4 images numériques partielles correspondant à deux paires (A1, A2) et (A3, A4) d'axes de polarisation orthogonaux, les deux paires étant décalées l'une de l'autre de 45 degrés d'angle, permet d'obtenir un calcul de l'orientation de polarisation reçue *αr(n)* qui est moins sensible au bruit et qui présente donc la même sensibilité sur toute la plage de variation de la valeur calculée.

De la sorte, la variation triangulaire de la propriété de polarisation de la lumière incidente émise par la surface émettrice 16c permet d'avoir, pour le calcul de la valeur du pixel brut de réfraction calculé, laquelle valeur est représentative, et est fonction de la réfraction subie par la lumière émergeant de la zone élémentaire, une sensibilité qui est sensiblement égale sur l'étendue de la zone inspectée. Un pixel primaire brut de réfraction est donc une mesure de la réfraction

Dans les deux cas, on peut ainsi, pour cette première catégorie de modes de réalisation, définir l'image brute de réfraction IRm pour la série Sm comme étant une image numérique calculée dont les pixels Prm(n) correspondant chacun à une zone élémentaire du récipient sont définis à partir de l'arc-tangente d'un ratio entre les valeurs de deux pixels partiels Ppk.m(n) correspondants dans la première image partielle et la deuxième image partielle de la série Sm considérée, par exemple en suivant la formule :
[Math. 5] $Prm \left(n\right) = αr \left(n\right)$

Dans une deuxième catégorie de modes de réalisation, qui comprend les modes de réalisation du quatrième type, on récupère, au niveau de la caméra polarimétrique 18 ou au niveau des analyseurs linéaires 30.1, 30.2 des caméras numériques conventionnelles 18.1, une lumière polarisée elliptiquement, avec un déphasage *φr*(*n*) entre les deux composantes orthogonales du vecteur de champ électrique, et avec ce déphasage *φr*(*n*) qui varie. Ce déphasage sera ci-après appelé déphasage de polarisation reçu *φr*(*n*). Le déphasage de polarisation reçu *φr*(*n*) est déterminé pour chaque zone élémentaire de la zone inspectée du récipient 12. En d'autres termes, dans le cas particulier de l'utilisation d'une caméra numérique polarimétrique 18, le déphasage de polarisation reçu *φr*(*n*) est déterminé pour chaque groupe de pixels partiels qui, dans une image maitresse acquise par une caméra polarimétrique 18, appartiennent au même pixel composite Pc(n).

Pour cette deuxième catégorie de modes de réalisation, le calcul de l'image brute de réfraction s'appuie sur les équations suivantes :
[Math. 6] $\left\{\begin{matrix}Pp 1 . m \left(n\right) = I {cos}^{2} \left(φr\left(n\right)\right) \\ Pp 3 . m \left(n\right) = 0.5 I \\ Pp 2 . m \left(n\right) = I {cos}^{2} \left(φr\left(n\right)+\frac{π}{2}\right) \\ Pp 4 . m \left(n\right) = 0.5 I\end{matrix}\right.$

À partir de ces relations mathématiques, on peut déduire une formule de calcul d'une valeur du déphasage de polarisation reçu *φr*(*n*) à partir de seulement les valeurs de deux pixels partiels Ppk.m(n) correspondants dans la première image partielle et la deuxième image partielle de la série Sm considérée, cette formule pouvant s'écrire selon l'une des deux formules ci-dessous :
[Math. 7] $φr \left(n\right) = arctan \sqrt{\frac{Pp 2 . m \left(n\right)}{Pp 1 . m \left(n\right)}}$
[Math. 8] $φr \left(n\right) = arctan \sqrt{\frac{Pp 3 . m \left(n\right) - 0.5 Pp 2 . m \left(n\right)}{Pp 4 . m \left(n\right) - 0.5 Pp 1 . m \left(n\right)}}$

On peut ainsi, pour cette deuxième catégorie de modes de réalisation dans laquelle on récupère, au niveau de la caméra polarimétrique 18 ou, le cas échéant, au niveau des analyseurs linéaires 30.1, 30.2 des caméras numériques conventionnelles 18.1, 18.2, une lumière polarisée elliptiquement, avec un déphasage *φr*(*n*) entre les deux composantes orthogonales du vecteur de champ électrique qui varie, définir l'image brute de réfraction IRm pour la série Sm comme étant une image numérique calculée dont les pixels Prm(n) correspondant chacun à une zone élémentaire du récipient sont définis à partir de l'arc-tangente d'un ratio entre les valeurs de deux pixels partiels Ppk.m(n) correspondants dans la première image partielle et la deuxième image partielle de la série Sm considérée, par exemple en suivant la formule :
[Math. 9] $Prm \left(n\right) = φr \left(n\right)$

Dans tous les cas, l'image brute de réfraction IRm calculée grâce aux procédés et aux dispositifs décrits ci-dessus permet ensuite, par une analyse d'anomalies de réfraction, de détecter des défauts réfractants dans le verre constitutif de la bouteille. L'analyse d'anomalies de réfraction pourra éventuellement permettre la détection de défauts de répartition de matière caractérisés par des zones où l'épaisseur de paroi de verre varie fortement localement, conduisant à des portions de paroi trop minces. L'étape d'analyse de réfraction comprend une étape de calcul informatique sur la base de l'image brute de réfraction.

Par exemple, le procédé peut comporter une étape de calcul informatique de gradient dans l'image primaire brute de réfraction selon la direction primaire D1, respectivement dans l'image secondaire brute de réfraction selon la direction secondaire D2. Alternativement, l'image brute de réfraction peut par exemple être analysée en la comparant par calcul informatique à une image de référence.

Pour l'analyse d'anomalies de réfraction, on peut par exemple calculer informatiquement, à partir de l'image brute de réfraction IRm, (resp. IR1, IR2), une image d'analyse de réfraction IARm (resp. IAR1, IAR2) composée de pixels d'analyse de réfraction Parm(n) (resp. Par1(n) Par2(n)) dont la valeur représente la réfraction c'est-à-dire dépend des angles de déviation des rayons lumineux déviés par les dioptres constitués des surfaces de parois de verre traversées.

Selon une première série de méthodes d'analyse de réfraction, basées sur une dérivation, l'image d'analyse de réfraction est obtenue en appliquant à l'image brute de réfraction IR1 (respectivement IR2) un filtre passe bas, ou un filtre gradient de type Sobel ou Prewitt, orientés dans la direction de variation respectivement D1, respectivement D2. Puisque l'écart de valeur entre des pixels bruts de réfraction voisins Pr1(n) - Pr1(n') (resp. Pr2(n) - Pr2(n')) est proportionnel à la déviation des rayons lumineux correspondant traversant le récipient, alors dans l'image d'analyse de réfraction IAR1 (respectivement IAR2) obtenue, des valeurs élevées de pixels d'analyse de réfraction Par1(n) (resp. Par2(n)) correspondent à des réfractions fortes, des valeurs moyennes correspondent à des réfractions moyennes, des valeurs faibles correspondent à des réfractions faibles. Des valeurs de pixels d'analyse de réfraction Par(n) (resp. Par2(n)) élevées correspondent donc à des anomalies de réfraction, donc des défauts réfractants, par exemple à des variations de pente localement très fortes pour les surfaces de la ou les parois de verre correspondant aux pixels de réfraction de valeur élevée.

Une deuxième série de méthodes d'analyse de réfraction est basée sur une comparaison par rapport à une variation de référence attendue, correspondant à un récipient sans défaut. On peut calculer des valeurs de pixels de réfraction théoriques Ptm(n), correspondant à un récipient sans défaut, et obtenir une image d'analyse de réfraction dont chaque pixel d'analyse de réfraction Parm(n) résulte de la comparaison deux à deux, par exemple par soustraction, du pixel brut de réfraction Prm(n) avec la valeur du pixel de réfraction théorique Ptm(n) correspondant. Alternativement les valeurs des pixels théoriques Ptm(n) peuvent être calculées en analysant les pixels bruts de réfraction Prm(n) dans la direction D1 (respectivement D2) pour déterminer par régression une fonction triangulaire optimale. Lorsque les valeurs des pixels bruts de réfraction calculés ne correspondent pas aux valeurs des pixels théoriques, la différence dépend directement et proportionnellement de toute anomalie ou écart de réfraction. On peut alors dans ce cas analyser l'image d'analyse de réfraction IAR1, IAR2 non seulement en appliquant par calcul informatique une dérivation ou un gradient, à laquelle on applique un seuil pour détecter des défauts réfractants, mais aussi analyser les basses fréquences spatiales afin de déterminer des régions de variation de repartions de verre.

Dans cette deuxième série de méthodes d'analyse de réfraction, appliquées à une image brute de réfraction IR2 correspondant à une direction D2 perpendiculaire à l'axe A12 du récipient, il peut être avantageux de prendre en compte, notamment dans la direction D2 (supposée ici perpendiculaire à un axe de symétrie de révolution A12 du récipient 12), la réfraction prévisible à partir de la forme circulaire de la section des récipients cylindriques correspondant au modèle idéal d'un cylindre d'épaisseur constante.

On peut utiliser d'autres méthodes pour obtenir l'image d'analyse de réfraction, telles que des méthodes analogues au dépliement de phase par calcul informatique, telles qu'appliquées en déflectométrie.

Pour obtenir une sensibilité donnée de détection de défauts, on devra adapter :
- la période de la fonction de variation de la propriété de polarisation d'intérêt émise ;
- la résolution de la source de lumière ;
- la résolution de la caméra numérique.

Ceci signifie que l'on devra adapter à la fois la résolution des images partielles délivrées par la ou les caméras numériques, mais aussi adapter l'échelle à laquelle sont vues, dans l'image partielle, d'une part une période, primaire ou secondaire, de variation de la propriété de polarisation d'intérêt émise dans la surface émettrice et d'autre part un éventuel défaut réfractant dans le matériau de la zone inspectée du récipient.

Pour cela, il est apparu optimal qu'une période primaire T1, respectivement secondaire T2, de variation de la propriété de polarisation d'intérêt émise soit vue par le capteur photoélectrique 22 bidimensionnel de la ou des caméras numériques, avec une résolution, selon la direction primaire D1, respectivement secondaire D2, d'au moins 15 pixels partiels, par exemple dans la gamme allant de 15 à 500 pixels partiels, d'une même image numérique partielle.

De préférence, la zone inspectée du récipient 12 est vue par le capteur photoélectrique 22 bidimensionnel avec une résolution, selon la direction primaire D1, respectivement secondaire D2, d'au moins 5 pixels partiels d'une même image numérique partielle par millimètre sur le récipient.

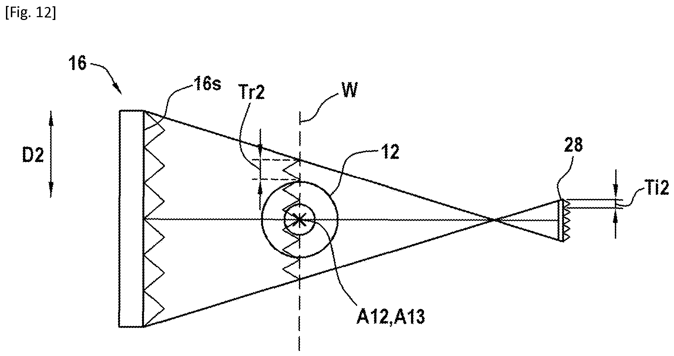

Pour prendre en comporte l'effet de contraste de la variation de la propriété de polarisation d'intérêt émise sur les défauts réfractants, le dimensionnement des périodes se considère au niveau du récipient 12 inspecté, donc par exemple au niveau de son axe A12. Ainsi, on définit par convention, comme illustré figures 11 et 12, un plan de travail W contenant l'axe A13 de l'emplacement d'inspection 13 et orthogonal à un plan définit par l'axe A13 et l'axe optique de la caméra numérique, et l'on peut alors représenter, comme illustré sur les figures 11 et 12 :
- les périodes T1 et T2 de variation de la fonction de variation de la propriété de polarisation d'intérêt émise au niveau de la surface émettrice 16s selon les directions respectivement primaire D1 et secondaire D2, exprimées en unités de distance, par exemple en millimètres ;
- les périodes réduites Tr1 et Tr2 correspondant respectivement aux périodes T1 et T2, dans le plan de travail W contenant l'axe A13, par une homothétie de centre O, O étant le centre optique de l'objectif 24 de la caméra numérique 18,
- les périodes images Ti1 et Ti2 de variation de la propriété de polarisation reçue, considérée dans l'image optique, donc dans le plan image, donc sur le capteur photoélectrique 22 bidimensionnel, selon les directions respectivement primaire D1 et secondaire D2, exprimées en nombre de pixels sur le capteur numérique 22.

De préférence, les périodes images Ti1 et Ti2 de variation dans l'image de polarisation reçue IR1 respectivement IR2, valent entre 15 et 500 pixels

Pour une résolution de la caméra de 5 pixels par millimètre sur le plan de travail W de l'emplacement d'inspection 13, et une période image Ti1 et Ti2 de variation dans l'image de polarisation reçue IR1 respectivement IR2 valant 15 pixels, les périodes réduites Tr1 et Tr2 valent 3 millimètres.

Pour une résolution de la caméra de 10 pixels par millimètre sur le plan de travail W de l'emplacement d'inspection 13, et une période image Ti1 et Ti2 de variation dans l'image de polarisation reçue IR1 respectivement IR2 valant 500 pixels, les périodes réduites Tr1 et Tr2 valent 50 millimètres.

Au total, de préférence, les périodes réduites Tr1 et Tr2 valent entre 3 et 50 millimètres sur le plan de travail W de l'emplacement d'inspection 13, la valeur étant choisie notamment en fonction de la taille des défauts réfractants que l'on souhaite pouvoir détecter.

La résolution de la source est telle que la propriété de polarisation d'intérêt émise par la surface 16s varie pour chaque demi-période T1c, T1d (respectivement T2c, T2d) entre une valeur minimale P1min, (resp. P2min) et une valeur maximale P1max (resp. P2max) en passant de préférence par au moins 16 valeurs intermédiaires Pmi croissantes (respectivement décroissantes) par pas constant (ou alternance de 2 pas constants différents). Lorsque la consigne de chaque cellule est un mot de 8 bits par exemple, sur la demi-période T1c la consigne varie par exemple de 0 pour P1min à la consigne 252 pour P1max par 64 pas de valeur 4.

Le capteur photoélectrique 22 bidimensionnel et l'objectif 24 sont par exemple choisis pour que la résolution de chaque image numérique partielle soit de 5 pixels par millimètres sur le plan W donc au moins sensiblement 5 pixels par millimètres sur le récipient 12. Ainsi la résolution des images brutes de réfraction IRMm sont d'au moins sensiblement 5 pixels bruts de réfraction par millimètres sur le récipient 12.

Les systèmes décrits ci-dessus pourront avantageusement être mis en œuvre pour acquérir, en plus des images qui ont été décrites ci-dessus, au moins une image maitresse complémentaire IM' qui permettra de calculer une image de stress de la zone inspectée et/ou une image d'intensité pour la zone inspectée, ceci afin d'évaluer la présence de contraintes mécaniques résiduelles (stress), internes au matériau du récipient 12. On rappelle plus précisément, qu'un défaut de stress est généralement constitué d'un corps étranger créant des contraintes mécaniques internes dans le matériau de verre, que ces contraintes rendent le matériau biréfringent, et que cette biréfringence se manifeste par le déphasage de polarisation qu'elle induit dans une lumière polarisée qui traverse ce matériau. L'image de stress est une image bidimensionnelle calculée à partir d'une image maitresse complémentaire IM', et dans laquelle chaque pixel est un pixel de déphasage de polarisation Pd(n), c'est-à-dire une mesure comme propriété de polarisation de la lumière émergente du récipient, du déphasage entre les 2 composantes orthogonales du vecteur champ électrique de la lumière. Pour l'acquisition de cette image maîtresse complémentaire, le dispositif d'illumination 16 est commandé de telle sorte que la surface émettrice 16s émette une lumière incidente polarisée qui soit uniforme en termes de polarisation sur toute l'étendue de la portion d'inspection. Ainsi,toute modification de l'état de polarisation de la lumière émergente du récipient sera nécessairement due à un effet de biréfringence du matériau traversé, donc les anomalies de la propriété de polarisation mesurée seront liées à des défauts de stress dans le matériau, et pas à la réfraction. Pour cela, il suffira de commander la matrice bidimensionnelle 16c de cellules à cristaux liquides de telle sorte que la lumière polarisée issue de chacune des cellules à cristaux liquides présente une polarisation identique pour toutes les zones émettrices élémentaires 16s(i,j) de la portion d'inspection.

A partir de l'image maîtresse complémentaire IM' ainsi acquise, on pourra procéder au calcul informatique d'au moins une image de stress pour la zone inspectée du récipient. Cette image de stress est obtenue, en calculant informatiquement, pour les zones élémentaires de la zone inspectée du récipient, un pixel de déphasage Pd(n) qui correspond à chaque zone élémentaire de la zone inspectée du récipient (donc correspondant à un pixel composite Pc(n) dans le cas d'utilisation d'une caméra numérique polarimétrique 18) et dont la valeur est représentative d'un déphasage de polarisation *φ*(*n*), induit, par une contrainte mécanique résiduelle située dans la zone élémentaire du récipient correspondant au pixel composite Pc(n), dans la lumière émergente émanant de cette zone élémentaire du récipient. On comprend que la valeur d'un pixel de déphasage Pd(n) induit est donc une image de l'intensité des contraintes mécaniques résiduelles dans le matériau de la zone élémentaire du récipient.

Pour ce faire, une solution simple, lorsque, comme sur la figure 1, le système 10 ne comprend pas de lame à retard quart d'onde sur la trajectoire de la lumière, est de prévoir que les cellules à cristaux liquides sont maintenues au repos, avec une commande en tension nulle. Lorsque la technologie des cellules à cristaux liquide est de type « TN », les cellules provoquent généralement au repos une rotation de la direction de l'axe de polarisation linéaire de 90°, donc un décalage angulaire de l'orientation θs(i,j) = 90° par rapport à l'axe de polarisation A0 défini par le polariseur linéaire amont. Ainsi la lumière émise est polarisée linéairement à 90° de la direction de l'axe de polarisation A0 du polariseur linéaire amont sur toute la portion d'inspection de la surface émettrice 16s. Lorsque la technologie des cellules à cristaux liquide permet de commander un déphasage *φ*16*s*(*i, j*) entre les deux composantes orthogonales du vecteur de champ électrique de la lumière, comme par exemple avec une technologie de type « ECB », on la commande à la tension maximale pour supprimer la biréfringence, et comme il n'y a pas de biréfringence créée, donc pas de déphasage, la lumière émise est polarisée linéairement dans la direction de l'axe de polarisation A0 du polariseur linéaire amont 16b sur toute la portion d'inspection de la surface émettrice 16s. Dans les deux cas la lumière incidente sur le récipient 12 est, en tous points, une lumière polarisée linéairement avec un axe de polarisation commun. De la même manière avec un système comprenant une lame à retard quart d'onde 16d dans le dispositif d'illumination 16, cette lame à retard quart d'onde 16d ayant un axe rapide parallèle à l'axe de polarisation A0 défini par le polariseur linéaire amont 16b, par exemple tel qu'illustré à la Figure 2, elle laisse la lumière émise polarisée linéairement sur toute la portion d'inspection de la surface émettrice 16s parallèlement ou orthogonalement à la direction de polarisation du polariseur linéaire amont 16b.

Dans ce cas, on pourra calculer une image de déphasage dans laquelle le calcul de chaque pixel de déphasage Pd(n) correspondant à une zone élémentaire du récipient est effectué à partir de la valeur d'au moins le pixel partiel Pp'2(n) qui correspond à la zone élémentaire du récipient et qui figure dans la première image partielle complémentaire IP'2 associée à l'analyseur linéaire ayant son axe de polarisation A2 perpendiculaire à l'axe de polarisation A0 de la lumière incidente. Par exemple chaque pixel de déphasage Pd(n) vaut la valeur du pixel partiel Pp'2(n), avec donc : $Pd \left(n\right) = Pp ′ 2 \left(n\right) .$

La figure 3 illustre une configuration que l'on peut utiliser pour mettre en œuvre une autre modalité de création de l'image de stress qui consiste à utiliser une lumière incidente polarisée circulairement et à l'analyser en filtrant la lumière émergente du récipient 12 à l'aide de la lame retard quart d'onde 34. On utilise la technologie des cellules à cristaux liquide permettant de contrôler la biréfringence des cellules afin de créer un déphasage entre les deux composantes orthogonales du vecteur de champ électrique de la lumière, par exemple avec la technologie de type « ECB ». On commande la matrice bidimensionnelle 16c de cellules à cristaux liquides de telle sorte que la lumière polarisée issue de chacune des cellules à cristaux liquides possède un même déphasage *φ*16c(*i, j*) entre les deux composantes orthogonales du vecteur de champ électrique de la lumière issue de la cellule à cristaux liquides, identique pour toutes les cellules. Les cellules ECB ont une biréfringence variable selon la commande et se comportent comme une lame retard dont l'axe rapide est à 45° de la direction de l'axe de polarisation linéaire amont A0 et dont le retard peut être modifié par la tension appliquée à chaque cellule, pour correspondre à un quart de longueur d'onde, ce qui induit un déphasage *φ*16*c*(*i, j*) de 90 degrés d'angle. Puisque l'axe rapide de la biréfringence est à 45° de la direction de polarisation linéaire amont A0, la lumière émise est polarisée circulairement sur toute la portion d'inspection de la surface émettrice 16s.

On décrit le cas où le système comprend une lame à retard quart d'onde 34 en aval de l'emplacement d'inspection 13, cette lame à retard quart d'onde 34 ayant un axe rapide parallèle à l'axe de polarisation A0 défini par le polariseur linéaire amont 16b, comme dans l'exemple de la Figure 3 qui met en plus en œuvre une caméra polarimétrique. L'axe A1 étant parallèle à l'axe A0 de polarisation du polariseur linéaire amont 16b, la lame à retard quart d'onde 34 a un axe rapide parallèle à l'axe A1 de polarisation des filtres polarisants individuels 30(n,1), donc à moins 45 degrés d'angle de l'axe A3 de polarisation du filtre polarisant individuels 30(n,3), à plus 45 degrés d'angle de l'axe A4 de polarisation du filtre polarisant individuels 30(n,4). Dans un tel cas, en l'absence de modification de la polarisation de la lumière incidente par un défaut de stress, la lumière transmise par la lame la lame à retard quart d'onde 34 devient polarisée linéairement selon une direction de polarisation linéaire aval orthogonale à l'axe de polarisation A4 et parallèle à l'axe de polarisation A3, si bien que le pixel partiel Pp'4(n) est nul, c'est-à-dire qu'il y a extinction. En présence d'une modification de la polarisation de la lumière incidente par un défaut de stress, la lumière transmise par la lame à retard quart d'onde 34 devient polarisée linéairement selon une direction de polarisation linéaire aval non orthogonale à l'axe de polarisation A4, si bien que le pixel partiel Pp'4(n) est normalement non nul avec une valeur qui dépend de la contrainte.

Dans ce cas, le calcul informatique de chaque pixel de déphasage Pd(n) correspondant à une zone élémentaire du récipient 12 est effectué à partir de la valeur d'au moins le pixel partiel Pp'4(n), et éventuellement aussi à partir de la valeur du pixel partiel Pp'3(n) qui correspondent à la zone élémentaire du récipient et qui figurent dans les images partielles complémentaires IP'4, IP'3 associées à l'analyseur linéaire 30(n,4), 30(n, 3) ayant leur axe de polarisation à 45 degré d'angle de l'axe rapide de lame à retard quart d'onde 34, donc à 45 degré d'angle de l'axe de polarisation A0 de la lumière incidente. De préférence le calcul informatique de chaque pixel de déphasage Pd(n) correspondant à une zone élémentaire du récipient est effectué à partir de la valeur des deux pixels partiels Pp'4(n) et Pp'3(n) qui correspondent à la zone élémentaire du récipient et qui figurent dans les deux image partielles complémentaire IP'4, IP'3 associées chacune aux analyseurs linéaires ayant leur axes de polarisation à 45 degrés d'angle de l'axe rapide de lame à retard quart d'onde 34, dans un sens ou dans l'autre. Dans ces conditions, une première formule de calcul d'une valeur de chaque pixel de déphasage Pd(n) correspondant à une zone élémentaire du récipient peut s'écrire :
[Math. 10] $Pd \left(n\right) = 2 arctan \sqrt{\frac{Pp ′ 4 . m \left(n\right)}{Pp ′ 3 . m \left(n\right)}}$

Dans les mêmes conditions, une deuxième formule de calcul d'une valeur de chaque pixel de déphasage Pd(n) correspondant à une zone élémentaire du récipient peut s'écrire :
[Math. 11] $Pd \left(n\right) = arcos \left(Pp′3\left(n\right)-Pp′4\left(n\right)\right)$

Dans le cas où on a une lumière émise polarisée circulairement et une lame retard quart d'onde devant l'objectif de la caméra polarimétrique, avec le calcul selon l'équation Math 11 ci-dessus, on a une mesure isotrope des défauts de stress avec une sensibilité qui dépend la force des contraintes mécaniques internes. L'image de stress bidimensionnelle contenant les pixels de déphasage Pd(n) peut être analysée par tout moyen connu de traitement d'image, tels que des filtres passe haut, des gradients, des comparaisons de pixels avec la moyenne des pixels voisins dans l'image stress, ou des comparaisons des pixels de déphasage Pd(n) à une valeur de déphasage de référence correspondant à un maximum de contrainte toléré.

Quelles que soient les propriétés de polarisation de la lumière émise, on peut calculer à partir d'au moins deux images partielles ou d'une image maitresse, une image d'intensité It, dans laquelle la valeur de chaque pixel d'intensité Pt(n), représente uniquement l'intensité de lumière émergeant d'une zone élémentaire de la zone inspectée du récipient et donc représente principalement l'absorption de la lumière ayant traversé au moins une paroi du récipient 12. La valeur de chaque pixel d'intensité Pt(n) est calculée comme une valeur moyennée de la valeur d'au moins deux pixels partiels Pp'1(n), Pp'2(n) correspondants à la même zone élémentaire du récipient dans au moins une paire de deux images numériques partielles complémentaires pour lesquelles les axes de polarisation A1, A2 des analyseurs linéaires sont orthogonaux entre eux. La détection de toute anomalie locale d'intensité permet de détecter principalement des défauts absorbant la lumière. Ainsi, la valeur de chaque pixel d'intensité Pt(n) de l'image d'intensité It peut donc être calculée par exemple sous la forme : $Pt \left(n\right) = Pp ′ 1 \left(n\right) + Pp ′ 2 \left(n\right) .$

Si on utilise une caméra numérique polarimétrique 18, on pourra à partir d'une unique image maîtresse IM ou IM', disposer de 4 images numériques partielles correspondant à deux paires (A1, A2) et (A3, A4) d'axes de polarisation orthogonaux, les deux paires étant décalées l'une de l'autre de 45 degrés d'angle. Dans ce cas, on pourra aussi calculer la valeur de chaque pixel d'intensité Pt(n) de l'image d'intensité en suivant l'une ou l'autre des formules suivantes : $Pt \left(n\right) = Pp 3 \left(n\right) + Pp 4 \left(n\right) , ou Pt \left(n\right) = Pp ′ 3 \left(n\right) + Pp ′ 4 \left(n\right) ,$ ou $Pt \left(n\right) = Pp 1 \left(n\right) + Pp 2 \left(n\right) + Pp 3 \left(n\right) + Pp 4 \left(n\right) ,$ ou $Pt \left(n\right) = Pp ′ 1 \left(n\right) + Pp ′ 2 \left(n\right) + Pp ′ 3 \left(n\right) + Pp ′ 4 \left(n\right)$

Dans le présent texte, une valeur moyennée peut être par exemple une moyenne arithmétique ou autre, pondérée ou pas, etc.... Par exemple, comme dans les exemples donnés ci-dessus, une valeur moyennée de deux valeurs peut être la somme de ces deux valeurs.

L'image d'intensité It peut être calculée quelles que soient les propriétés de polarisation de la lumière émise, donc avec une variation de propriété dans la direction D1 ou dans la direction D2 ou sans variation de la propriété comme prévu pour obtenir l'image de stress. Elle peut être calculée à partir de toute image maîtresse IM ou image maîtresse complémentaire IM'.

L'image d'intensité It contenant les pixels d'intensité Pt(n) peut être analysée par tout moyen connu de traitement d'image, tels que décrits ci-dessus (par exemple des filtres spatiaux passe-haut, des gradients, des comparaisons de pixels avec la moyenne des pixels voisins dans l'image d'intensité, etc...) pour détecter notamment des défauts absorbant la lumière.

Autrement dit, on peut :
- commander la source de lumière pour que la surface émettrice 16s produise une lumière avec une variation de propriété de polarisation selon la direction D1,
- acquérir une image maitresse IM,
- calculer une image brute de réfraction IR1 et en déduire une image d'analyse de réfraction IAR1 pour identifier des défauts réfractants ;
- sur la base de la même image maitresse IM, calculer une image d'intensité It pour identifier des défauts d'absorption.

Par ailleurs, pour une zone inspectée donnée d'un récipient donné, l'image de déphasage ID et l'image d'intensité It peuvent être calculées à partir d'une même unique image maîtresse complémentaire IM' acquise par une caméra numérique polarimétrique 18. Cette image maîtresse complémentaire IM' peut être acquise avec la même caméra numérique polarimétrique 18, et avec le même dispositif d'illumination 16 que celui mis en œuvre pour acquérir l'image maîtresse IM utilisée pour calculer l'image brute de réfraction IRm telle que définie plus haut. Cependant, cette image maîtresse complémentaire IM' est acquise à un instant qui est différent de l'instant d'acquisition de l'image maîtresse IM utilisée pour calculer l'image brute de réfraction IRm avec la même caméra numérique polarimétrique 18, et avec le même dispositif d'illumination 16. Entre les deux instants d'acquisition, la matrice bidimensionnelle 16c de cellules à cristaux liquides est commandée pour basculer de l'une vers l'autre de deux configurations parmi :
- une configuration d'acquisition de réfraction dans laquelle, sur la portion d'inspection primaire de la surface émettrice, on obtient, selon une direction primaire D1 de la surface émettrice, une variation triangulaire du déphasage *φ*16*c*(*i, j*) induit, dans une lumière initialement polarisée linéairement, par la cellule à cristaux liquides 16c(i,j) qu'elle traverse, en fonction de la position de la zone émettrice élémentaire selon la direction primaire D1, cette variation triangulaire présentant plusieurs périodes primaires successives avec une telle variation triangulaire de la propriété de polarisation en fonction de la position de la zone émettrice élémentaire 16s(i,j) selon la direction primaire D1.
- et une configuration d'acquisition de stress dans laquelle on obtient, pour toutes les cellules à cristaux liquides 16c(i,j) de la matrice bidimensionnelle 16c, une valeur commune du déphasage *φ*16*c*(*i, j*) induit, dans une lumière initialement polarisée linéairement, par la cellule à cristaux liquides 16c(i,j) qu'elle traverse, lors de l'acquisition de la ou des images complémentaires.

Ainsi, avec un même système 10 comprenant une unique caméra polarimétrique et un unique dispositif d'illumination, on peut calculer au moins trois images distinctes contenant des informations respectivement relatives :
- à la réfraction induite par le récipient dans la lumière émergeant de chaque zone élémentaire de la zone inspectée,
- à l'absorption induite par le récipient dans la lumière émergeant de chaque zone élémentaire de la zone inspectée,
- aux contraintes mécaniques internes dans le matériau du récipient, pour chaque zone élémentaire de la zone inspectée.

Avec un système 10 ayant un unique dispositif d'illumination comprenant une matrice bidimensionnelle 16c de cellules à cristaux liquides et une unique caméra polarimétrique, on peut acquérir deux ou trois images maîtresses et calculer trois ou quatre images parmi :
- une image de réfraction selon une direction D1 ;
- une image d'intensité ;
- une image de réfraction selon une direction D2 différente de D1, par exemple perpendiculaire à D1 ;
- une image de stress.

Dans le présent texte, donc dans tous les calculs des pixels utilisés dans cette invention, les valeurs de pixels calculés peuvent évidemment être codées en virgule flottante ou bien normalisées pour être ramenées à des valeurs numériques par exemple sur 8 ou 16 ou 24 bits.

## Revendications

1. Procédé opto-informatique d'inspection en lumière traversante d'un récipient (12) en verre en déplacement selon une trajectoire de déplacement (T), dans lequel :
- le procédé comporte l'illumination du récipient (12) par un dispositif d'illumination (16) comprenant au moins une surface émettrice (16s), bidimensionnelle, qui est agencée sur un côté de la trajectoire de déplacement et qui est constituée de zones émettrices élémentaires émettant chacune une lumière émise polarisée ayant une propriété de polarisation d'intérêt émise qui varie suivant une loi de variation périodique en fonction de la position de la zone émettrice élémentaire dans la surface émettrice ;
- le procédé comporte l'observation du récipient (12), par au moins une caméra numérique (18, 18.1, 18.2) ayant un capteur photoélectrique (22) bidimensionnel comprenant des éléments photoélectriques qui comprennent chacun une cellule photoélectrique correspondant à un pixel dans une image acquise par la caméra numérique, l'au moins une caméra numérique (18, 18.1, 18.2) étant située, par rapport à la trajectoire de déplacement (T), du côté opposé à celui du dispositif d'illumination (16), de manière à recueillir, par l'au moins une caméra numérique, une lumière émergente émanant du récipient (12) et ayant traversé au moins une épaisseur de paroi du récipient ;
- le procédé comporte l'acquisition, avec l'au moins une caméra (18, 18.1, 18.2), d'images numériques partielles (Ipk.m), contenant chacune une image d'une même zone inspectée du récipient (12), chaque image numérique partielle (Ipk.m) ayant N pixels partiels (Ppk.m(n)) dont chacun est l'image d'une zone élémentaire correspondante du récipient (12), et chaque image numérique partielle étant acquise avec interposition, entre le récipient et les cellules photoélectriques de l'au moins une caméra, d'un analyseur linéaire (30(n,k) ; 30.1, 30.2) présentant un axe de polarisation (Ak) donné pour une image numérique partielle (Ipk.m) ;
- l'acquisition comporte l'acquisition d'au moins une série (S1, S2, Sm) comprenant au moins une première image numérique partielle (Ip1.1, Ip1.2, Ip1.m) et une deuxième image numérique partielle (Ip2.1, Ip2.2, Ip2.m), pour lesquelles les axes de polarisation (Ak) des analyseurs linéaires sont distincts entre eux, les images numériques partielles (Ipk.m) d'une même série (Sm) étant superposables de telle sorte que chaque zone élémentaire de la zone inspectée du récipient (12) est imagée par un pixel partiel (Ppk.m(n)) correspondant dans chacune des images numériques partielles (IPk.m) de la série (Sm) ;
- pour une série primaire (S1), les images numériques partielles (Ipk.1) de la série primaire (S1) contiennent chacune, en arrière-plan, l'image d'une même portion d'inspection primaire de la surface émettrice (16s), la portion d'inspection primaire étant observée à travers le récipient par la caméra numérique (18, 18.1, 18.2), et, sur la portion d'inspection primaire de la surface émettrice (16s), la loi de variation périodique de la propriété de polarisation d'intérêt émise présentant, selon une direction primaire (D1), une variation périodique primaire, et présentant plusieurs périodes primaires (T1) sur l'étendue de la portion d'inspection primaire selon la direction primaire (D1) ;
**caractérisé en ce que,** sur une période primaire (T1), la propriété de polarisation d'intérêt émise des lumières émises par les zones émettrices élémentaires de la portion d'inspection primaire de la surface émettrice (16s) suit une variation triangulaire en fonction de la position de la zone émettrice élémentaire selon la direction primaire (D1),
et **en ce que** le procédé comporte le calcul informatique d'au moins une image primaire brute de réfraction (IR1), à partir des images numériques partielles de la série primaire, en calculant, pour chacune des zones élémentaires d'une zone inspectée du récipient (12), un pixel primaire brut de réfraction (Pr1(n)) dont la valeur est représentative de la réfraction subie par la lumière ayant traversé au moins une épaisseur de paroi du récipient (12) et émergeant de la zone élémentaire, à partir de la valeur des pixels partiels (Ppk.1(n)) correspondants qui sont l'image de la zone élémentaire dans les images numériques partielles (IPk.1) de la série primaire.

2. Procédé selon la revendication 1, **caractérisé en ce que**, pour la même zone inspectée du même récipient (12), le procédé comporte l'acquisition, pour la série primaire (S1), d'une troisième image numérique partielle (IP3.1) et d'une quatrième image numérique partielle (IP4.1) pour lesquelles les axes de polarisation (A3, A4) des analyseurs linéaires (30(n,k) sont distincts entre eux et distincts des axes de polarisation (A1, A2) des analyseurs linéaires (30(n,k)) pour la première image numérique partielle (IP1.1) et la deuxième image numérique partielle (IP2.1) de la série primaire (S1), de préférence orthogonaux entre eux et décalés de 45 degrés d'angle des axes de polarisation (A1, A2) des analyseurs linéaires pour la première image numérique partielle (IP1.1) et la deuxième image numérique partielle (IP2.1) de la série primaire (S1).

3. Procédé selon l'une quelconque des revendications 1 ou 2, **caractérisé en ce que**, pour la même zone inspectée du même récipient (12), l'acquisition comporte l'acquisition d'au moins une série secondaire (S2) d'images numériques partielles (Ipk.2) ;
- **en ce que**, pour la série secondaire (S2), les images numériques partielles (Ipk.2) contiennent chacune, en arrière-plan, l'image d'une même portion d'inspection secondaire de la surface émettrice (16s), la portion d'inspection secondaire étant observée à travers le récipient (12) par la caméra numérique (18, 18.1, 18.2), et, sur la portion d'inspection secondaire de la surface émettrice, la loi de variation périodique de la propriété de polarisation d'intérêt émise présentant, selon une direction secondaire (D2) de la surface émettrice, différente de la direction primaire (D1), une variation périodique secondaire, et présentant plusieurs périodes secondaires (T2) sur l'étendue de la portion d'inspection secondaire selon la direction secondaire ;
- **en ce que**, sur une période secondaire (T2), la propriété de polarisation d'intérêt émise des lumières émises par les zones émettrices élémentaires de la portion d'inspection secondaire de la surface émettrice suit une variation triangulaire en fonction de la position de la zone émettrice élémentaire selon la direction secondaire (D2),
et **en ce que** le procédé comporte le calcul informatique d'au moins une image secondaire brute de réfraction (IR2), à partir des images numériques partielles de la série secondaire (S2), en calculant, pour chacune des zones élémentaires d'une zone inspectée du récipient (12), un pixel secondaire brut de réfraction (Pr2(n)) dont la valeur est représentative de la réfraction subie par la lumière ayant traversé au moins une épaisseur de paroi du récipient (12) et émergeant de la zone élémentaire, à partir de la valeur des pixels partiels (Ppk.2(n)) correspondants qui sont l'image de la zone élémentaire dans les images numériques partielles (IPk.2) de la série secondaire (S2).

4. Procédé selon l'une quelconque des revendications précédentes, **caractérisé en ce qu'**il comprend le calcul à partir d'au moins deux images numériques partielles (IPk.m) d'une image d'intensité It dans laquelle la valeur de chaque pixel d'intensité (Pt(n)) est calculée comme une valeur moyennée de la valeur d'au moins deux pixels partiels (Pp'1(n)) et (Pp'2(n)) correspondants à la même zone élémentaire ou **en ce qu'**il comprend l'acquisition d'au moins une image maitresse complémentaire (IM') de sorte à calculer une image de stress de la zone inspectée et/ou une image d'intensité pour la zone inspectée.

5. Procédé selon l'une quelconque des revendications précédentes, **caractérisé en ce que** l'au moins une caméra numérique est une caméra numérique polarimétrique (18), ayant un capteur photoélectrique (22) bidimensionnel comprenant des éléments photoélectriques (26(n,1)) qui comprennent chacun une cellule photoélectrique (28(n,k)) devant laquelle est agencé un analyseur linéaire individuel (30(n,k)) associé à la cellule photoélectrique (28(n,k)) de cet élément photoélectrique (26(n,k), le capteur photoélectrique (22) comportant un nombre N de groupes distincts (26(n)) de 4 éléments photoélectriques (26(n,k )) contigus dont les analyseurs linéaires individuels (30(n,k )) ont chacun un axe de polarisation (Ak), les quatre axes de polarisation (Ak) d'un groupe (26(n)) donné de 4 éléments photoélectriques (26(n,k)) formant deux paires ((A1, A2), (A3, A4)) d'axes de polarisation orthogonaux, les deux paires étant décalées l'une de l'autre de 45 degrés d'angle ;
- et **en ce que** l'acquisition des 4 images numériques partielles (Ipk.m) d'une même série (Sm) est effectuée, avec le capteur photoélectrique (22) de la caméra polarimétrique (18), par l'acquisition d'une image numérique maîtresse (IM.m) contenant une image du récipient (12), l'image numérique maîtresse (IM.m) ayant un nombre 4*N de pixels maîtres regroupés en N pixels composites correspondant chacun à un groupe d'éléments photoélectriques contigus, chaque pixel composite ayant 4 pixels maitres correspondant chacun à un des éléments (26(n,k)) du groupe (26(n)) d'éléments photoélectriques contigus correspondant à ce pixel composite, et chaque image numérique maîtresse (IM.m) comprenant les 4 images numériques partielles (IPk.m) distinctes ayant chacune N pixels partiels (Ppk.m(n)), les pixels partiels (Ppk.m(n)) de chacune des images numériques partielles (IPk.m) correspondant, pour une image numérique partielle (IPk.m) donnée, aux éléments photoélectriques (26(n,k)) du capteur photoélectrique (22) dont les analyseurs linéaires individuels (30(n,k)) présentent un axe de polarisation (Ak) commun pour cette image numérique partielle (IPk.m).

6. Procédé selon l'une quelconque des revendications précédentes, **caractérisé en ce que** la variation triangulaire est telle que chaque période primaire (T1) est divisée en uniquement deux parties (T1c, T1d), une partie croissante (T1c) et une partie décroissante, **en ce que**, dans la partie croissante, la propriété de polarisation d'intérêt émise est une fonction linéaire croissante de la position de la zone émettrice élémentaire selon la direction primaire (D1), la propriété de polarisation d'intérêt émise croissant d'une valeur inférieure primaire (P1min) à une valeur supérieure primaire (P1max), et **en ce que**, dans la partie décroissante (T1d), la propriété de polarisation d'intérêt émise est une fonction linéaire décroissante de la position de la zone émettrice élémentaire selon la direction primaire (D1), la propriété de polarisation d'intérêt émise décroissant de la valeur supérieure primaire (P1max) à la valeur inférieure primaire (P1min).

7. Procédé selon l'une quelconque des revendications précédentes, **caractérisé en ce que** la portion d'inspection de la surface émettrice (16s) est constituée de zones émettrices élémentaires émettant chacune une lumière émise polarisée elliptiquement ayant un rapport d'ellipticité inférieur ou égal à 0,7, et **en ce que** la propriété de polarisation d'intérêt émise de la lumière émise par une zone émettrice élémentaire est l'orientation (θs(*i*, *j*)) de l'axe principal de polarisation de la lumière émise par ladite zone émettrice élémentaire.

8. Procédé selon l'une quelconque des revendications 1 à 6, **caractérisé en ce que** la portion d'inspection primaire de la surface émettrice (16s) est constituée de zone émettrices élémentaires émettant chacune une lumière émise polarisée selon une polarisation elliptique ayant un déphasage (*φ*16*s*(*i, j*)) entre les deux composantes orthogonales du vecteur de champ électrique de la lumière émise polarisée, et **en ce que** la propriété de polarisation d'intérêt émise correspond au déphasage (*φ*16*s*(*i*, *j*)) entre les deux composantes orthogonales du vecteur de champ électrique de la lumière émise polarisée.

9. Procédé selon l'une quelconque des revendications précédentes, **caractérisé en ce que** le dispositif d'illumination (16) comporte, dans le sens de propagation de la lumière, une source bidimensionnelle primaire (16a) de lumière diffuse, un polariseur linéaire amont (16b) ayant un axe de polarisation (A0), et une matrice bidimensionnelle (16c) de cellules à cristaux liquides (16c(i,j)).

10. Procédé selon la revendication 9, **caractérisé en ce qu'**il comporte la commande de la matrice bidimensionnelle (16c) de cellules à cristaux liquides de telle sorte que la lumière polarisée issue de chacune des cellules à cristaux liquides (16c(i,j)) présente une polarisation elliptique ayant, pour chaque cellule à cristaux liquides (16c(i,j)), l'orientation (θc(*i*, *j*)) de l'axe principal de polarisation et/ou un déphasage (*φ*16*c*(*i*, *j*)) entre les deux composantes orthogonales du vecteur de champ électrique de la lumière issue de la cellule à cristaux liquides (16c(i,j)), et **en ce que**, pour l'acquisition de la série primaire (S1) d'images numériques partielles (IPk.1), l'un au moins parmi l'orientation (θc(*i*, *j*)) de l'axe principal de polarisation et/ou le déphasage (*φ*16*c*(*i*, *j*)) suit une variation triangulaire en fonction de la position de la cellule à cristaux liquides (16c(i,j)) selon la direction primaire (D1).

11. Procédé selon l'une quelconque des revendications précédentes, **caractérisé en ce qu'**il comporte une étape d'analyse d'anomalies de réfraction comprenant une étape de calcul informatique sur la base de l'image brute de réfraction.

12. Système (10) opto-informatique d'inspection en lumière traversante, à l'aide d'au moins une caméra numérique (18), d'un récipient (12) en verre en déplacement selon une trajectoire de déplacement (T), dans lequel :
- le système comporte un dispositif d'illumination (16) comprenant au moins une surface émettrice (16s), bidimensionnelle, agencée sur un côté de la trajectoire de déplacement et qui est constituée de zones émettrices élémentaires émettant chacune une lumière émise polarisée ayant une propriété de polarisation ainsi qu'au moins un analyseur linéaire (30(n,k), 30.1, 30.2);
- le système comporte au moins une caméra numérique ayant un capteur photoélectrique (22) bidimensionnel comprenant des éléments photoélectriques qui comprennent chacun une cellule photoélectrique, l'au moins une caméra numérique (18, 18.1, 18.2), étant située, par rapport à la trajectoire de déplacement (T), du côté opposé à celui du dispositif d'illumination (16), de manière à recueillir, par l'au moins une caméra numérique, une lumière émergente émanant du récipient (12) et ayant traversé au moins une épaisseur de paroi du récipient ;
- le système (10) est configuré pour acquérir, avec l'au moins une caméra numérique (18, 18.1, 18.2), au moins une série (Sm) comportant deux images numériques partielles (IP1.m, IP2.m, IPk.m), contenant chacune une image d'une même zone inspectée du récipient (12), chaque image numérique partielle (IPk.m) ayant N pixels partiels (Ppk.m(n)) dont chacun est l'image d'une zone élémentaire correspondante du récipient (12), et chaque image numérique partielle (IPk.m) étant acquise avec interposition, entre le récipient (12) et les cellules photoélectriques (28(n,k)) de l'au moins une caméra numérique (18, 18.1, 18.2), dudit analyseur linéaire (30(n,k), 30.1, 30.2) présentant un axe de polarisation (Ak) donné pour une image numérique partielle (Ipk.m), les axes de polarisation (Ak) des analyseurs linéaires (30(n,k), 30.1, 30.2) pour les aux moins deux images numériques partielles (IP1.m, IP2.m, IPk.m) étant distincts entre eux, les images numériques partielles (IP1.m, IP2.m, IPk.m) d'une même série (Sm) étant superposables de telle sorte que chaque zone élémentaire de la zone inspectée du récipient (12) est imagée par un pixel partiel (Ppk.m(n)) correspondant dans chacune des images numériques partielles (IP1.m, IP2.m, IPk.m) de la série (Sm) ; **caractérisé en ce que,** le dispositif d'illumination (16) comporte, dans le sens de propagation de la lumière, une source bidimensionnelle primaire (16a) de lumière diffuse, un polariseur linéaire amont (16b) ayant un axe de polarisation (A0), et une matrice bidimensionnelle (16c) de cellules à cristaux liquides.
le système (10) comportant des moyens de commande (100) de la matrice bidimensionnelle (16c) de cellules à cristaux liquides de telle sorte que la lumière polarisée issue de chacune des cellules à cristaux liquides (16c(i,j)) présente une polarisation elliptique ayant, pour chaque cellule à cristaux liquides (16c(i,j)), une orientation (θc(*i*, *j*)) de l'axe principal de polarisation et/ou un déphasage (*φ*16*c*(*i*, *j*)) entre les deux composantes orthogonales du vecteur de champ électrique de la lumière issue de la cellule à cristaux liquides (16c(i,j)), et **en ce que** le dispositif d'illumination (16) est commandé de telle sorte que l'un au moins parmi l'orientation (θc(*i*, *j*)) de l'axe principal de polarisation et/ou le déphasage (*φ*16*c*(*i*, *j*)) suit une variation en fonction de la position de la cellule à cristaux liquides (16c(i,j)) selon une direction primaire de la surface émettrice (16s), le dispositif d'illumination (16) étant commandé de telle sorte que l'un au moins parmi l'orientation (θc(*i*, *j*)) de l'axe principal de polarisation et/ou le déphasage (*φ*16*c*(*i*, *j*)) suit une variation triangulaire en fonction de la position de la cellule à cristaux liquides (16c(i,j)) selon une direction primaire de la surface émettrice (16s).

13. Système selon la revendication 12, **caractérisé en ce qu'**il comporte, dans le trajet de la lumière entre la matrice bidimensionnelle (16c) de cellules à cristaux liquides et les analyseurs linéaires (30(n,k), 30.1, 30.2) pour les aux moins deux images numériques partielles (IP1.m, IP2.m, IPk.m), une lame à retard quart d'onde (16d, 34) qui présente un axe rapide orienté parallèlement ou perpendiculairement à l'axe de polarisation (A0) du polariseur linéaire amont (16b).

14. Système selon la revendication 12 ou 13, **caractérisé en ce qu'**il comporte une unité informatique de calcul (110) programmée pour effectuer le calcul informatique d'au moins une image primaire brute de réfraction (IRm), à partir des images numériques partielles (Ipk.m), en calculant, pour chacune des zones élémentaires d'une zone inspectée du récipient (12), un pixel de réfraction (Prm(n)) dont la valeur est représentative de la réfraction subie par la lumière ayant traversé au moins une épaisseur de paroi du récipient (12) et émergeant de la zone élémentaire, à partir de la valeur des pixels partiels (Ppk.m(n)) correspondants qui sont l'image de la zone élémentaire dans les images numériques partielles (Ipk.m).

15. Système selon l'une quelconque des revendications 12 à 14, **caractérisé en ce que** la commande de la matrice bidimensionnelle (16c) de cellules à cristaux liquides est synchronisée avec l'acquisition, avec l'au moins une caméra (18, 18.1, 18.2), des au moins deux images numériques partielles (IP1.m, IP2.m, IPk.m) de manière à :
- acquérir une série primaire (S1) d'au moins deux images numériques partielles (IP1.1, IP2.1, IPk.1) lorsque la matrice bidimensionnelle (16c) de cellules à cristaux liquides est commandée de telle sorte que l'un au moins parmi l'orientation (θc(*i*, *j*)) de l'axe principal de polarisation et le déphasage (*φ*16*c*(*i, j*)) suit une variation triangulaire en fonction de la position de la cellule à cristaux liquides (16c(i,j)) selon la direction primaire (D1) ;
- acquérir une série secondaire (S2) d'au moins deux images numériques partielles (IP1.2, IP2.2, IPk.2) lorsque la matrice bidimensionnelle (16c) de cellules à cristaux liquides est commandée de telle sorte que l'un au moins parmi l'orientation (8c(i,j)) de l'axe principal de polarisation et le déphasage (*φ*16*c*(*i, j*)) suit une variation triangulaire en fonction de la position de la cellule à cristaux liquides (16c(i,j)) selon une direction secondaire différente de la direction primaire.

## Patentansprüche

1. Opto-informatisches Verfahren zur Durchlichtprüfung eines sich entlang einer Bewegungsbahn (T) bewegenden Glasbehälters (12), wobei:
- das Verfahren das Beleuchten des Behälters (12) durch eine Beleuchtungsvorrichtung (16) umfasst, die mindestens eine zweidimensionale emittierende Fläche (16s) umfasst, die auf einer Seite der Bewegungsbahn angeordnet ist und aus elementaren Emissionsbereichen gebildet ist, die jeweils emittiertes polarisiertes Licht mit einer interessierenden emittierten Polarisationseigenschaft emittieren, die sich gemäß einem periodischen Variationsgesetz in Abhängigkeit von der Position des elementaren Emissionsbereichs in der emittierenden Fläche ändert;
- das Verfahren das Beobachten des Behälters (12) durch mindestens eine Digitalkamera (18, 18.1, 18.2) umfasst, die einen zweidimensionalen photoelektrischen Sensor (22) mit photoelektrischen Elementen aufweist, die jeweils eine photoelektrische Zelle umfassen, die einem Pixel in einem von der Digitalkamera aufgenommenen Bild entspricht, wobei die mindestens eine Digitalkamera (18, 18.1, 18.2) in Bezug auf die Bewegungsbahn (T) auf der der Beleuchtungsvorrichtung (16) gegenüberliegenden Seite angeordnet ist, um durch die mindestens eine Digitalkamera austretendes Licht zu erfassen, das von dem Behälter (12) ausgeht und mindestens eine Wandstärke des Behälters durchquert hat;
- das Verfahren das Aufnehmen, mit der mindestens einen Kamera (18, 18.1, 18.2), von digitalen Teilbildern (Ipk.m) umfasst, die jeweils ein Bild desselben geprüften Bereichs des Behälters (12) enthalten, wobei jedes digitale Teilbild (Ipk.m) N Teilpixel (Ppk.m(n)) aufweist, von denen jedes das Bild eines entsprechenden elementaren Bereichs des Behälters (12) ist, und wobei jedes digitale Teilbild unter Zwischenschaltung eines linearen Analysators (30(n,k); 30.1, 30.2) zwischen dem Behälter und den photoelektrischen Zellen der mindestens einen Kamera aufgenommen wird, der für ein digitales Teilbild (Ipk.m) eine gegebene Polarisationsachse (Ak) aufweist;
- die Aufnahme das Aufnehmen mindestens einer Serie (S1, S2, Sm) umfasst, die mindestens ein erstes digitales Teilbild (Ip1.1, Ip1.2, Ip1.m) und ein zweites digitales Teilbild (Ip2.1, Ip2.2, Ip2.m) umfasst, für welche die Polarisationsachsen (Ak) der linearen Analysatoren voneinander verschieden sind, wobei die digitalen Teilbilder (Ipk.m) derselben Serie (Sm) derart überlagerbar sind, dass jeder elementare Bereich des geprüften Bereichs des Behälters (12) durch ein entsprechendes Teilpixel (Ppk.m(n)) in jedem der digitalen Teilbilder (IPk.m) der Serie (Sm) abgebildet wird;
- für eine Primärserie (S1) die digitalen Teilbilder (Ipk.1) der Primärserie (S1) jeweils im Hintergrund das Bild desselben primären Prüfabschnitts der emittierenden Fläche (16s) enthalten, wobei der primäre Prüfabschnitt durch den Behälter hindurch von der Digitalkamera (18, 18.1, 18.2) beobachtet wird, und wobei auf dem primären Prüfabschnitt der emittierenden Fläche (16s) das periodische Variationsgesetz der interessierenden emittierten Polarisationseigenschaft entlang einer Primärrichtung (D1) eine primäre periodische Variation aufweist und mehrere Primärperioden (T1) über die Ausdehnung des primären Prüfabschnitts entlang der Primärrichtung (D1) aufweist;
**dadurch gekennzeichnet, dass** über eine Primärperiode (T1) die interessierende emittierte Polarisationseigenschaft der von den elementaren Emissionsbereichen des primären Prüfabschnitts der emittierenden Fläche (16s) emittierten Lichter einer Dreiecksvariation in Abhängigkeit von der Position des elementaren Emissionsbereichs entlang der Primärrichtung (D1) folgt,
und dass das Verfahren die rechnergestützte Berechnung mindestens eines primären Rohbrechungsbildes (IR1) aus den digitalen Teilbildern der Primärserie umfasst, indem für jeden der elementaren Bereiche eines geprüften Bereichs des Behälters (12) ein primäres Rohbrechungspixel (Pr1(n)) berechnet wird, dessen Wert für die Brechung repräsentativ ist, die das Licht erfahren hat, das mindestens eine Wandstärke des Behälters (12) durchquert hat und aus dem elementaren Bereich austritt, und zwar aus dem Wert der entsprechenden Teilpixel (Ppk.1(n)), die das Bild des elementaren Bereichs in den digitalen Teilbildern (IPk.1) der Primärserie sind.

2. Verfahren nach Anspruch 1, **dadurch gekennzeichnet, dass** das Verfahren für denselben geprüften Bereich desselben Behälters (12) für die Primärserie (S1) das Aufnehmen eines dritten digitalen Teilbildes (IP3.1) und eines vierten digitalen Teilbildes (IP4.1) umfasst, für welche die Polarisationsachsen (A3, A4) der linearen Analysatoren (30(n,k) voneinander verschieden und von den Polarisationsachsen (A1, A2) der linearen Analysatoren (30(n,k)) für das erste digitale Teilbild (IP1.1) und das zweite digitale Teilbild (IP2.1) der Primärserie (S1) verschieden sind, vorzugsweise zueinander orthogonal und gegenüber den Polarisationsachsen (A1, A2) der linearen Analysatoren für das erste digitale Teilbild (IP1.1) und das zweite digitale Teilbild (IP2.1) der Primärserie (S1) um 45 Winkelgrad versetzt.

3. Verfahren nach einem der Ansprüche 1 oder 2, **dadurch gekennzeichnet, dass** die Aufnahme für denselben geprüften Bereich desselben Behälters (12) das Aufnehmen mindestens einer Sekundärserie (S2) digitaler Teilbilder (Ipk.2) umfasst;
- dass für die Sekundärserie (S2) die digitalen Teilbilder (Ipk.2) jeweils im Hintergrund das Bild desselben sekundären Prüfabschnitts der emittierenden Fläche (16s) enthalten, wobei der sekundäre Prüfabschnitt durch den Behälter (12) hindurch von der Digitalkamera (18, 18.1, 18.2) beobachtet wird, und wobei auf dem sekundären Prüfabschnitt der emittierenden Fläche das periodische Variationsgesetz der interessierenden emittierten Polarisationseigenschaft entlang einer von der Primärrichtung (D1) verschiedenen Sekundärrichtung (D2) der emittierenden Fläche eine sekundäre periodische Variation aufweist und mehrere Sekundärperioden (T2) über die Ausdehnung des sekundären Prüfabschnitts entlang der Sekundärrichtung aufweist;
- dass über eine Sekundärperiode (T2) die interessierende emittierte Polarisationseigenschaft der von den elementaren Emissionsbereichen des sekundären Prüfabschnitts der emittierenden Fläche emittierten Lichter einer Dreiecksvariation in Abhängigkeit von der Position des elementaren Emissionsbereichs entlang der Sekundärrichtung (D2) folgt,
und dass das Verfahren die rechnergestützte Berechnung mindestens eines sekundären Rohbrechungsbildes (IR2) aus den digitalen Teilbildern der Sekundärserie (S2) umfasst, indem für jeden der elementaren Bereiche eines geprüften Bereichs des Behälters (12) ein sekundäres Rohbrechungspixel (Pr2(n)) berechnet wird, dessen Wert für die Brechung repräsentativ ist, die das Licht erfahren hat, das mindestens eine Wandstärke des Behälters (12) durchquert hat und aus dem elementaren Bereich austritt, und zwar aus dem Wert der entsprechenden Teilpixel (Ppk.2(n)), die das Bild des elementaren Bereichs in den digitalen Teilbildern (IPk.2) der Sekundärserie (S2) sind.

4. Verfahren nach einem der vorhergehenden Ansprüche, **dadurch gekennzeichnet, dass** es die Berechnung, aus mindestens zwei digitalen Teilbildern (IPk.m), eines Intensitätsbildes It umfasst, in dem der Wert jedes Intensitätspixels (Pt(n)) als ein gemittelter Wert des Wertes von mindestens zwei Teilpixeln (Pp'1(n)) und (Pp'2(n)) berechnet wird, die demselben elementaren Bereich entsprechen, oder dass es das Aufnehmen mindestens eines ergänzenden Masterbildes (IM') umfasst, um ein Spannungsbild des geprüften Bereichs und/oder ein Intensitätsbild für den geprüften Bereich zu berechnen.

5. Verfahren nach einem der vorhergehenden Ansprüche, **dadurch gekennzeichnet, dass** die mindestens eine Digitalkamera eine polarimetrische Digitalkamera (18) ist, die einen zweidimensionalen photoelektrischen Sensor (22) mit photoelektrischen Elementen (26(n,1)) aufweist, die jeweils eine photoelektrische Zelle (28(n,k)) umfassen, vor der ein individueller linearer Analysator (30(n,k)) angeordnet ist, der der photoelektrischen Zelle (28(n,k)) dieses photoelektrischen Elements (26(n,k) zugeordnet ist, wobei der photoelektrische Sensor (22) eine Anzahl N verschiedener Gruppen (26(n)) von 4 aneinandergrenzenden photoelektrischen Elementen (26(n,k)) umfasst, deren individuelle lineare Analysatoren (30(n,k)) jeweils eine Polarisationsachse (Ak) aufweisen, wobei die vier Polarisationsachsen (Ak) einer gegebenen Gruppe (26(n)) von 4 photoelektrischen Elementen (26(n,k)) zwei Paare ((A1, A2), (A3, A4)) orthogonaler Polarisationsachsen bilden, wobei die beiden Paare um 45 Winkelgrad gegeneinander versetzt sind;
- und dass die Aufnahme der 4 digitalen Teilbilder (Ipk.m) derselben Serie (Sm) mit dem photoelektrischen Sensor (22) der polarimetrischen Kamera (18) durch Aufnehmen eines digitalen Masterbildes (IM.m) erfolgt, das ein Bild des Behälters (12) enthält, wobei das digitale Masterbild (IM.m) eine Anzahl 4*N von Masterpixeln aufweist, die zu N zusammengesetzten Pixeln gruppiert sind, die jeweils einer Gruppe aneinandergrenzender photoelektrischer Elemente entsprechen, wobei jedes zusammengesetzte Pixel 4 Masterpixel aufweist, die jeweils einem der Elemente (26(n,k)) der Gruppe (26(n)) aneinandergrenzender photoelektrischer Elemente entsprechen, die diesem zusammengesetzten Pixel entspricht, und wobei jedes digitale Masterbild (IM.m) die 4 verschiedenen digitalen Teilbilder (IPk.m) umfasst, die jeweils N Teilpixel (Ppk.m(n)) aufweisen, wobei die Teilpixel (Ppk.m(n)) jedes der digitalen Teilbilder (IPk.m) für ein gegebenes digitales Teilbild (IPk.m) den photoelektrischen Elementen (26(n,k)) des photoelektrischen Sensors (22) entsprechen, deren individuelle lineare Analysatoren (30(n,k)) für dieses digitale Teilbild (IPk.m) eine gemeinsame Polarisationsachse (Ak) aufweisen.

6. Verfahren nach einem der vorhergehenden Ansprüche, **dadurch gekennzeichnet, dass** die Dreiecksvariation derart ist, dass jede Primärperiode (T1) in nur zwei Teile (T1c, T1d), einen ansteigenden Teil (T1c) und einen abfallenden Teil, unterteilt ist, dass in dem ansteigenden Teil die interessierende emittierte Polarisationseigenschaft eine ansteigende lineare Funktion der Position des elementaren Emissionsbereichs entlang der Primärrichtung (D1) ist, wobei die interessierende emittierte Polarisationseigenschaft von einem primären unteren Wert (P1min) zu einem primären oberen Wert (P1max) ansteigt, und dass in dem abfallenden Teil (T1d) die interessierende emittierte Polarisationseigenschaft eine abfallende lineare Funktion der Position des elementaren Emissionsbereichs entlang der Primärrichtung (D1) ist, wobei die interessierende emittierte Polarisationseigenschaft von dem primären oberen Wert (P1max) zu dem primären unteren Wert (P1min) abfällt.

7. Verfahren nach einem der vorhergehenden Ansprüche, **dadurch gekennzeichnet, dass** der Prüfabschnitt der emittierenden Fläche (16s) aus elementaren Emissionsbereichen gebildet ist, die jeweils elliptisch polarisiertes emittiertes Licht mit einem Elliptizitätsverhältnis kleiner oder gleich 0,7 emittieren, und dass die interessierende emittierte Polarisationseigenschaft des von einem elementaren Emissionsbereich emittierten Lichts die Orientierung (θs(i,j)) der Hauptpolarisationsachse des von dem genannten elementaren Emissionsbereich emittierten Lichts ist.

8. Verfahren nach einem der Ansprüche 1 bis 6, **dadurch gekennzeichnet, dass** der primäre Prüfabschnitt der emittierenden Fläche (16s) aus elementaren Emissionsbereichen gebildet ist, die jeweils polarisiertes emittiertes Licht gemäß einer elliptischen Polarisation mit einer Phasenverschiebung (φ16s(i,j)) zwischen den beiden orthogonalen Komponenten des elektrischen Feldvektors des polarisierten emittierten Lichts emittieren, und dass die interessierende emittierte Polarisationseigenschaft der Phasenverschiebung (φ16s(i,j)) zwischen den beiden orthogonalen Komponenten des elektrischen Feldvektors des polarisierten emittierten Lichts entspricht.

9. Verfahren nach einem der vorhergehenden Ansprüche, **dadurch gekennzeichnet, dass** die Beleuchtungsvorrichtung (16) in Lichtausbreitungsrichtung eine primäre zweidimensionale Quelle (16a) diffusen Lichts, einen vorgeschalteten linearen Polarisator (16b) mit einer Polarisationsachse (A0) und eine zweidimensionale Matrix (16c) aus Flüssigkristallzellen (16c(i,j)) umfasst.

10. Verfahren nach Anspruch 9, **dadurch gekennzeichnet, dass** es das Steuern der zweidimensionalen Matrix (16c) aus Flüssigkristallzellen derart umfasst, dass das aus jeder der Flüssigkristallzellen (16c(i,j)) austretende polarisierte Licht eine elliptische Polarisation mit, für jede Flüssigkristallzelle (16c(i,j)), der Orientierung (θc(i,j)) der Hauptpolarisationsachse und/oder einer Phasenverschiebung (φ16c(i,j)) zwischen den beiden orthogonalen Komponenten des elektrischen Feldvektors des aus der Flüssigkristallzelle (16c(i,j)) austretenden Lichts aufweist, und dass für die Aufnahme der Primärserie (S1) digitaler Teilbilder (IPk.1) mindestens eine aus der Orientierung (θc(i,j)) der Hauptpolarisationsachse und/oder der Phasenverschiebung (φ16c(i,j)) einer Dreiecksvariation in Abhängigkeit von der Position der Flüssigkristallzelle (16c(i,j)) entlang der Primärrichtung (D1) folgt.

11. Verfahren nach einem der vorhergehenden Ansprüche, **dadurch gekennzeichnet, dass** es einen Schritt zum Analysieren von Brechungsanomalien umfasst, der einen rechnergestützten Berechnungsschritt auf der Grundlage des Rohbrechungsbildes umfasst.

12. Opto-informatisches System (10) zur Durchlichtprüfung eines sich entlang einer Bewegungsbahn (T) bewegenden Glasbehälters (12) unter Verwendung mindestens einer Digitalkamera (18), wobei:
- das System eine Beleuchtungsvorrichtung (16) umfasst, die mindestens eine zweidimensionale emittierende Fläche (16s) umfasst, die auf einer Seite der Bewegungsbahn angeordnet ist und aus elementaren Emissionsbereichen gebildet ist, die jeweils polarisiertes emittiertes Licht mit einer Polarisationseigenschaft emittieren, sowie mindestens einen linearen Analysator (30(n,k), 30.1, 30.2);
- das System mindestens eine Digitalkamera mit einem zweidimensionalen photoelektrischen Sensor (22) umfasst, der photoelektrische Elemente umfasst, die jeweils eine photoelektrische Zelle umfassen, wobei die mindestens eine Digitalkamera (18, 18.1, 18.2) in Bezug auf die Bewegungsbahn (T) auf der der Beleuchtungsvorrichtung (16) gegenüberliegenden Seite angeordnet ist, um durch die mindestens eine Digitalkamera austretendes Licht zu erfassen, das von dem Behälter (12) ausgeht und mindestens eine Wandstärke des Behälters durchquert hat;
- das System (10) dazu konfiguriert ist, mit der mindestens einen Digitalkamera (18, 18.1, 18.2) mindestens eine Serie (Sm) mit zwei digitalen Teilbildern (IP1.m, IP2.m, IPk.m) aufzunehmen, die jeweils ein Bild desselben geprüften Bereichs des Behälters (12) enthalten, wobei jedes digitale Teilbild (IPk.m) N Teilpixel (Ppk.m(n)) aufweist, von denen jedes das Bild eines entsprechenden elementaren Bereichs des Behälters (12) ist, und wobei jedes digitale Teilbild (IPk.m) unter Zwischenschaltung des genannten linearen Analysators (30(n,k), 30.1, 30.2) zwischen dem Behälter (12) und den photoelektrischen Zellen (28(n,k)) der mindestens einen Digitalkamera (18, 18.1, 18.2) aufgenommen wird, der für ein digitales Teilbild (Ipk.m) eine gegebene Polarisationsachse (Ak) aufweist, wobei die Polarisationsachsen (Ak) der linearen Analysatoren (30(n,k), 30.1, 30.2) für die mindestens zwei digitalen Teilbilder (IP1.m, IP2.m, IPk.m) voneinander verschieden sind, wobei die digitalen Teilbilder (IP1.m, IP2.m, IPk.m) derselben Serie (Sm) derart überlagerbar sind, dass jeder elementare Bereich des geprüften Bereichs des Behälters (12) durch ein entsprechendes Teilpixel (Ppk.m(n)) in jedem der digitalen Teilbilder (IP1.m, IP2.m, IPk.m) der Serie (Sm) abgebildet wird;
**dadurch gekennzeichnet, dass** die Beleuchtungsvorrichtung (16) in Lichtausbreitungsrichtung eine primäre zweidimensionale Quelle (16a) diffusen Lichts, einen vorgeschalteten linearen Polarisator (16b) mit einer Polarisationsachse (A0) und eine zweidimensionale Matrix (16c) aus Flüssigkristallzellen umfasst,
wobei das System (10) Steuermittel (100) für die zweidimensionale Matrix (16c) aus Flüssigkristallzellen umfasst, sodass das aus jeder der Flüssigkristallzellen (16c(i,j)) austretende polarisierte Licht eine elliptische Polarisation mit, für jede Flüssigkristallzelle (16c(i,j)), einer Orientierung (θc(i,j)) der Hauptpolarisationsachse und/oder einer Phasenverschiebung (φ16c(i,j)) zwischen den beiden orthogonalen Komponenten des elektrischen Feldvektors des aus der Flüssigkristallzelle (16c(i,j)) austretenden Lichts aufweist, und dass die Beleuchtungsvorrichtung (16) derart gesteuert wird, dass mindestens eine aus der Orientierung (θc(i,j)) der Hauptpolarisationsachse und/oder der Phasenverschiebung (φ16c(i,j)) einer Variation in Abhängigkeit von der Position der Flüssigkristallzelle (16c(i,j)) entlang einer Primärrichtung der emittierenden Fläche (16s) folgt,
wobei die Beleuchtungsvorrichtung (16) derart gesteuert wird, dass mindestens eine aus der Orientierung (θc(i,j)) der Hauptpolarisationsachse und/oder der Phasenverschiebung (φ16c(i,j)) einer Dreiecksvariation in Abhängigkeit von der Position der Flüssigkristallzelle (16c(i,j)) entlang einer Primärrichtung der emittierenden Fläche (16s) folgt.

13. System nach Anspruch 12, **dadurch gekennzeichnet, dass** es in dem Lichtweg zwischen der zweidimensionalen Matrix (16c) aus Flüssigkristallzellen und den linearen Analysatoren (30(n,k), 30.1, 30.2) für die mindestens zwei digitalen Teilbilder (IP1.m, IP2.m, IPk.m) eine Viertelwellen-Verzögerungsplatte (16d, 34) umfasst, die eine schnelle Achse aufweist, die parallel oder senkrecht zu der Polarisationsachse (A0) des vorgeschalteten linearen Polarisators (16b) orientiert ist.

14. System nach Anspruch 12 oder 13, **dadurch gekennzeichnet, dass** es eine rechnergestützte Berechnungseinheit (110) umfasst, die dazu programmiert ist, die rechnergestützte Berechnung mindestens eines primären Rohbrechungsbildes (IRm) aus den digitalen Teilbildern (Ipk.m) durchzuführen, indem für jeden der elementaren Bereiche eines geprüften Bereichs des Behälters (12) ein Brechungspixel (Prm(n)) berechnet wird, dessen Wert für die Brechung repräsentativ ist, die das Licht erfahren hat, das mindestens eine Wandstärke des Behälters (12) durchquert hat und aus dem elementaren Bereich austritt, und zwar aus dem Wert der entsprechenden Teilpixel (Ppk.m(n)), die das Bild des elementaren Bereichs in den digitalen Teilbildern (Ipk.m) sind.

15. System nach einem der Ansprüche 12 bis 14, **dadurch gekennzeichnet, dass** die Steuerung der zweidimensionalen Matrix (16c) aus Flüssigkristallzellen mit der Aufnahme der mindestens zwei digitalen Teilbilder (IP1.m, IP2.m, IPk.m) durch die mindestens eine Kamera (18, 18.1, 18.2) synchronisiert ist, um:
- eine Primärserie (S1) aus mindestens zwei digitalen Teilbildern (IP1.1, IP2.1, IPk.1) aufzunehmen, wenn die zweidimensionale Matrix (16c) aus Flüssigkristallzellen derart gesteuert wird, dass mindestens eine aus der Orientierung (θc(i,j)) der Hauptpolarisationsachse und der Phasenverschiebung (φ16c(i,j)) einer Dreiecksvariation in Abhängigkeit von der Position der Flüssigkristallzelle (16c(i,j)) entlang der Primärrichtung (D1) folgt;
- eine Sekundärserie (S2) aus mindestens zwei digitalen Teilbildern (IP1.2, IP2.2, IPk.2) aufzunehmen, wenn die zweidimensionale Matrix (16c) aus Flüssigkristallzellen derart gesteuert wird, dass mindestens eine aus der Orientierung (θc(i,j)) der Hauptpolarisationsachse und der Phasenverschiebung (φ16c(i,j)) einer Dreiecksvariation in Abhängigkeit von der Position der Flüssigkristallzelle (16c(i,j)) entlang einer von der Primärrichtung verschiedenen Sekundärrichtung folgt.

## Claims

1. An optical computing method for inspecting in transmitted light a glass container (12) moving along a movement trajectory (T), wherein:
- the method comprises illuminating the container (12) by an illumination device (16) comprising at least one two-dimensional emitting surface (16s), which is arranged on one side of the movement trajectory and which is made up of elementary emitting areas each emitting polarized emitted light having an emitted polarization property of interest which varies according to a law of periodic variation as a function of the position of the elementary emitting area in the emitting surface;
- the method comprises observing the container (12), by at least one digital camera (18, 18.1, 18.2) having a two-dimensional photoelectric sensor (22) comprising photoelectric elements which each comprise a photoelectric cell corresponding to a pixel in an image acquired by the digital camera, the at least one digital camera (18, 18.1, 18.2) being situated, with respect to the movement trajectory (T), on the side opposite that of the illumination device (16), so as to collect, by the at least one digital camera, emergent light emanating from the container (12) and having passed through at least one wall thickness of the container;
- the method comprises acquiring, with the at least one camera (18, 18.1, 18.2), partial digital images (Ipk.m), each containing an image of the same inspected area of the container (12), each partial digital image (Ipk.m) having N partial pixels (Ppk.m(n)), each of which is the image of a corresponding elementary area of the container (12), and each partial digital image being acquired with the interposition, between the container and the photoelectric cells of the at least one camera, of a linear analyzer (30(n,k); 30.1, 30.2) having a given polarization axis (Ak) for a partial digital image (Ipk.m);
- the acquisition comprises acquiring at least one series (S1, S2, Sm) comprising at least a first partial digital image (Ip1.1, Ip1.2, Ip1.m) and a second partial digital image (Ip2.1, Ip2.2, Ip2.m), for which the polarization axes (Ak) of the linear analyzers are distinct from one another, the partial digital images (Ipk.m) of the same series (Sm) being superimposable such that each elementary area of the inspected area of the container (12) is imaged by a corresponding partial pixel (Ppk.m(n)) in each of the partial digital images (IPk.m) of the series (Sm);
- for a primary series (S1), the partial digital images (Ipk.1) of the primary series (S1) each contain, in the background, the image of the same primary inspection portion of the emitting surface (16s), the primary inspection portion being observed through the container by the digital camera (18, 18.1, 18.2), and, on the primary inspection portion of the emitting surface (16s), the law of periodic variation of the emitted polarization property of interest having, along a primary direction (D1), a primary periodic variation, and having several primary periods (T1) over the extent of the primary inspection portion along the primary direction (D1);
**characterized in that**, over a primary period (T1), the emitted polarization property of interest of the light emitted by the elementary emitting areas of the primary inspection portion of the emitting surface (16s) follows a triangular variation as a function of the position of the elementary emitting area along the primary direction (D1),
and **in that** the method comprises computer calculation of at least one primary raw refraction image (IR1), from the partial digital images of the primary series, by calculating, for each of the elementary areas of an inspected area of the container (12), a primary raw refraction pixel (Pr1(n)) whose value is representative of the refraction undergone by the light having passed through at least one wall thickness of the container (12) and emerging from the elementary area, from the value of the corresponding partial pixels (Ppk.1(n)) which are the image of the elementary area in the partial digital images (IPk.1) of the primary series.

2. The method according to claim 1, **characterized in that**, for the same inspected area of the same container (12), the method comprises acquiring, for the primary series (S1), a third partial digital image (IP3.1) and a fourth partial digital image (IP4.1), for which the polarization axes (A3, A4) of the linear analyzers (30(n,k) are distinct from one another and distinct from the polarization axes (A1, A2) of the linear analyzers (30(n,k)) for the first partial digital image (IP1.1) and the second partial digital image (IP2.1) of the primary series (S1), preferably orthogonal to one another and offset by 45 angle degrees from the polarization axes (A1, A2) of the linear analyzers for the first partial digital image (IP1.1) and the second partial digital image (IP2.1) of the primary series (S1).

3. The method according to either one of claims 1 or 2, **characterized in that**, for the same inspected area of the same container (12), the acquisition comprises acquiring at least one secondary series (S2) of partial digital images (Ipk.2);
- **in that**, for the secondary series (S2), the partial digital images (Ipk.2) each contain, in the background, the image of the same secondary inspection portion of the emitting surface (16s), the secondary inspection portion being observed through the container (12) by the digital camera (18, 18.1, 18.2), and, on the secondary inspection portion of the emitting surface, the law of periodic variation of the emitted polarization property of interest having, along a secondary direction (D2) of the emitting surface, different from the primary direction (D1), a secondary periodic variation, and having several secondary periods (T2) over the extent of the secondary inspection portion along the secondary direction;
- **in that**, over a secondary period (T2), the emitted polarization property of interest of the light emitted by the elementary emitting areas of the secondary inspection portion of the emitting surface follows a triangular variation as a function of the position of the elementary emitting area along the secondary direction (D2),
and **in that** the method comprises computer calculation of at least one secondary raw refraction image (IR2), from the partial digital images of the secondary series (S2), by calculating, for each of the elementary areas of an inspected area of the container (12), a secondary raw refraction pixel (Pr2(n)) whose value is representative of the refraction undergone by the light having passed through at least one wall thickness of the container (12) and emerging from the elementary area, from the value of the corresponding partial pixels (Ppk.2(n)) which are the image of the elementary area in the partial digital images (IPk.2) of the secondary series (S2).

4. The method according to any one of the preceding claims, **characterized in that** it comprises calculating, from at least two partial digital images (IPk.m), an intensity image It in which the value of each intensity pixel (Pt(n)) is calculated as an averaged value of the value of at least two partial pixels (Pp'1(n)) and (Pp'2(n)) corresponding to the same elementary area, or **in that** it comprises acquiring at least one complementary master image (IM') so as to calculate a stress image of the inspected area and/or an intensity image for the inspected area.

5. The method according to any one of the preceding claims, **characterized in that** the at least one digital camera is a polarimetric digital camera (18), having a two-dimensional photoelectric sensor (22) comprising photoelectric elements (26(n,1)) which each comprise a photoelectric cell (28(n,k)) in front of which is arranged an individual linear analyzer (30(n,k)) associated with the photoelectric cell (28(n,k)) of this photoelectric element (26(n,k), the photoelectric sensor (22) comprising a number N of distinct groups (26(n)) of 4 contiguous photoelectric elements (26(n,k)) whose individual linear analyzers (30(n,k)) each have a polarization axis (Ak), the four polarization axes (Ak) of a given group (26(n)) of 4 photoelectric elements (26(n,k)) forming two pairs ((A1, A2), (A3, A4)) of orthogonal polarization axes, the two pairs being offset from one another by 45 angle degrees;
- and **in that** the acquisition of the 4 partial digital images (Ipk.m) of the same series (Sm) is performed, with the photoelectric sensor (22) of the polarimetric camera (18), by acquiring a master digital image (IM.m) containing an image of the container (12), the master digital image (IM.m) having a number 4*N of master pixels grouped into N composite pixels each corresponding to a group of contiguous photoelectric elements, each composite pixel having 4 master pixels each corresponding to one of the elements (26(n,k)) of the group (26(n)) of contiguous photoelectric elements corresponding to this composite pixel, and each master digital image (IM.m) comprising the 4 distinct partial digital images (IPk.m), each having N partial pixels (Ppk.m(n)), the partial pixels (Ppk.m(n)) of each of the partial digital images (IPk.m) corresponding, for a given partial digital image (IPk.m), to the photoelectric elements (26(n,k)) of the photoelectric sensor (22) whose individual linear analyzers (30(n,k)) have a common polarization axis (Ak) for this partial digital image (IPk.m).

6. The method according to any one of the preceding claims, **characterized in that** the triangular variation is such that each primary period (T1) is divided into only two parts (T1c, T1d), an increasing part (T1c) and a decreasing part, **in that**, in the increasing part, the emitted polarization property of interest is an increasing linear function of the position of the elementary emitting area along the primary direction (D1), the emitted polarization property of interest increasing from a primary lower value (P1min) to a primary upper value (P1max), and **in that**, in the decreasing part (T1d), the emitted polarization property of interest is a decreasing linear function of the position of the elementary emitting area along the primary direction (D1), the emitted polarization property of interest decreasing from the primary upper value (P1max) to the primary lower value (P1min).

7. The method according to any one of the preceding claims, **characterized in that** the inspection portion of the emitting surface (16s) is made up of elementary emitting areas each emitting elliptically polarized emitted light having an ellipticity ratio less than or equal to 0.7, and **in that** the emitted polarization property of interest of the light emitted by an elementary emitting area is the orientation (θs(i,j)) of the main polarization axis of the light emitted by said elementary emitting area.

8. The method according to any one of claims 1 to 6, **characterized in that** the primary inspection portion of the emitting surface (16s) is made up of elementary emitting areas each emitting polarized emitted light according to an elliptical polarization having a phase shift (φ16s(i,j)) between the two orthogonal components of the electric field vector of the polarized emitted light, and **in that** the emitted polarization property of interest corresponds to the phase shift (φ16s(i,j)) between the two orthogonal components of the electric field vector of the polarized emitted light.

9. The method according to any one of the preceding claims, **characterized in that** the illumination device (16) comprises, in the direction of propagation of the light, a primary two-dimensional source (16a) of diffuse light, an upstream linear polarizer (16b) having a polarization axis (A0), and a two-dimensional matrix (16c) of liquid crystal cells (16c(i,j)).

10. The method according to claim 9, **characterized in that** it comprises controlling the two-dimensional matrix (16c) of liquid crystal cells such that the polarized light derived from each of the liquid crystal cells (16c(i,j)) has an elliptical polarization having, for each liquid crystal cell (16c(i,j)), the orientation (θc(i,j)) of the main polarization axis and/or a phase shift (φ16c(i,j)) between the two orthogonal components of the electric field vector of the light derived from the liquid crystal cell (16c(i,j)), and **in that**, for acquiring the primary series (S1) of partial digital images (IPk.1), at least one of the orientation (θc(i,j)) of the main polarization axis and/or the phase shift (φ16c(i,j)) follows a triangular variation as a function of the position of the liquid crystal cell (16c(i,j)) along the primary direction (D1).

11. The method according to any one of the preceding claims, **characterized in that** it comprises a step of analyzing refraction anomalies comprising a computer calculation step based on the raw refraction image.

12. An optical computing system (10) for inspecting in transmitted light, using at least one digital camera (18), a glass container (12) moving along a movement trajectory (T), wherein:
- the system comprises an illumination device (16) comprising at least one two-dimensional emitting surface (16s), arranged on one side of the movement trajectory and which is made up of elementary emitting areas each emitting polarized emitted light having a polarization property, as well as at least one linear analyzer (30(n,k), 30.1, 30.2);
- the system comprises at least one digital camera having a two-dimensional photoelectric sensor (22) comprising photoelectric elements which each comprise a photoelectric cell, the at least one digital camera (18, 18.1, 18.2) being situated, with respect to the movement trajectory (T), on the side opposite that of the illumination device (16), so as to collect, by the at least one digital camera, emergent light emanating from the container (12) and having passed through at least one wall thickness of the container;
- the system (10) is configured to acquire, with the at least one digital camera (18, 18.1, 18.2), at least one series (Sm) comprising two partial digital images (IP1.m, IP2.m, IPk.m), each containing an image of the same inspected area of the container (12), each partial digital image (IPk.m) having N partial pixels (Ppk.m(n)), each of which is the image of a corresponding elementary area of the container (12), and each partial digital image (IPk.m) being acquired with the interposition, between the container (12) and the photoelectric cells (28(n,k)) of the at least one digital camera (18, 18.1, 18.2), of said linear analyzer (30(n,k), 30.1, 30.2) having a given polarization axis (Ak) for a partial digital image (Ipk.m), the polarization axes (Ak) of the linear analyzers (30(n,k), 30.1, 30.2) for the at least two partial digital images (IP1.m, IP2.m, IPk.m) being distinct from one another, the partial digital images (IP1.m, IP2.m, IPk.m) of the same series (Sm) being superimposable such that each elementary area of the inspected area of the container (12) is imaged by a corresponding partial pixel (Ppk.m(n)) in each of the partial digital images (IP1.m, IP2.m, IPk.m) of the series (Sm);
**characterized in that** the illumination device (16) comprises, in the direction of propagation of the light, a primary two-dimensional source (16a) of diffuse light, an upstream linear polarizer (16b) having a polarization axis (A0), and a two-dimensional matrix (16c) of liquid crystal cells,
the system (10) comprising control means (100) for the two-dimensional matrix (16c) of liquid crystal cells such that the polarized light derived from each of the liquid crystal cells (16c(i,j)) has an elliptical polarization having, for each liquid crystal cell (16c(i,j)), an orientation (θc(i,j)) of the main polarization axis and/or a phase shift (φ16c(i,j)) between the two orthogonal components of the electric field vector of the light derived from the liquid crystal cell (16c(i,j)), and **in that** the illumination device (16) is controlled such that at least one of the orientation (θc(i,j)) of the main polarization axis and/or the phase shift (φ16c(i,j)) follows a variation as a function of the position of the liquid crystal cell (16c(i,j)) along a primary direction of the emitting surface (16s),
the illumination device (16) being controlled such that at least one of the orientation (θc(i,j)) of the main polarization axis and/or the phase shift (φ16c(i,j)) follows a triangular variation as a function of the position of the liquid crystal cell (16c(i,j)) along a primary direction of the emitting surface (16s).

13. The system according to claim 12, **characterized in that** it comprises, in the light path between the two-dimensional matrix (16c) of liquid crystal cells and the linear analyzers (30(n,k), 30.1, 30.2) for the at least two partial digital images (IP1.m, IP2.m, IPk.m), a quarter-wave retarder plate (16d, 34) having a fast axis oriented parallel or perpendicular to the polarization axis (A0) of the upstream linear polarizer (16b).

14. The system according to claim 12 or 13, **characterized in that** it comprises a computer calculation unit (110) programmed to perform the computer calculation of at least one primary raw refraction image (IRm), from the partial digital images (Ipk.m), by calculating, for each of the elementary areas of an inspected area of the container (12), a refraction pixel (Prm(n)) whose value is representative of the refraction undergone by the light having passed through at least one wall thickness of the container (12) and emerging from the elementary area, from the value of the corresponding partial pixels (Ppk.m(n)) which are the image of the elementary area in the partial digital images (Ipk.m).

15. The system according to any one of claims 12 to 14, **characterized in that** control of the two-dimensional matrix (16c) of liquid crystal cells is synchronized with the acquisition, with the at least one camera (18, 18.1, 18.2), of the at least two partial digital images (IP1.m, IP2.m, IPk.m) so as to:
- acquire a primary series (S1) of at least two partial digital images (IP1.1, IP2.1, IPk.1) when the two-dimensional matrix (16c) of liquid crystal cells is controlled such that at least one of the orientation (θc(i,j)) of the main polarization axis and the phase shift (φ16c(i,j)) follows a triangular variation as a function of the position of the liquid crystal cell (16c(i,j)) along the primary direction (D1);
- acquire a secondary series (S2) of at least two partial digital images (IP1.2, IP2.2, IPk.2) when the two-dimensional matrix (16c) of liquid crystal cells is controlled such that at least one of the orientation (θc(i,j)) of the main polarization axis and the phase shift (φ16c(i,j)) follows a triangular variation as a function of the position of the liquid crystal cell (16c(i,j)) along a secondary direction different from the primary direction.
